# EUROPEAN PATENT APPLICATION

(11) **EP 1 206 086 A2**
(43) Date of publication of application: **15.05.2002**
(21) Application number: 01309575.7
(22) Date of filing: 13.11.2001
(51) Int. Cl.: H04L 12/56

(54) **Bluetooth baseband controller**

(30) Priority: 13.11.2000 US 709995; 26.10.2001 US 52877
(71) Applicant: KC Technology, Inc., Milpitas 95035, California (US)
(72) Inventor: Min-Shin, Ma, Plano 75025. Texas (US)
(74) Representative: Martin, Philip John

(57) **Abstract**

**[00195]** In a Bluetooth controller, the microprocessor is relieved of the duty to perform operations at time critical points in relation to Bluetooth transmission and receive time slots by using a hardware circuit that stores data from a number of Bluetooth SCO/ACL data packets received into a storage or forms such packets by retrieving data from the storage in a timely manner according to predetermined time slots without assistance from the microprocessor at time critical points. The hardware circuit also handles time critical information in relation to FHS data packets so that the microprocessor is also relieved of the duty to perform such time critical tasks. The number of buffers used to support data communication can be reduced by checking the expiration times of the buffer when the buffer is assigned to support a Bluetooth data connection. Then, when the connection experiences difficulties, the buffer will be released upon expiration timeout. To allow both a hardware circuit and a microprocessor to access the same buffer without conflict, an arbitration device or process may be employed. To allow more efficient use of bandwidth, connections with other Bluetooth devices that are used to transfer efficient data are given higher priority than other connections that do not.

## Description

This invention relates in general to a Bluetooth baseband controller and, in particular, to an improved system for converting between ACL/SCO data packets and Bluetooth data packets and for retrieving and storing data into buffers in connection with the conversion.

Bluetooth technology is an open specification for wireless communication and networking between personal computers (PCs), mobile telephones, personal digital assistants ("PDA") and other devices. The Bluetooth system is described in detail in "Specification of the Bluetooth System," version 1.1, February 22, 2001 (hereinafter the Bluetooth Specification), which is located at www.bluetooth.org and is herein incorporated by reference in its entirety. The Bluetooth Specification is proposed by the Bluetooth SIG, a computer/telecommunications consortium originally consisting of Ericsson, IBM, Intel, Nokia and Toshiba (but now joined by nearly 1,200 other companies, including MicroSoft, Lucent Technologies, Motorola, 3Com and others). This consortium is responsible for defining and promoting the Bluetooth Specification.

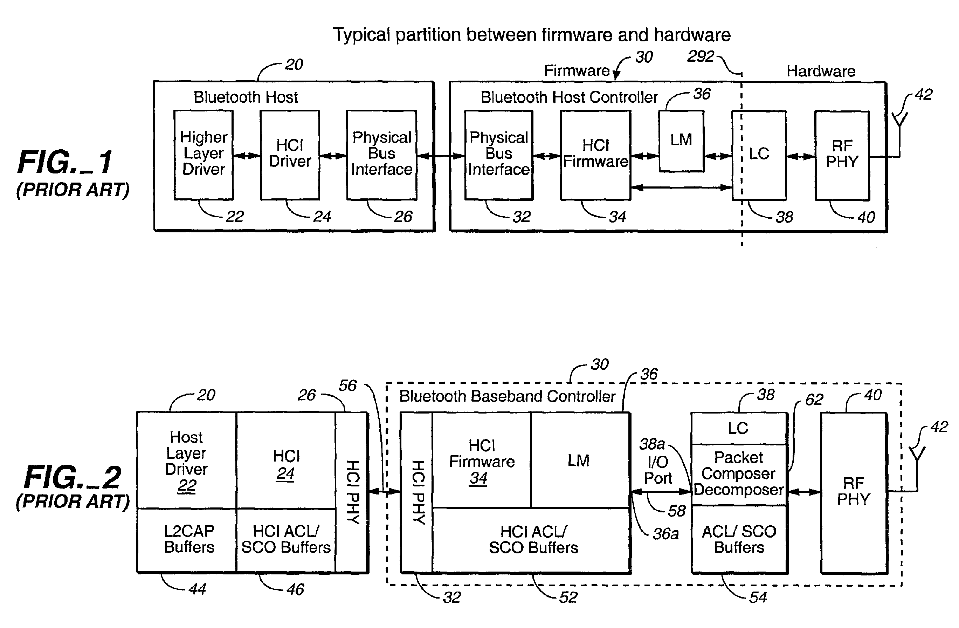

According to the Bluetooth Specification, a Bluetooth system includes a Bluetooth Host, a Bluetooth Host Controller and a physical interface between the host and the host controller. The Host Controller includes a host controller interface ("HCI"), a physical bus interface for connection to the Bluetooth Host and HCI firmware portion, a Link Manager ("LM"), a Link Controller ("LC") and a radio frequency ("RF") physical interface. This is illustrated in Fig. 1. In the context of a PC or a PDA, for example, the Bluetooth Host 20 is controlled by the central microprocessor (not shown) and includes a higher layer driver 22, a HCI driver 24 and a physical bus interface 26. So as not to burden the central processor, a separate Bluetooth Host controller 30 is used in order to convert between the HCI level ACL/SCO data packets (hereinbelow referred to as HCI data packets) and the Bluetooth data packets. As shown in Fig. 1, the Bluetooth Host Controller 30 includes a physical bus interface 32 adapted to be connected to the corresponding physical bus interface 26 of the Bluetooth Host 20. Controller 30 also includes an HCI firmware 34, link manager ("LM") 36, a link controller ("LC") 38 and an RF physical interface (RF PHY) 40.

As specified by the Bluetooth Specification, each Bluetooth device may communicate with a number of other Bluetooth devices, where one Bluetooth device is the master and one or more other Bluetooth devices may be slaves. The link manager 36 in the Bluetooth Host Controller 30 determines what type of connection is to be established with another Bluetooth device through signals transmitted through an antenna 42 and the RF physical interface 40. In other words, the LM determines whether the Bluetooth device including host 20 and controller 30 is to be a master or a slave, and is to communicate with a Bluetooth device which is to be a slave or a master. The LM 36 further determines when the connection is to be established or terminated through physical interface 40 and antenna 42. The link controller 38 controls and maintains the flow of data packets and acknowledgments between controller 30 and another Bluetooth device (not shown). LC 38 provides the handshake required for each type of connections determined by LM 36.

In additional to the above-described functions, LM 36 and LC 38 also perform the function of converting between two different types of data packet formats: HCI data packets and Bluetooth data packets. The mechanism by which such conversion is implemented as specified by Bluetooth Specification is described below in reference to Fig. 2. While Fig. 1 shows the functional blocks within the Bluetooth Host 20 and the Bluetooth Host Controller 30, Fig. 2 illustrates in addition, the buffers that are used in a conventional system defined by the Bluetooth Specification.

As shown in Fig. 2, the data packet conversion occurs between the HCI ACL/SCO buffers 52 and the ACL/SCO buffers 54. The HCI data packets are transmitted through a physical link 56 by the host 20 to the host controller 30 and stored in buffers 52. LM 36 then divides the HCI data packet into segments or portions and sends such portions sequentially through an input/output port 36a of the link manager to input/output port 38a of the link controller through link 58 where each of such portions is sequentially stored in buffers 54 by overwriting the portion that is stored prior to such portion. The packet composer/decomposer 62 then converts each of such portions to the Bluetooth data packet format and transmits each of the converted Bluetooth data packets via the RF physical interface 40 and antenna 42 to another Bluetooth device (not shown).

The HCI data packets include two types of data packets: ACL data packets that contain non-voice type of data and SCO data packets containing only voice data. Some packets may contain both voice and non-voice data; in such event, the voice and non-voice data are separated and processed separately in the same way as those described below. The SCO data packets are transmitted synchronously in order for the voice data to be conveyed in real time so that the rendered voice communication is understood by the listener. If SCO data packets are not successfully transmitted, lost data packets are simply discarded or ignored and no attempt is made to re-transmit them. This is due to the fact that once voice data is lost, there is no reason to re-transmit it since re-transmission would only confuse the listener. Instead the listener would notice immediately that some voice data is lost and ask the speaker to repeat the words spoken, or disconnect voice communication altogether if the problem persists.

The size of the HCI ACL (Asynchronous Connection-Less) data packet is determined according to the size of buffer 52. The size of buffer 52 depends on the size of the HCI/SCO (Synchronous Connection-Oriented) buffers 46 in the host 20, the HCI physical interfaces 26, 32 and link 56. The number of data bytes in each HCI ACL data packet is usually greater than the maximum number of data bytes in the Bluetooth data packet. Therefore, buffer 52 would need to hold an HCI ACL data packet until it is completely transmitted to the link controller 38 or is flushed.

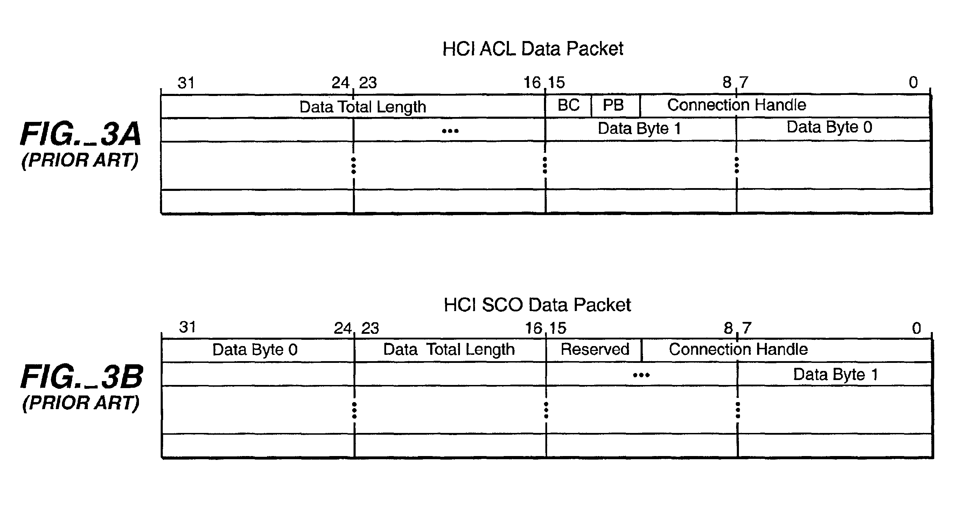

The HCI ACL data packets are transferred asynchronously by the link manager 36 to buffer 54 through link 58. The key consideration in non-voice data transmission is to ensure that all data packets are completely transmitted. For this reason, all data packets that have not been successfully transmitted are re-transmitted until the transmission is successful. The mechanism for transferring ACL data packets will be described in reference to Figs. 3A, 3B, 4 and 5.

Figs. 3A and 3B illustrate, respectively, the HCI ACL data packets and HCI SCO data packets. In reference to Fig. 3A, a HCI ACL data packet ("ACL data packets"), according to the Bluetooth Specification, includes four fields: a connection handle indicating which connection through which the packet is sent, a PB field indicating whether this packet is the first packet of a Higher Layer Message, a BC field specifying whether the packet will be sent to multiple slaves and a length field indicating the number of bytes in the packet. The HCI SCO data packet of Fig. 3B includes a connection handle and/or field and a single-byte data length field.

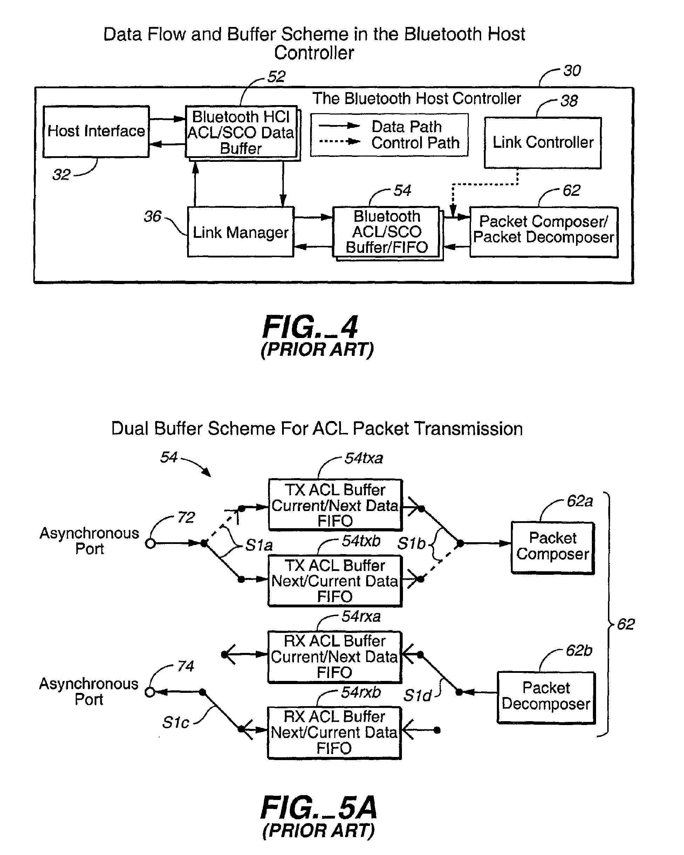

Since the number of data bytes in the HCI SCO data packet stored in buffer 52 is not more than the maximum number of permissible data bytes in the Bluetooth data packets, there is no need for the link manager to segment the SCO data packet when stored in buffer 52 or for the buffer 52 to hold the same SCO data packet during multiple transmissions to the link controller 38. In contrast, since the number of data bytes in each ACL data packet can be and is usually more than the maximum number of data bytes permissible in the Bluetooth data packet, the link manager will need to segment the ACL data packet when stored in buffer 52 and buffer 52 will need to hold each ACL data packet until it is completely transmitted or flushed. This is illustrated in reference to Fig. 4.

Fig. 4 is a block diagram showing in more detail the different functional blocks of the Bluetooth Host Controller 30. As shown in Fig. 4, the Link Manager 36 loads the data or payload of the HCI data packet from buffer 52 into buffer 54. The Link Controller 38 then controls the transfer of data from buffer 54 to the packet composer/decomposer 62 for conversion between the HCI data packet format and the Bluetooth data packet format.

The composer/decomposer 62 reads data from the current FIFO (pointed to by switch S1b of Fig. 5A described below) and builds a payload which is appended to the channel access code and the header, thereby forming a complete Bluetooth packet which is subsequently transmitted. The header of the packet indicates whether the payload contains data and/or voice so that the corresponding Bluetooth device may direct the traffic appropriately as indicated by the information in the header. When controller 30 receives a Bluetooth packet, the header of the received packet indicates whether the payload contains data and/or voice. The packet decomposer 62b (see Fig. 5A) will then direct the traffic to the appropriate FIFOs according to similar information in the header of the received packet.

Fig. 5A is a block diagram illustrating in more detail buffer 54 and the packet composer/decomposer 62 of Fig. 4. In reference to Fig. 5A, Link Controller 38 controls switches S1a, S1b, S1c and S1d. For packet transmission, the FIFO that is connected to composer 62a by switch S1b is the current FIFO, and the FIFO that is connected to port 72 by switch S1a is the next FIFO. Similarly, for packet reception, the FIFO that is connected to decomposer 62b by switch S1d is the current FIFO, and the FIFO that is connected to port 74 by switch Sic is the next FIFO. As shown in Fig. 5A, four FIFOs 54txa, 54txb, 54rxa, 54rxb are employed for storing data to be transferred between host controller 30 and a corresponding Bluetooth device (not shown) through the RF physical interface 40 and antenna 42. FIFOs 54txa, 54txb are employed to store data that is to be transmitted from the Bluetooth Host Controller 30 to such corresponding external Bluetooth device. Buffers 54rxa, 54rxb are used to store data that is received from such corresponding Bluetooth external device and stored in controller 30.

The Link Manager 36 loads data from the ACL data packets through an asynchronous port 72 to either one of the two buffers 54txa, 54txb, depending upon which buffer is connected to the asynchronous port 72 through switch S1a. The portion of the ACL data packet that is loaded in a current timer slot would then be transmitted in the next time slot after a complete and successful transmission of data from the other FIFO in the current slot. Ports 72, 74 are some of the input/output ports 38a of Fig 2.

In other words, as illustrated in Fig. 5A, where the positions of switches S1a, S1b are those shown by the solid lines, FIFO 54txa stores the portion of the data that was loaded during a previous time slot and that is to be transmitted to the corresponding Bluetooth device during the current time slot. As illustrated by the solid line position of switch S1b in Fig. 5A, FIFO 54txa is connected to composer 62a. The data stored in buffer 54txa is, therefore, converted into the Bluetooth data format by packet composer 62a and then sent to RF physical interface 40 and transmitted to the corresponding Bluetooth device through antenna 42 as shown in Fig. 1. Prior to the beginning of the same transmit time slot for transmitting the data in FIFO 54txa, Link Controller 38 causes port 72 to be connected to FIFO 54txb through switch S1a in the manner shown in the solid line position of switch S1a in Fig. 5A so that the Link Manager 36 may load into FIFO 54txb the portion of the data from the HCI ACL packet that follows the portion that was loaded and stored in FIFO 54txa.

Assuming that the portion of the ACL data packet stored in FIFO 54txa is successfully transmitted (as indicated by receipt of acknowledgment from the corresponding Bluetooth device), during the next receive time slot, Link Manager 38 causes the switches S1a, S1b to switch, thereby connecting port 72 to FIFO 54txa and FIFO 54txb to packet composer 62a, in the manner shown in dotted lines in Fig. 5A. Then the next portion of the HCI ACL packet stored in FIFO 54txb may then be converted to the Bluetooth data format by composer 62a and transmitted during the next transmit time slot.

According to the Bluetooth Specification, the Link Controller 38 will not cause switches S1a, S1b to switch until it is confirmed that the portion of the data in FIFO 54txa has been successfully transmitted to the corresponding Bluetooth device. Switches S1a, S1b will not be caused to switch until an acknowledgment has been received by controller 30 from the corresponding Bluetooth device that the data stored in FIFO 54txa has been successfully received by the corresponding Bluetooth device. Upon receipt of the acknowledgment, Link Controller 38 will cause the switches S1a, S1b to switch to the dotted line positions, so that during the next transmit time slot, the data in FIFO 54txb will be transmitted and the Link Manager 36 will load a subsequent fresh portion of data from the HCI ACL data packet to FIFO 54txa through switch S1a in the dotted line position.

FIFOs 54rxa, 54rxb are used to store data that is received from the corresponding Bluetooth device through interface 40 and antenna 42. The Bluetooth data packet received from such Bluetooth corresponding device is decomposed by packet decomposer 62b and the data extracted stored in FIFO 54rxa, thereby overwriting the contents in such FIFO, assuming that the contents of FIFO 54rxa have been unloaded and transferred by the Link Manager 36 to buffer 52 in a prior receive time slot. At the same time, the FIFO 54rxb is connected to an asynchronous port 74 through switch S1c so that the contents of the FIFO can be unloaded by Link Manager 36 and transferred to buffer 52. Assuming that the contents of FIFO 54rxb have been successfully unloaded and transferred by the Link Manager to buffer 52 through port 74 during the present receive time slot, the Link Controller 38 will cause switches S1c, S1d to switch positions so that FIFO 54rxa will now be connected to port 74 and packet decomposer 62b will now be connected to FIFO 54rxb. Thus, during such next receive time slot, the contents of FIFO 54rxa will now be unloaded by the Link Manager and a fresh Bluetooth data packet will be decomposed by decomposer 62b and stored into FIFO 54rxb, thereby overwriting the contents of the FIFO that has previously been successfully unloaded by the Link Manager 36.

A Bluetooth Channel comprises a defined hopping sequence where, for a period of time, the Bluetooth device operates at a particular radio frequency in the 2.4 GHz ISM band. A device operating in a particular hopping sequence will transmit or receive on a particular frequency at a particular moment in time. Bluetooth requires the device to remain on each frequency in its hopping sequence for a period of 625 microseconds. Each 625-microsecond time period is assigned a number ranging from 0 to 2²⁷-1 and is considered a "slot" in Bluetooth parlance.

Bluetooth devices communicate with each other using a time division duplex (TDD) scheme whereby one device transmits on even slots and the other on odd slots. Transmission of a data packet is guaranteed to start at the beginning of a slot, with different types of packets extending over one or more slots. If a particular type of packet is a multi-slot packet, the device remains at the same frequency until the entire packet has been transmitted. In the next slot, after the transmission of a complete multi-slot packet, the device returns to the frequency required for its particular hopping sequence.

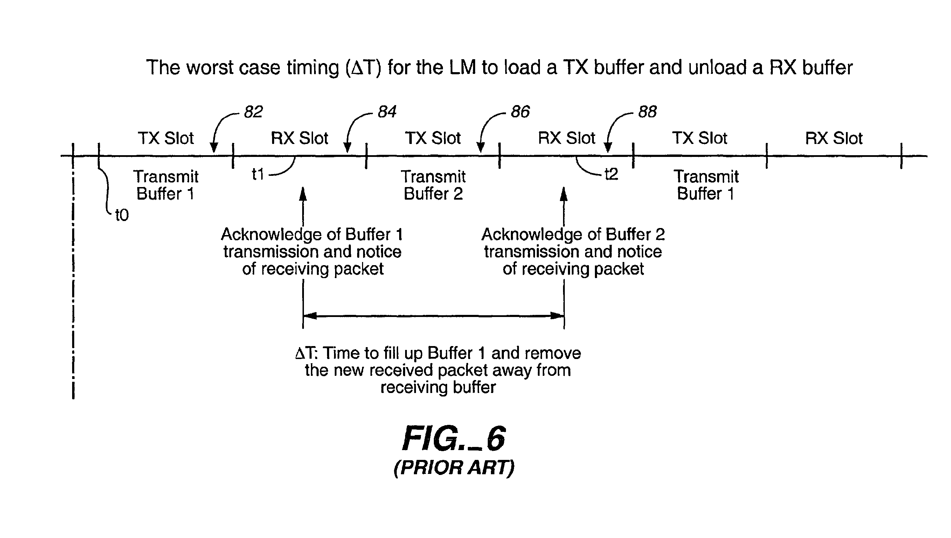

Fig. 6 illustrates an example of time slots according to the TDD scheme. Thus, during the transmit time slot 82, controller 30 may be transmitting a Bluetooth packet to a corresponding Bluetooth device and in the receive time slot 84 that follows slot 82, controller 30 may be receiving a Bluetooth data packet from such corresponding Bluetooth device. The same can be said for subsequent transmit (TX) slots and receive (RX) slots.

As noted above, one of the key concerns in Bluetooth in the ACL data packet transmission is to insure that all ACL data packets are successfully transmitted, even though this may cause delays when a transmission is unsuccessful. For this reason, as is specified by the Bluetooth Specification, each Bluetooth device that receives Bluetooth data packets would send back an acknowledgment to the sending Bluetooth device to inform the sending device that a data packet has been successfully or unsuccessfully received. If a data packet is successfully received, an acknowledgment ("ACK") is sent. When the receipt of a data packet is unsuccessful, a negative acknowledgment ("NAK") is sent to the sending device.

When the ACK signal is received by the sending Bluetooth device, the sending device is then free to overwrite the FIFO in which is stored the data that was transmitted successfully. When the transmission of a Bluetooth data packet is unsuccessful, the receiving Bluetooth device then sends a negative acknowledgment ("NAK") to the sending device. Upon receipt of the NAK signal, the sending Bluetooth device will not overwrite the FIFO in which the data is stored. The sending Bluetooth device will then attempt to re-send the same Bluetooth data packet during the next TX slot and this process is repeated if necessary until a positive acknowledgment ACK is received from the receiving Bluetooth device.

After the Controller 30 receives a Bluetooth data packet from the corresponding Bluetooth device, the received data packet is decomposed by the decomposer 62b to extract the data therein and Link Controller 38 then stores the extracted data into one of the two FIFOs 54rxa or 54rxb. Assuming the positions of switches S1c and S1d shown in Fig. 5A, the data extracted is stored in FIFO 54rxa. After a Bluetooth data packet has been successfully received, the Link Controller then causes a positive acknowledgment ACK signal to be tagged onto the next Bluetooth data packet that is to be transmitted to the corresponding Bluetooth device.

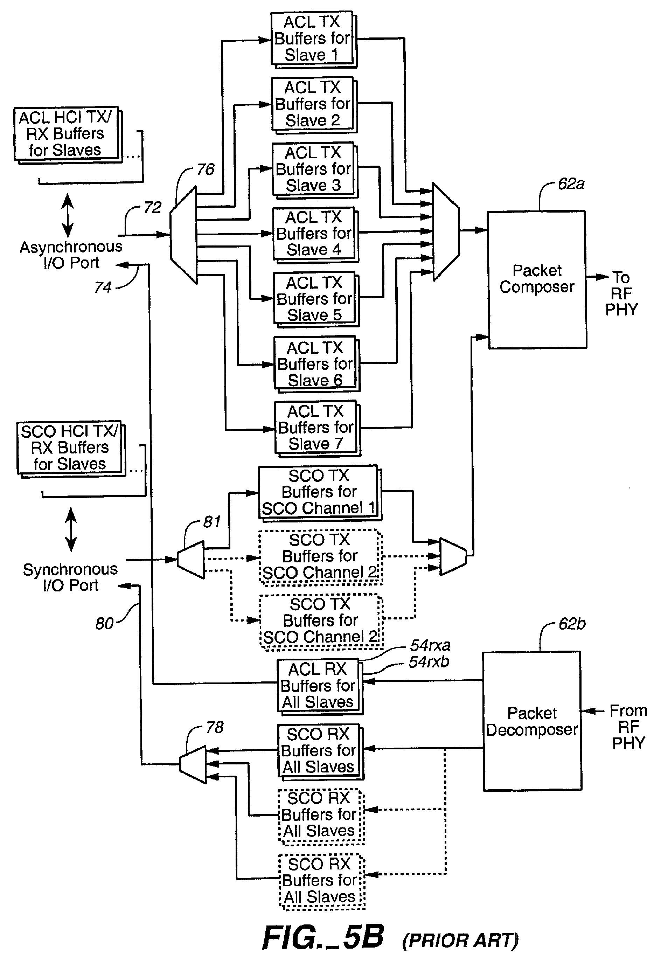

Fig. 5B is a block diagram of a full set of buffers 54 for storing data in connection with communication with a number of slave Bluetooth devices to illustrate a conventional Bluetooth design according to the Bluetooth Specification. As shown in Fig. 5B, a pair of current and next FIFOs are employed for storing data that is to be transmitted to a particular slave Bluetooth device. According to Bluetooth Specification, a Bluetooth device acting as a master may transmit data to up to seven slave Bluetooth devices. For this reason, seven transmit buffers, each comprising a current and a next FIFO, are included in buffer 54. These buffers are accessed by the link manager through asynchronous port 72 connected to the seven buffers through a multiplexer 76. Each Bluetooth device acting as the master may communicate with only a single slave Bluetooth device at a time, and multiplexer 76 will select one of the seven buffers for use in storing data that is to be transmitted to its corresponding Bluetooth slave device. A single pair of FIFOs 54rxa, 54rxb are used for storing data packets received from any one of the slave Bluetooth devices. In addition, three pairs of SCO TX buffers are employed for transmitting voice packets to three corresponding slave devices, and three pairs of SCO RX buffers are employed for receiving voice packets from three corresponding slave devices, although again only one of the three TX or RX pairs will be active at any one time. The three pairs of SCO RX buffers are connected to synchronous I/O ports 80 through a multiplexer 78. A selected one of the three pairs of SCO TX buffers is connected to synchronous I/O ports 80 through a switch 81.

Fig. 6 is a timing diagram illustrating the timing of the transmission and receipt of data packets with reference to one of the TX pairs of FIFOs 54txa, 54txb and one of the RX pairs of FIFOs 54rxa, 54rxb as shown in Fig. 5A between controller 30 and a particular corresponding Bluetooth device. At time t0, with positions of switches S1a, S1b as shown in Fig. 5A, the data stored in FIFO 54txa is to be converted and transmitted to the selected corresponding Bluetooth device. Thus, the TX slot 82 is allocated for the conversion and transmission of such data. Then the next time slot, RX slot 84, is dedicated to the receipt of a Bluetooth data packet from such corresponding Bluetooth device. Thus, if the transmission during the TX slot 82 of the data from FIFO 54txa is successful, an acknowledgment (ACK) that such data has been successfully received will be piggybacked onto the Bluetooth data packet sent by the selected corresponding Bluetooth device. Upon receipt of such acknowledgment at time t1 by controller 30, the Link Controller 38 then causes the switches S1a, S1b to switch positions in order to load FIFO 54txa.

During the next transmit time slot 86, the data from FIFO 54txb will be converted and transmitted to the corresponding Bluetooth device. The next receive time slot 88 is dedicated to receipt of the next Bluetooth packet from the corresponding Bluetooth device. If the prior transmission during transmit time slot 86 is successful, the corresponding Bluetooth device will piggy back an ACK signal that is received at time t2. In order for there to be no wasted time slots, this means that between times t1 and t2, or ΔT, the link manager would have to unload the next receive FIFO so that the received data can be stored therein during the next receive time slot, and fill up the next transmit FIFO so that data would be available for transmission during the next transmit time slot. If the link manager is unable to accomplish these tasks within the time period between t1 and t2, one or more transmit and/or receive time slots may be wasted, resulting in lost bandwidth.

According to the Bluetooth specification, a data packet can occupy up to five slots. The following table gives the data load in terms of the different number of slots:

| Category | Packet Type | Data length | Headers (packet & payload) | Total # of bytes transferred in ΔT (TX & RX) | Period (ΔT) | Maximum byte moving time |
|---|---|---|---|---|---|---|
| 1-slot packet | AUX1 | 29 bytes | 3 bytes | 64 bytes | 1.25 ms | 19.5 µs/byte |
| 3-slot packet | DH3 | 183 bytes | 4 bytes | 374 bytes | 3.75ms | 10 µs/byte |
| 5-slot packet | DH5 | 339 bytes | 4 bytes | 686 bytes | 6.25ms | 9 µs/byte |

As will be seen from the table above, for a single-slot packet transmission, the above transmit and receive operations for transferring 64 bytes of data would both have to occur within 1.25 milliseconds. This means that for single-slot packet transmission, the link manager would have to unload the next receive FIFO so that the received data can be stored therein during the next receive time slot, and fill up the next transmit FIFO during 1.25 milliseconds, in order for there to be full bandwidth utilization. It is found in actual practice, the above-described process is cumbersome and a high percentage of the TX and RX slots are not fully utilized either because of lost data packets or because the Link Manager has not been able to load the transmit buffers and unload the receive buffers on time. The situation is worse for multi-slot packets, since there would be a higher percentage of data compared to overhead to be transmitted, which may result in an even higher loss of bandwidth.

A microprocessor may be used to implement the Link Manager. In such event, the total amount of time delay due to interrupt latency and for moving data should be less than the time period ΔT in order to utilize fully the time slots and, therefore, the bandwidth allocated to Bluetooth data transmission. The interrupt latency is highly dependent upon how many time-bounded tasks and maximum service time of a time-bound task. With the complexity of Bluetooth protocol, it is very difficult for the task of the Link Manager to be completed within the period ΔT using an 8-bit microprocessor.

In conventional Bluetooth devices, the Link Manager 36 and part of the Link Controller 38 are required to load the transmit buffers and unload the receive buffers and to control the switching of the buffers. In such event, the Link Manager and Link Controller may not have adequate speed to carry out the above-described operations within the two TX and RX slots within 1.25 microseconds for single-slot packet transmission. One solution is to use a high power microprocessor, such as a 32-bit microprocessor, for the host controller 30 to speed up the operations. This would, however, be expensive. It is, therefore, desirable to provide an improved configuration for the Bluetooth host controller and/or host in which the above-described difficulties are alleviated.

### SUMMARY OF THE INVENTION

This invention is based on the recognition that the processor will be relieved of the duty to perform operations at time critical points in relation to predetermined time slots of the Bluetooth protocol if a hardware circuit is used without the assistance of the processor at such time critical points to store data from the plurality of Bluetooth SCO or ACL data packets received into a storage, or to retrieve data from a storage, according to the predetermined time slots in a timely manner. A critical point in time in relation to the time slots is illustrated, for example, by Δt in Fig. 6. Preferably, the hardware circuit is also able to extract data from a plurality of Bluetooth SCO/ACL data packets according to the predetermined receive time slots in a timely manner also without the assistance of the processor at time critical points, or form the data packets for transmission according to the predetermined transmission time slots in a timely manner also without the assistance of the processor at time critical points.

As noted above, in conventional Bluetooth devices, the processor is required to perform time critical operations related to time intervals whose lengths are of the order of 1.25 milliseconds. By relieving the processor of the duty to perform such time critical tasks, the performance requirement for the processor is much reduced. In one embodiment, an 8-bit processor operating at a frequency not higher than 8 MHz suffices.

In the preferred embodiment, the hardware circuit may directly access data storage that has the capacity to store the payloads of multiple Bluetooth SCO or ACL data packets, and pointers are utilized in the storage format to identify the locations for data to be retrieved for forming Bluetooth data packets. The use of the pointers also facilitates the process of re-transmission if a prior transmission fails.

Another time critical task required of the microprocessor in conventional Bluetooth design is the handling of FHS packets. Since FHS packets contain time critical clock information, the formation and receipt of such packets were handled by the microprocessor in conventional designs. According to another aspect of the invention, this task is now handled by a hardware circuit without requiring the processor to perform time critical tasks in relation to the time critical information.

To support the up to seven master-slave data transfers, buffers are utilized. Another aspect of the invention is based on the recognition that the number of buffers utilized overall can be reduced by using a buffer pool to support the transfer of data packets with multiple Bluetooth devices. However, if one of the connections connecting the baseband controller with multiple Bluetooth devices encounters problems, a buffer assigned to service such connection may be occupied indefinitely, resulting in loss of storage capacity for supporting the connections. Thus, if an expiration time is utilized for each buffer that has been assigned to support the connection, and the buffer is released when the expiration time for such buffer has expired, the above-described problem can be avoided.

When both the hardware circuit and the microprocessor can access a number of buffers for storing data to support the transfer of Bluetooth ACL data packets, there may be conflicts where both the hardware circuits and the processor attempt to access the same buffer. By employing an arbitration device that enables the processor or the hardware circuit, but not both simultaneously, to have sole control of one or more of the buffers, such conflicts can be reduced or avoided.

While the above aspects may be used for both data transmission and receipt in the same device or process, this is not required, so that they may be used for devices that only transmits data, or those that only receives data. Some of the above features may also be useful for non-Bluetooth applications.

In embodiments where the host and the host controller are combined so that it is possible to convert directly between L2CAP packets and Bluetooth packets without first converting either one into the intermediate HCI level ACL/SCO packets, the invention is applicable as well. In such event, the conversion may be accomplished without requiring the microprocessor to perform time critical tasks in relation to transmission or receive time slots. Where the L2CAP packets are stored in the host memory, only the host memory is involved in the process.

### BRIEF DESCRIPTION OF THE DRAWINGS

Fig. 1 is a block diagram of a convention Bluetooth device according to the Bluetooth Specification.

Fig. 2 is a block diagram illustrating in more detail the construction of the Bluetooth host and Bluetooth host controller of Fig. 1.

Fig. 3A is a schematic diagram of the packet format of an HCI ACL data packet according to the Bluetooth Specification.

Fig. 3B is a schematic diagram of the packet format of an HCI SCO data packet according to the Bluetooth Specification.

Fig. 4 is a block diagram illustrating in more detail the Bluetooth host controller of Fig. 2.

Fig. 5A is a block diagram illustrating in more detail the transmit and receive FIFOs in buffer 54 of Fig. 4.

Fig. 5B is a block diagram of a full set of buffers 54 for storing data in connection with communication with a number of slave Bluetooth devices to illustrate a conventional Bluetooth design.

Fig. 6 is a timing diagram illustrating the operation of the Bluetooth baseband controller of Figs. 2 and 4 in conjunction with the FIFOs in Fig. 5A.

Fig. 7 is a block diagram of a portion of a Bluetooth baseband controller containing an HCI ACL/SCO data buffer, a packet generator and a link controller to illustrate a first embodiment of the invention.

Fig. 8 is a schematic view of the buffer of Fig. 9 and two pointers to illustrate a first embodiment of the invention.

Fig. 9A is a schematic view of a buffer format for transmission of ACL data packets to illustrate a first embodiment of the invention.

Fig. 9B is a schematic view of the buffer format for ACL data packets that are received to illustrate a first embodiment of the invention.

Fig. 10 is a block diagram of a Bluetooth device to illustrate a first embodiment of the invention.

Figs. 11 and 12 are flow charts illustrating a process for control in transmitting and receiving a data packet using the first embodiment of the invention of Fig. 10.

Fig. 13 is a block diagram illustrating the partition between firmware and hardware characteristics of some of the embodiments of this invention.

Fig. 14A is a dataflow diagram illustrating the dataflow for transmitting a data packet using the first embodiment of the invention in Fig. 10.

Fig. 14B is a dataflow diagram illustrating the dataflow when the data packet is received by the device of Fig. 10.

Fig. 15A is a block diagram of a Bluetooth device illustrating an alternative embodiment of the invention.

Fig. 15B is a block diagram illustrating in more detail the device of Fig. 15A to illustrate one implementation of the embodiment of Fig. 15A.

Fig. 15C is a dataflow diagram illustrating a dataflow when the data packet is transmitted using the embodiment of Figs. 15A, 16A.

Fig. 15D is a dataflow diagram illustrating the dataflow when the data packet is received by the Bluetooth device of Figs. 15A, 16A.

Fig. 16A is a block diagram of a Bluetooth device illustrating yet another alternative embodiment of the invention.

Fig. 16B is a block diagram illustrating in more detail and an implementation the embodiment of Fig. 16A.

Fig. 17A is a block diagram of a Bluetooth device illustrating yet another alternative embodiment of the invention.

Fig. 17B is a block diagram illustrating in more detail and an implementation the embodiment of Fig. 17A.

Fig. 17C is a data flow diagram illustrating the dataflow when a data packet is transmitted using the device of Fig. 17A.

Fig. 17D is a data flow diagram illustrating the dataflow when a data packet is received by the device of Fig. 17A. Insert 2 from later email.

Fig. 18 is a block diagram illustrating the different components of the Bluetooth baseband controller of Fig. 10 to illustrate an embodiment of the invention.

Fig. 19 is a block diagram showing in more detail the Bluetooth module of Fig. 18.

Figs. 20 and 21 are respectively schematic views of outgoing and incoming FHS packet storage formats to illustrate an embodiment of the invention.

Fig. 22 is a schematic view of a data byte sending and receiving sequence for FHS packets to illustrate an embodiment of the invention.

Fig. 23 is a schematic circuit diagram of a multiplexer useful for sending an FHS packet to illustrate an embodiment of the invention.

Fig. 24A is a diagram of a state machine controlling the multiplexer in sending an FHS packet to illustrate an embodiment of the invention.

Fig. 24B is a table listing the states of the select signals for controlling the multiplexer of Fig. 23 corresponding to the various states in the state machine of Fig. 24A.

Fig. 25 is a schematic view of a sending and receiving sequence for a DM1 packet defined in the Bluetooth Specification useful for illustrating the invention.

Fig. 26 is a block diagram of the packet composer, decomposer, packet segment and assembly 204, Bluetooth packet controller and selector, scheduler, native clock and two clock offset registers useful for illustrating an embodiment of the invention.

Fig. 27 is a block diagram of a circuit in the packet decomposer of Fig. 26 to illustrate in more detail the operation of the decomposer.

Fig. 28 is a state machine diagram illustrating the operation of the packet decomposer of Figs. 26 and 27.

Fig. 29 is a block diagram of a circuit in the packet assembly and segment module of Fig. 26 to illustrate in more detail its operation.

Fig. 30 is a schematic circuit diagram of a multiplexer in the packet composer of Fig. 26.

Fig. 31 A is a schematic view of a state machine diagram controlling the operation of the multiplexer of Fig. 30 to illustrate the operation of the packet composer of Fig. 26.

Fig. 31B is a table listing the states of the select signals for controlling the multiplexer of Fig. 30 corresponding to the various states of the state machine in Fig. 31A.

Fig. 32 is a schematic view of two entries, one for data packet transmission ("OUT") and one for data packet receiving ("IN") in the event table of Fig. 19 to illustrate an embodiment of the invention.

Fig. 33 is a flowchart illustrating the operation of the controller and selector of Fig. 19 using the event entry of Fig. 32 to support the transmission of ACL packets.

Fig. 34A is a schematic view of an L2CAP packet format useful for illustrating the invention.

Fig. 34B is a schematic view of a revised L2CAP packet format adapted so that aspects of the invention may be used for the transfer of L2CAP packets.

Fig. 35A is a schematic view of a state diagram to illustrate a dual pointer control scheme for data transmission and receipt that permits hardware and software to control the event entries of Fig. 32 without conflict and to handle the buffers pointed to by the entries.

Fig. 35B is a schematic view illustrating the definition of each of the states in Fig. 35A in relation to the event entries in Fig. 32.

Figs. 36A-36K are schematic views of the host and host controller and the states of various registers therein as an example of the dual pointer buffer control scheme of Figs. 35A, 35B when packets are transmitted by the Bluetooth baseband controller to another device to illustrate an embodiment of the invention.

Figs. 37A-37L are schematic views of the host and host controller and the states of various registers therein as an example of the dual pointer buffer control scheme of Figs. 35A, 35B when packets are transmitted by the Bluetooth baseband controller to another device to illustrate an embodiment of the invention.

Fig. 38A is a schematic circuit diagram of a circuit in the controller and selector of Fig. 19 to illustrate the hardware portion of the dual pointer buffer control scheme of Figs. 35A, 35B.

Fig. 38B is a timing diagram to illustrate the operation of the circuit in Fig. 38A.

Figs. 39-41 are flowcharts illustrating the operation of firmware for controlling the event entries of Fig. 32 and the buffers pointed to by the entries to illustrate dual pointer buffer control scheme of Figs. 35A, 35B.

Fig. 42 is a flowchart illustrating a process carried out by the packet controller and selector in receiving Bluetooth ACL data packets to illustrate dual pointer buffer control scheme of Figs. 35A, 35B.

Fig. 43 is a circuit block diagram illustrating an expiration timeout scheme whereby ACL receive buffers may be released upon expiration timeout.

Fig. 44 is a flowchart illustrating the operation of the scheme of Fig. 43.

Fig. 45 is a circuit block diagram of a scheduler to illustrate another embodiment of the invention.

Fig. 46 is a flowchart illustrating the operation of the circuit of Fig. 45.

For simplicity in description, identical components are identified by the same numerals in this application.

### DETAILED DESCRIPTION OF THE PREFERRED EMBODIMENTS

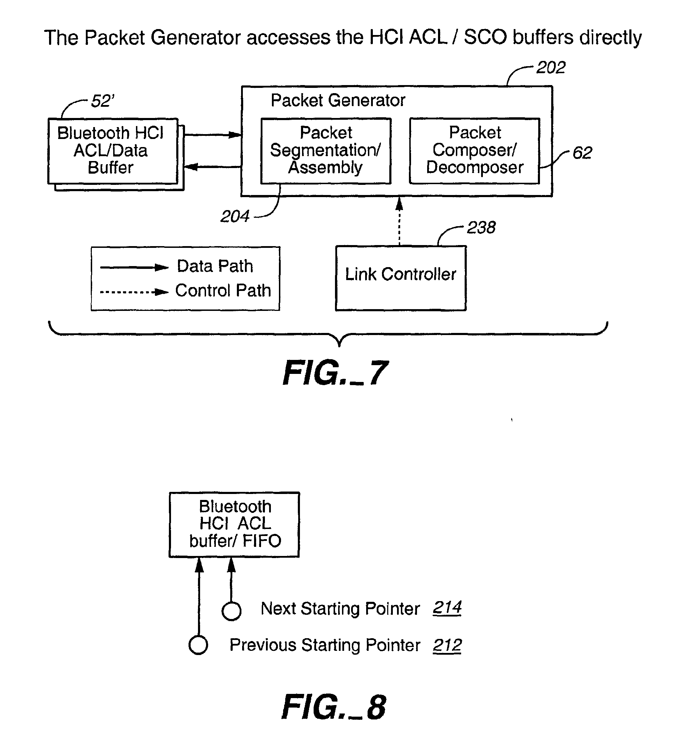

Fig. 7 is a block diagram illustrating how the buffer 52 in the Bluetooth baseband controller may be accessed directly by a packet generator to illustrate an embodiment of the invention. As shown in Fig. 7, instead of having to go through the input/output ports 36a, 38a and link 58 as shown in Fig. 2, the packet generator 202 is permitted to access buffer 52, and buffer 54 is eliminated altogether. There is no need for the link manager 236 to load or unload buffer 54. In this manner, one of the important causes of a bottleneck in the conventional Bluetooth device has been removed. Since the packet generator is permitted to access buffer 52 directly, the performance of the Bluetooth baseband controller is much improved and the probability of lost bandwidth is much reduced.

As shown in Fig. 7, the packet generator 202 includes the packetcomposer/decomposer 62 and a packet segmentation/assembly block 204. The composer/decomposer 62 reads data from the FIFO 52 and builds a payload which is appended to the channel access code and the header, thereby forming a complete Bluetooth packet which is subsequently transmitted. The header of the packet indicates whether the payload contains data and/or voice so that the corresponding Bluetooth device may direct the traffic appropriately as indicated by the information in the header. When the Bluetooth baseband controller containing generator 202 receives a Bluetooth packet, the header of the received packet indicates whether the payload contains data and/or voice. The packet decomposer 62b will then direct the traffic to the appropriate FIFOs according to similar information in the header of the received packet.

As shown in Fig. 7, the packet generator includes a packet composer/decomposer 62 described above, and in addition, a packet segmentation/assembly block 204. Since the HCI ACL data packets typically contain more bytes of data than can fit into a Bluetooth data packet, each HCI ACL data packet will need to be segmented into different segments where one or more segments of the data will become the payload of a Bluetooth data packet. The packet composer 62a will build the payload and attach the channel access code and header to become a full Bluetooth data packet ready for transmission. When a Bluetooth data packet is received, the packet decomposer 62b would extract the data from the packet and the packet segmentation/assembly block 204 will store the data extracted at the proper location in buffer 52. The link controller 238 performs functions such as piggy backing the ACK or NAK signals onto the Bluetooth packet generated by generator 202 when the packet is to be transmitted to a corresponding Bluetooth device. The link controller 238 also keeps track of whether an ACK or NAK signal has been received from the corresponding Bluetooth device, where the signal is piggy backed onto a received Bluetooth data packet. It controls a seqn bit (described in more detail below) in the Bluetooth data packet that is to be transmitted to the corresponding Bluetooth device to indicate whether the packet has been transmitted before in a prior transmission.

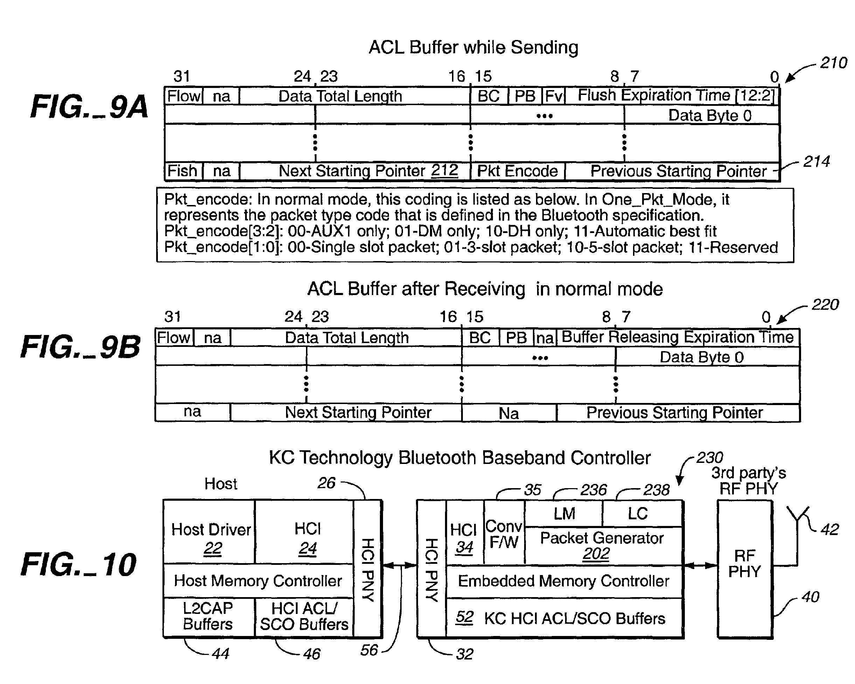

Since the segmentation of the HCI ACL data packet and the storing of the extracted data from a received Bluetooth data packet is now performed by assembly block 204 in this embodiment of the invention instead of the link manager, assembly block 204 will need to use a mechanism for keeping track of this process. This is performed in the first embodiment by means of pointers illustrated in Fig. 8. The firmware 35 shown in Fig. 10 will convert a data packet from the HCI ACL buffer format such as that shown in Fig. 3A to a new buffer format illustrated in Fig. 9A. Since the conversion by the firmware 35 can be performed ahead of time, this is not a time critical task, and can be done by the firmware without undue burden to the microprocessor. As is shown in Fig. 9A, the new format 210 includes two addresses: a previous starting pointer 212 and the next starting pointer 214. The previous starting pointer 212 points to the data byte that was sent in the immediately preceding transmit slot and for which a valid acknowledgment ACK has not yet been received. The next starting pointer 214 points to the first data byte that is to be sent during the very next transmit slot. Instead of using pointers, other means for identifying the locations in the buffer or memory of where the data for the previous transmission is stored can be used and is within the scope of the invention. For example, instead of using two pointers, one may use one pointer and information on the length of the data of the previous transmission, or the lengths of the data in the buffer or memory before and after the transmission.

The other fields in the buffer format 210 of Fig. 9A are as follows: "BC" which specifies if the packet will be sent to multiple slaves; "PB" which indicates if the packet is the first packet of the Higher Layer Message; "Flow" which is for the HCI level flow control which is included in the payload header; and "na" which is reserved.

Thus, when the link manager first loads buffer 52, it will convert the data format to format 210 of Fig. 9A with pointer 214 pointing to the first data byte (e.g. by pointing to address of data byte 0) that will be sent. The segmentation/assembly block 204 will then fetch an appropriate segment of the HCI ACL data packet using the initial values of these pointers 212, 214 and reset them for the transmission of the next segment. The segment fetched by block 204 is converted into a complete Bluetooth data packet by composer 62a with any acknowledgments piggy backed by controller 238.

The buffer format for buffer 52 for storing data packets received from the corresponding Bluetooth device is illustrated in Fig. 9B. As shown in Fig. 9B, the buffer format 220 includes a data total length field. This information is utilized by block 204 to store the data received at the proper location in buffer 52, in order to assemble a complete HCI ACL data packet from data in a number of Bluetooth packets received over time. By making use of the data total length field of buffer format 220, there is no need for setting or changing pointers when Bluetooth data packets are received from the corresponding device. Thus, after receiving a packet and after the data in the packet has been stored in buffer 52, the generator 202 alters the value in the length field of the buffer, so that data from the next packet will be stored at the right location in the buffer in order to assemble a larger HCI ACL packet. Alternatively, instead of using the data total length field, pointers 212, 214 may be used instead, and are also illustrated in Fig. 9B.

The overall system diagram of the Bluetooth device according to one embodiment of the invention is, therefore, illustrated in Fig. 10. Thus, instead of the architecture of Fig. 2 where the HCI ACL data packets in buffer 52 would have to be segmented or assembled by the link manager 36 and transmitted or received through link 58 and loaded or unloaded from buffers 54, in the baseband controller 230 of Fig. 10, the packet generator 202 is connected directly to buffer 52 so that it can perform the segmentation and assembly of the HCI ACL data packets in the manner described above.

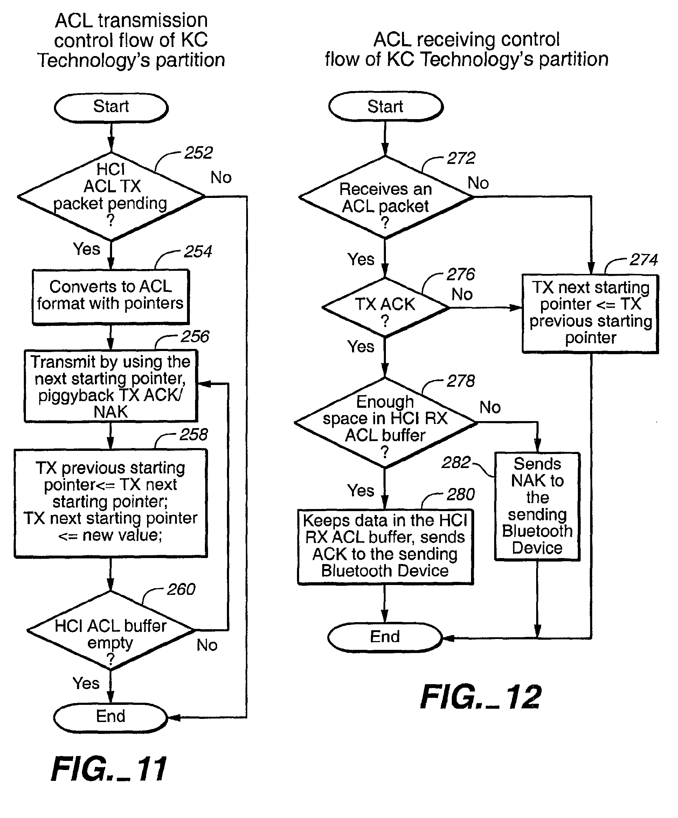

The operation of baseband controller 230 is described below in reference to Figs. 11 and 12. In reference to Fig. 11, the link manager checks to see whether there is an HCI ACL transmit packet that is pending for transmission (diamond 252). If there is not, controller 230 exits. If there is, the link manager 236 converts the HCI ACL data packet to the new buffer format 210 shown in Fig. 9A (block 254). The packet generator 202 then fetches a segment of the packet using the next starting pointer pointing to the first data byte as the beginning byte of the segment. Any TX ACK/NAK signals are then piggy backed by the link controller 238 to form a complete Bluetooth data packet which is transmitted to the corresponding Bluetooth device through interface 40 and antenna 42 (block 256). Generator 202 then resets the pointers 212 and 214 by setting the value of pointer 212 equal to that of pointer 214 and by setting pointer 214 to a new value according to the length of the segment that is to be fetched by the generator (block 258). The link manager 236 then checks to see whether buffer 52 is empty (diamond 260). If buffer 52 is empty, then controller 230 exits and if not, controller 230 returns to block 256 to repeat the process until all of the data in buffer 52 has been transmitted. To keep track of whether the buffer is full or empty, the link manager writes values into a register (not shown) accessible by the link controller, so that if the buffer is full when a packet is received, the controller may attach a NAK to the next packet to be transmitted (block 256), and when the buffer is empty during transmission, the system will exit.

In reference to Fig. 12 for the receive routine, generator 202 checks the header of a Bluetooth packet to determine whether the packet is an ACL data packet (diamond 272). If no such packet has been received, that means controller 230 has not received an acknowledgment that the previously transmitted data packet by controller 230 has been successfully received by the corresponding Bluetooth device, so that the previously transmitted data would have to be re-transmitted. For this reason, generator 202 then causes the value of pointer 214 to be set equal to the value of the previous starting pointer 212 (block 274) and controller 230 exits. If an ACL packet has been received, generator 202 checks to see whether a TX ACK is piggy backed onto the packet received. If a positive acknowledgment ACK has not been received or if a negative acknowledgment NAK has been piggy backed onto the received packet, generator 202 again sets the value of pointer 214 equal to the previous starting pointer value (block 274). If a positive acknowledgment ACK is piggy backed onto the received packet, generator 202 checks to see whether there is enough space in buffer 52 for storing data from the received packet (diamond 278). If there is, such data is stored in buffer 52 using the data total length field of format 220 as described above and controller 238 causes a ACK signal to be piggy backed onto the next Bluetooth data packet that is to be sent to the corresponding Bluetooth device in the next TX slot in reference to block 256 (block 280). However, if there is not enough space in buffer 52 for storing the data from the received packet, generator 202 causes link controller 238 to piggy back a negative acknowledgment NAK to the next Bluetooth data packet that is to be sent as described above in reference to block 256 (block 282). In either case, controller 230 exits after the actions in block 280 or 282.

Where the packet received is a mixed data/voice packet, this is separated by the decomposer 62b, and the data from such packet is processed in the same way as data from a pure ACL packet. The voice portion from such mixed packet is also processed in the same way as voice data from a pure SCO packet. Mixed Data and voice may be processed separately in the same manner as pure ACL and SCO packets and combined by composer 62a into a mixed data/voice packet for transmission.

From the above, it will be evident that a major cause of the bottle neck in conventional systems has been removed. Since the packet generator 202 has direct access to buffer 52, and there is no additional memory that needs to be accessed such as buffer 54, there will be no delay caused by the loading and unloading of such extra buffer as in a conventional Bluetooth device. Since the segmentation and assembly functions previously performed by link manager 36 of the conventional device are now performed by generator 202, the link manager 236 can comprise simpler firmware compared to link manager 36 of the conventional device. As compared to the link controller 38, the link controller 238 does not have to control the switching of buffers 54 and can also be a simpler device compared to the conventional link controller 38. Preferably, generator 202 is implemented in hardware so that the time required for the above-described operations in Figs. 11 and 12 by the generator can be much reduced compared to that performed by firmware in the conventional Bluetooth device.

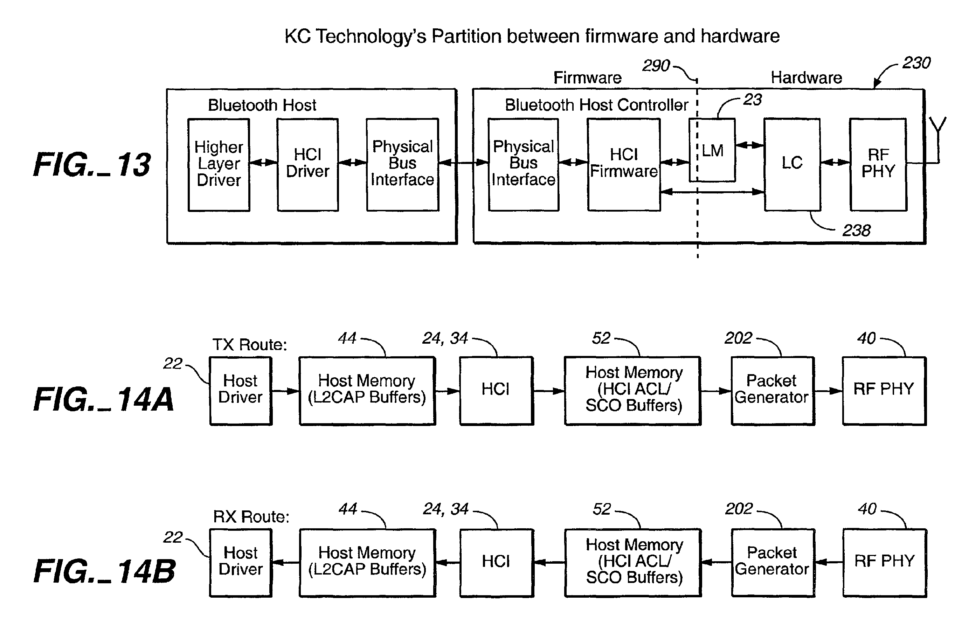

Fig. 13 illustrates a partition between firmware and hardware in a first embodiment of the invention. As shown in Fig. 13, much of the functions originally performed by the link manager 36 of Fig. 1 is now performed by a reduced link manager 236 and by the packet generator 202 which is preferably implemented in hardware in the preferred embodiments. In the conventional Bluetooth design of Fig. 1, even some of the functions of the link controller 38 are implemented in firmware whereas the link controller 238 of Fig. 13 can be implemented entirely in hardware. Such hardware implementation speeds up the operation of the device and reduces the cost. To illustrate conceptually the difference between the preferred embodiments of the invention and the conventional design, two dotted lines are shown as the partitions between firmware and hardware. As shown in Fig. 13, the partition line 290 is much further to the left compared to the dotted line 292 of Fig. 1, illustrating the fact that a much greater portion of controller 230 can be implemented in hardware than controller 30.

Figs. 14A and 14B illustrate the dataflow in the first embodiment of Fig. 10. Under the control of host 20, a large L2CAP packet is transferred from the host memory 44 which includes L2CAP buffers through the host controller interfaces 24 and 34 to buffers 52, where interfaces 24, 34 segment the large L2CAP packet into smaller HCI ACL/SCO packets that are stored in buffers 52. Packet generator 202 then performs the segmentation functions described above with respect to the HCI ACL data packets. The segmented data then becomes payload in a Bluetooth data packet generated by generator 202 and transmitted through interface 40. In the receive routine, a Bluetooth data packet is received by interface 40 and directed to the appropriate ACL or SCO buffers by generator 202 and stored at the proper locations in such buffer in the manner described above. The HCI ACL/SCO packets so formed in buffer 52 are then assembled by HCI 24, 34 into large L2CAP packets and stored in buffers 44 for use by host 20.

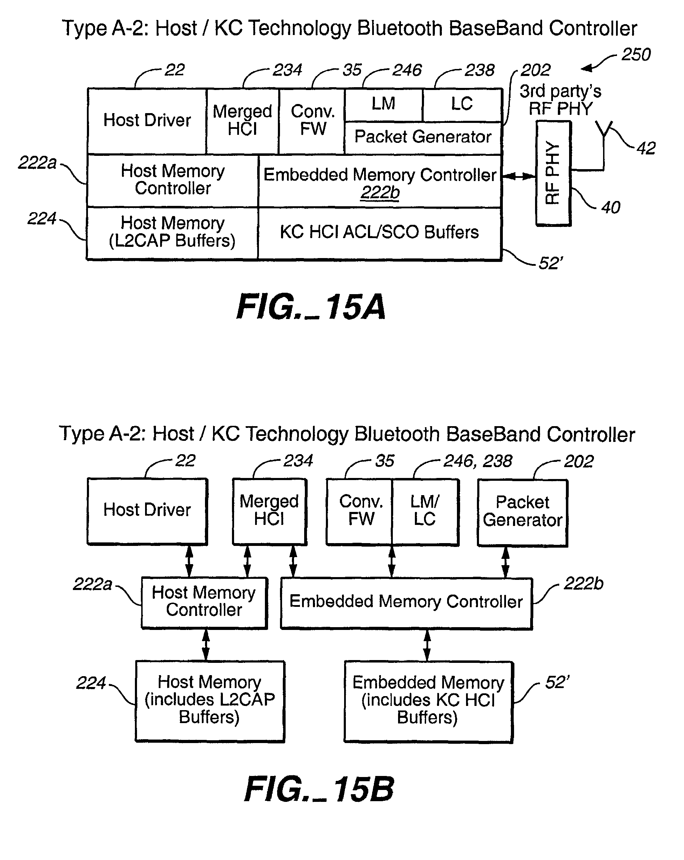

In the embodiment of Fig. 10, all of the operations of the host 20, and components 22, 24, 26, 44 and 46 in the host, are controlled by a central microprocessor (not shown). Baseband controller 230 is also controlled by a microprocessor (not shown) which, as indicated above, can be an 8-bit microprocessor. Thus, controller 230 relates to host 20 in a similar manner as a computer peripheral relates to a host computer through the physical link 56. The two interfaces 24, 34 perform the function of converting between large L2CAP packets and smaller HCI ACL/SCO packets described above and communication between controller 230 and host 20. Where the functions of host 20 and controller 230 are combined, such as in a cellular phone, digital camera, printer or personal digital assistant, some of the functional blocks of Fig. 10 can be simplified in the manner shown in Fig. 15A. As shown herein, since many or most of the time critical functions of the microprocessor for controlling the functions required for Bluetooth are now performed instead by hardware without requiring the microprocessor to perform tasks at time critical points in relation to the transmission and receive time slots, the microprocessor normally used in digital appliances such as cellular phone, digital camera, printer or personal digital assistant may be adequate to handle the additional tasks for Bluetooth, so that a single microprocessor is adequate for the appliance. This is applicable to embodiments of the invention described in reference to Figs. 15A through 17D.

As shown in Fig. 15A, the physical link 56 of Fig. 10 is eliminated; the host and the baseband controller are combined into a single device 250 which may be controlled by a single microprocessor or two separate microprocessors. As noted above, HCI 24 and 34 perform the functions of segmentation and assembly and conversion between L2CAP packets and HCI ACL/SCO packets as well as communication between the host and controller 230. By combining the host and the baseband controller, the communication function performed by the two interfaces 24 and 34 can be simplified and the two interfaces combined into a single interface 234 shown in Fig. 15A, which performs a simplified version of interfaces 24 and 34.

Fig. 15B is a block diagram illustrating some of the functional blocks in one implementation of the system of Fig. 15A. As shown in Fig. 15B, the implementation in such figure differs from that of Fig. 10 in that the buffer for storing HCI ACL/SCO packets is now an embedded memory 52' of the host memory 224. This means that memory 52' may be in the same integrated circuit chip as memory 224. A host memory controller 222a controls the host memory 224. An embedded memory controller 222b controls the embedded memory 52'; controller 222b may also be in the same integrated circuit chip as controller 222a.

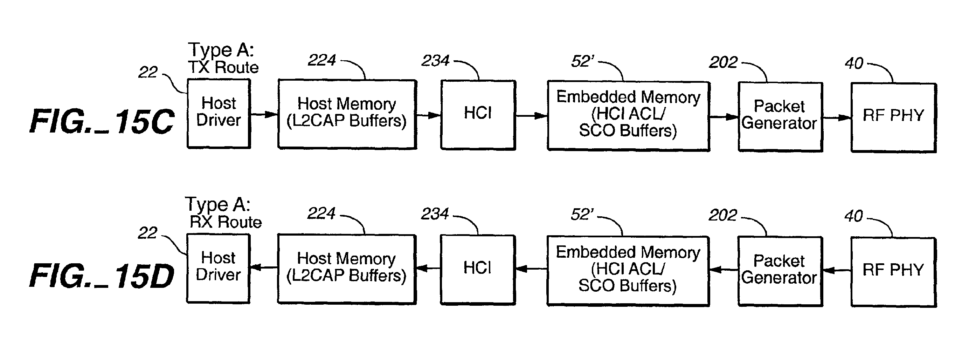

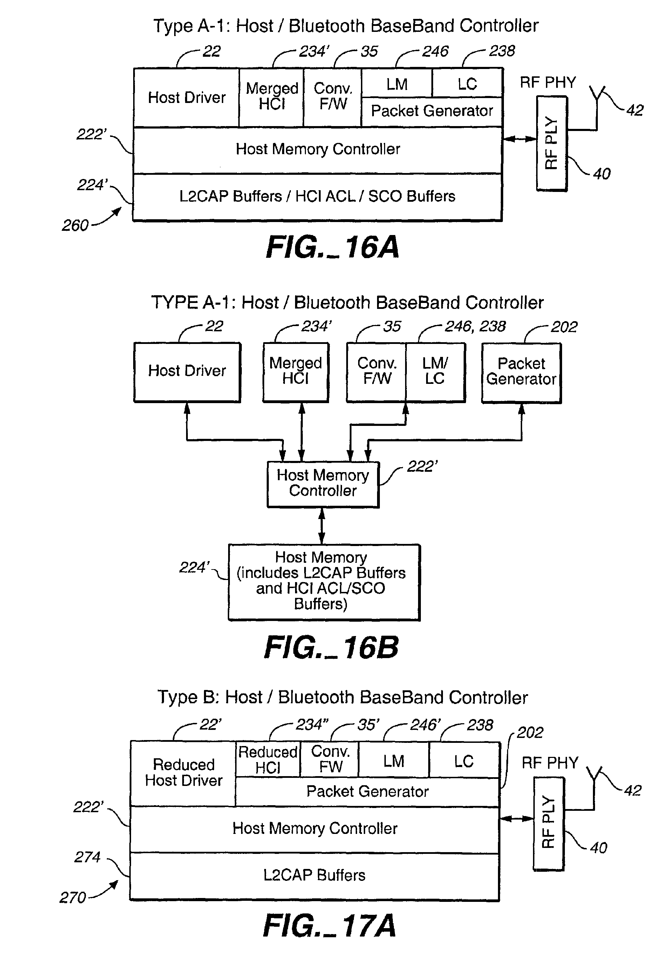

A more simplified implementation 260 of the baseband controller than that shown in Figs. 15A and 15B is illustrated in Figs. 16A and 16B. To further simplify the construction, the two memory controllers 222a, 222b are combined into a single memory controller 222' and the two memories 52' and 224 are also combined into a single host memory 224' that includes L2CAP buffers and HCI ACL/SCO buffers. The dataflow process in controller 250 is illustrated in Figs. 15C and 15D. As shown in these figures, for the transmission of packets, the L2CAP packets are stored in the host memory including the L2CAP buffers 224 through host driver 22. They are segmented by HCI 234 into smaller segments and stored in buffers 52' as smaller HCI ACL/SCO packets. These packets are then processed by packet generator 202 and transmitted through interface 40 as described above. In a receive routine, a received Bluetooth data packet is received through interface 40, decomposed and disassembled by packet generator 202 and stored in buffers 52' in order to assemble the larger HCI ACL/SCO packets. These packets are further assembled by HCI 234 into the larger L2CAP packets and stored in host memory 224 and transmitted through driver 22 to the host central processor (not shown).

The dataflow for baseband controller 260 of Figs. 16A and 16B is similar to that for controller 250 shown in Figs. 15C and 15D described above, except that both the larger L2CAP packets and the smaller ACL/SCO packets are stored in a combined host memory 224' in the case of controller 260.

While the role of the link controller 238 of controllers 250, 260 remains essentially the same as that of controller 230 of Fig. 10, the role of the link manager 246 is further reduced compared to the role of link manager 236 of Fig. 10. Since the physical link 56 has been eliminated, it is now possible for some of the functions of the link manager 236 to be performed by other devices, such as the central processor; the functions that can be transferred includes the determination of master/slave connections and the timing for establishing and terminating such connections. Furthermore, by eliminating the physical link 56, there is less need for communication control.

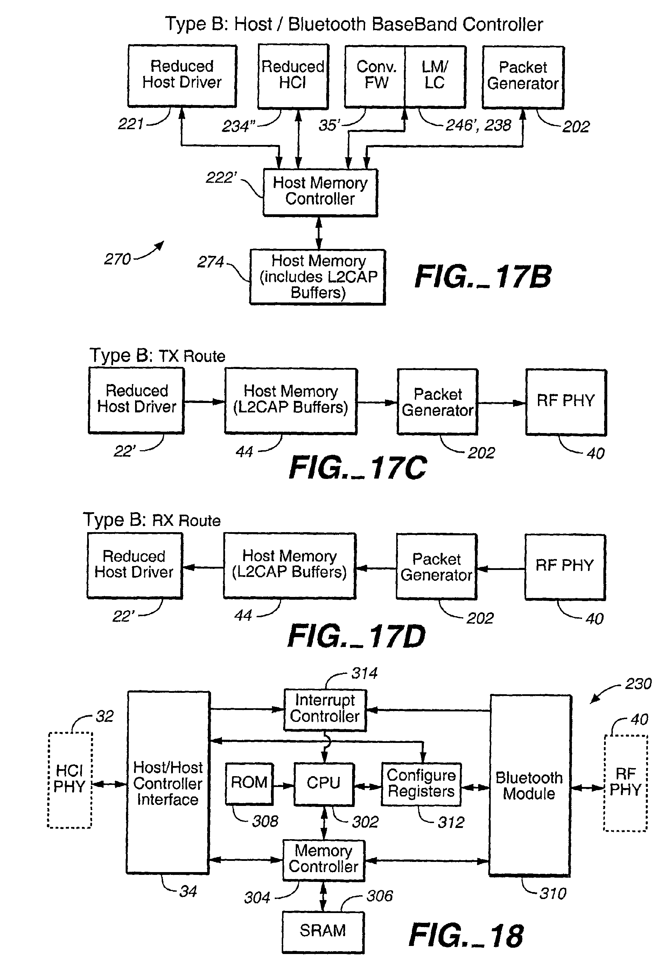

Controllers 250, 260 can be further simplified into implementation 270 of Figs. 17A, 17B. The dataflow of controller 270 is illustrated in Figs. 17C and 17D. A major difference between controller 270 and the controllers of the other embodiments is that in controller 270, a L2CAP packet is segmented and converted directly into Bluetooth packets whereas in the controllers of the other embodiments, a L2CAP packet is first segmented and converted into HCI level ACL/SCO packets before each of such packets is in turn segmented and converted into Bluetooth packets. Thus the role of the HCI 234" and link manager 246'in controller 270 is further reduced compared to that of HCI 234' of controllers 250, 260. In addition, there is no need for any separation between two buffers: one for storing L2CAP packets, and one for storing HCI ACL/SCO packets. Instead the L2CAP packets are simply stored in buffers that are part of the host memory 274. In controllers 250, 260, the Host CPU (not shown) and host driver 22 segment L2CAP packets into HCI level packets and transmit such packets into the HCI ACL/SCO buffers. In controller 270, since there is no need for such process, the role of the host driver 22' is also reduced compared to driver 22 of the prior controllers 250, 260. The generator 202 may then be used to store data into or retrieve data from the host memory in the L2CAP data format, segment data from such packets into smaller segments for Bluetooth packets, or assemble data from smaller Bluetooth packets into L2CAP data formats in the same manner as that described above.

Fig. 18 is a block diagram illustrating the different components of the Bluetooth baseband controller 230 of Fig. 10 to illustrate an embodiment of the invention. While the configuration of controller 230 of Fig. 10 illustrates the different functions within the controller, Fig. 18 illustrates the actual components may be used for carrying out such functions. As shown in Fig. 18, controller 230 includes a central processing unit ("CPU"), such as a microprocessor 302, a memory controller 304, static random access memory (SRAM) 306, read only memory (ROM) 308, Bluetooth module 310, configuration register 312, interrupt controller 314 and host controller interface (HCI) 34 and the HCI physical interface 32. Configuration register 312 may actually be distributed in the different components, rather than necessarily located at the same location. Firmware such as the link manager 236 and other software are stored in ROM 308 and are read and executed by the CPU 302. The Bluetooth module 310 includes the packet generator 202 and performs much of the functions of the link controller 238 of Fig. 10.

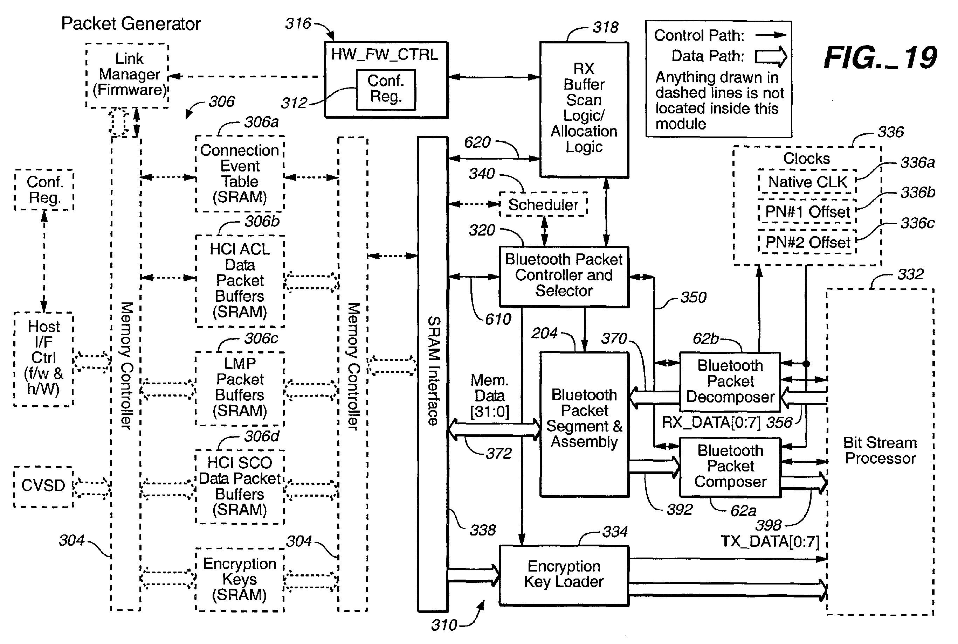

Fig. 19 is a block diagram showing in more detail the Bluetooth module 310 of Fig. 18. The Bluetooth module 310 includes the packet generator 202 of Fig. 10, where the generator in turn includes the packet composer and decomposer 62a, 62b, the packet segment and assembly block 204, RX buffer scan logic and allocation logic 318 and the packet controller and selector 320, all as shown in Fig. 19. Module 310 further includes a bit stream processor 332, encryption key loader 334, clock 336, SRAM interface 338 and a scheduler 340. As shown in Fig. 19, the fat arrows indicate data paths carrying data in data transfer between controller 230 and another Bluetooth device and line arrows indicate control paths.

As noted above, one of the key drawbacks of conventional Bluetooth baseband controllers is that the microprocessor is required to perform tasks within the TX and RX slots (Fig. 6) for Bluetooth packet transmission. Bluetooth Specification defines a special control packet known as the FHS packet that is used in page master response, inquiry response and master-slave switch modes. One of the key functions of the FHS packet is to convey timing information. Since the master and slave usually operate at different clocks, an FHS packet is transferred to establish the timing and frequency synchronization between the master and the slave. For example, at connection setup and during a master-slave switch, the master sends an FHS packet to the slave. After the slave receives the page message, it will calculate a timing offset or clock offset between the master clock and its own native clock, where such clock offset will then be subsequently used during the slave-to-master communication. Since the clock information sent by the master must be current in order for the offset calculation by the slave to be accurate, the master clock information must be inserted in the FHS packet sent by the master in real time, and this action cannot be performed ahead of time. Similarly, when the slave calculates the clock offset between the master clock and its own native clock, it must do so also in real time at the current value of its own native clock, and this process cannot be delayed or else the offset calculation will be inaccurate. If such action performed by the master or the slave is performed by the microprocessor, this will require time critical attention by the microprocessor.

Given the complexity of tasks called for by the Bluetooth protocol to be performed by the microprocessor, the need to perform the action in real time by the master and the slave imposes a burden on the microprocessor, and increases the likelihood that a high performance microprocessor will need to be used, thereby increasing the cost of the baseband controller. Another aspect of the invention is based on the recognition that, if the microprocessor is relieved of the duty to perform the above-described actions (in inserting the clock information into the FHS packet that is sent by the master, and in performing the action in the slave calculating the clock offset), a lower performance microprocessor may be adequate.

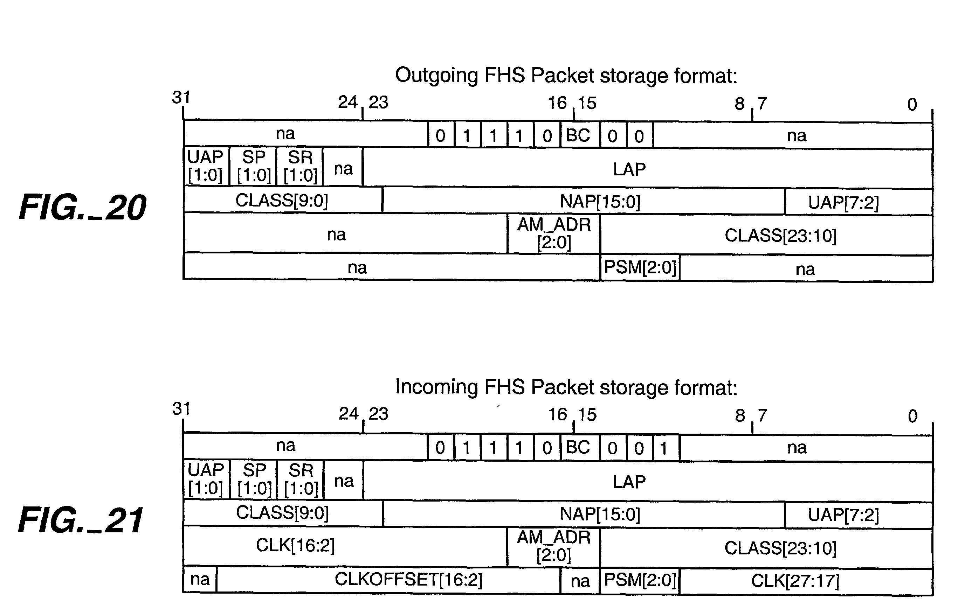

Figs. 20 and 21 are respectively schematic views of outgoing and incoming FHS packet storage formats to illustrate this aspect of the invention. Different events need to be monitored which may call for different actions in the various modes such as the page master response, inquiry response, and master-slave switch, and the transfer of ACL and SCO data packets. The scheduler 340 of Fig. 19 monitors an event table 306a in the SRAM 306 and determines which actions will need to be taken based on the status of the various event entries in event table 306a. In the event table are also stored pointers to various buffers, such as the HCI ACL buffer 306b, the LMP packet buffer 306c and HCI SCO data packet buffer 306d, for example. The FHS packets are stored in the LMP packet buffers 306c.

The formats of Figs. 20 and 21 are defined by the Bluetooth Specification with the following exceptions: bits 0-31 in the first quadword and the entry CLKOFFSET in the last quadword in the incoming FHS packet storage format of Fig. 21. In the first quadword of Figs. 20 and 21, the value "100" of bits 11-13 indicates that these two are FHS packets. The value "01110" of bits 16-20 indicates length of the packets. The FHS packet has a fixed length; that is the reason why the length is a fixed value. Except for the clock offset information in the last quadword of the incoming FHS packet in Fig. 21, the firmware stored in ROM 308 of Fig. 18 as executed by the CPU will prepare the FHS packet formats as shown in Fig. 21. Since this task is not time critical, the task will not significantly and adversely impact CPU performance. The hardware will then calculate the clock offset in a manner described below, insert the clock offset information into the last quadword of the packet and send the FHS packet to the host. In the case of an FHS packet that is sent to another Bluetooth device, firmware will prepare an FHS packet in the form shown in Fig. 20. Since this task is not time critical, the task will not significantly and adversely impact CPU performance. Hardware will then insert clock information from a native clock into a bitstream of information of the form shown in Fig. 20 and preferably at a location in the bitstream that corresponds to the last and second to last quadwords of the packet shown in Fig. 20, and send the packet to the other Bluetooth device. Preferably bits 2 through 16 of the clock information are inserted into the bitstream at a location corresponding to the second to last quadword, and bits 17-27 are inserted into the bitstream at a location corresponding to the last quadword. In other words, if such clock information were inserted into the format of Fig. 20, preferably such information would appear at positions similar to the positions of the clock information in the format of Fig. 21.

Then when the master-slave switch cycle begins, the master will insert its clock information into the outgoing FHS packet in real time during a master-to-slave slot and sends the packet to the slave. When such packet is received by the slave, the slave will calculate the clock offset based on the clock information in the FHS packet received from the master and its own native clock at the time, after taking into account the timing for sending the FHS packet by the master and its receipt by the slave, and inserts such clock offset information as bits 2-16 in the last quadword in the format in Fig. 21. This clock offset information is stored in the LMP buffer 306c and can then be used in communication between the slave and the master.

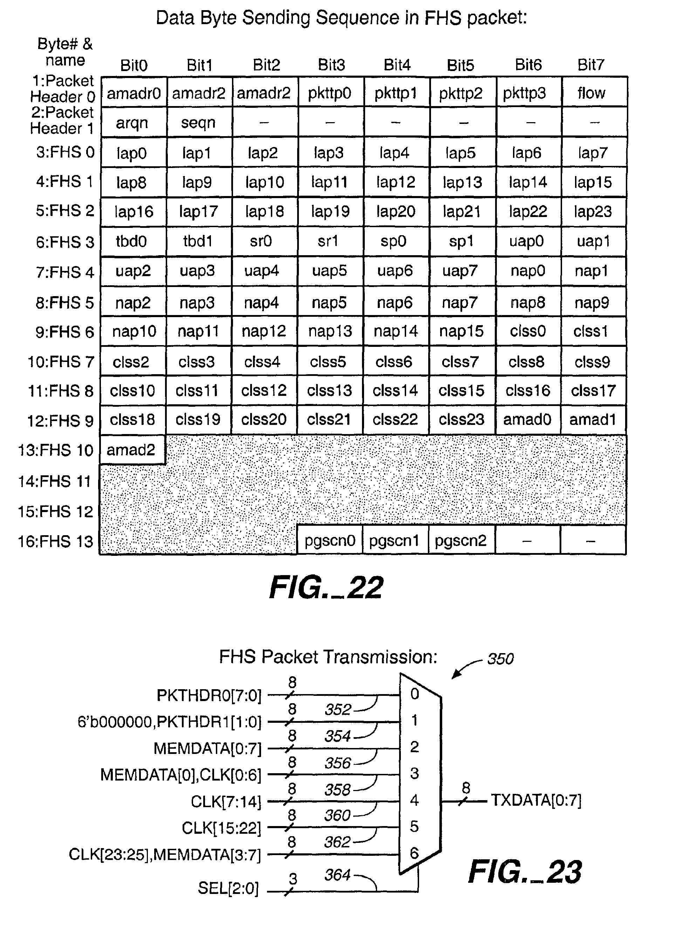

Fig. 22 is a schematic view of a data byte sending and receiving sequence for FHS packets. As shown in Fig. 22, bits 0-2 in the first byte in the packet header 0 include information on the address (amdr, standing for active mode address) of the Bluetooth device that the packet is to be sent to. Bits 3-6 in the same first byte indicate packet type information, or in this case the fact that this is an FHS packet. Bit 0 in packet header 1 of the second byte of the sequence is "arqn" which is acknowledgment information, indicating whether or not a prior packet has been received correctly by the device sending out this packet through the same connection. Bit 1 in packet header 1 or "seqn" indicates whether this packet is one that has been sent before. The following several bytes contain information on the address of the sending device, in this case controller 230. Bytes labeled FHS 10 through FHS 13 contain clock information. Where the sequence of Fig. 22 contains master clock information, these four bytes would contain information concerning the master clock.

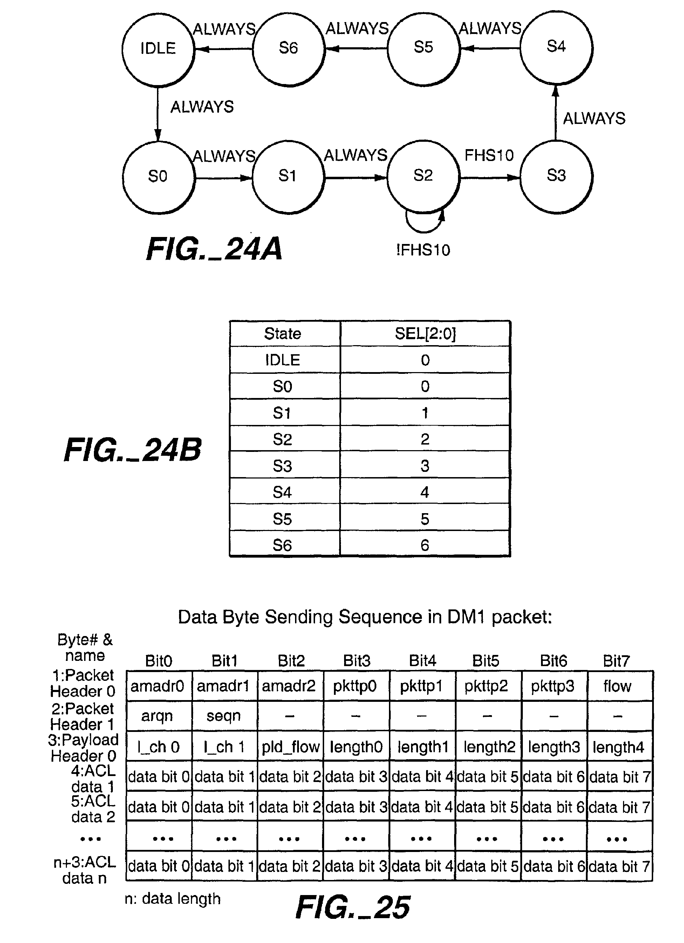

The 14 bytes in the sequence of Fig. 22 are sent out sequentially, one byte at a time, by means of a multiplexer 350 of Fig. 23 in accordance with the state machine illustrated in Figs. 24A, 24B. Thus, multiplexer 350 selects any one of the seven particular inputs depending on the value of the select signal SEL[2:0] on control lines 364 determined by the state machine of Fig. 24A and Fig. 24B. The state machine of Fig. 24A would provide a value for the select signal SEL[2:0] applied to the multiplexer 350 in accordance with the state in Fig. 24A and the lookup table in Fig. 24B. The state machine in Fig. 24A proceeds from idle to the state S0, so that the state machine provides the value 0 on control lines 364 to multiplexer 350. In such event, from the table in Fig. 24B, the 8 bits of packet header 0 (PKTHDR0) shown in Fig. 22 are passed by the multiplexer to the output TXDATA[0:7] as shown in Fig. 23. Then the state machine proceeds to state S1, so that the select signal on lines 364 selects input 1 comprising bits 0 and 1 in packet header 1 (PKTHDR1) shown in Fig. 22.

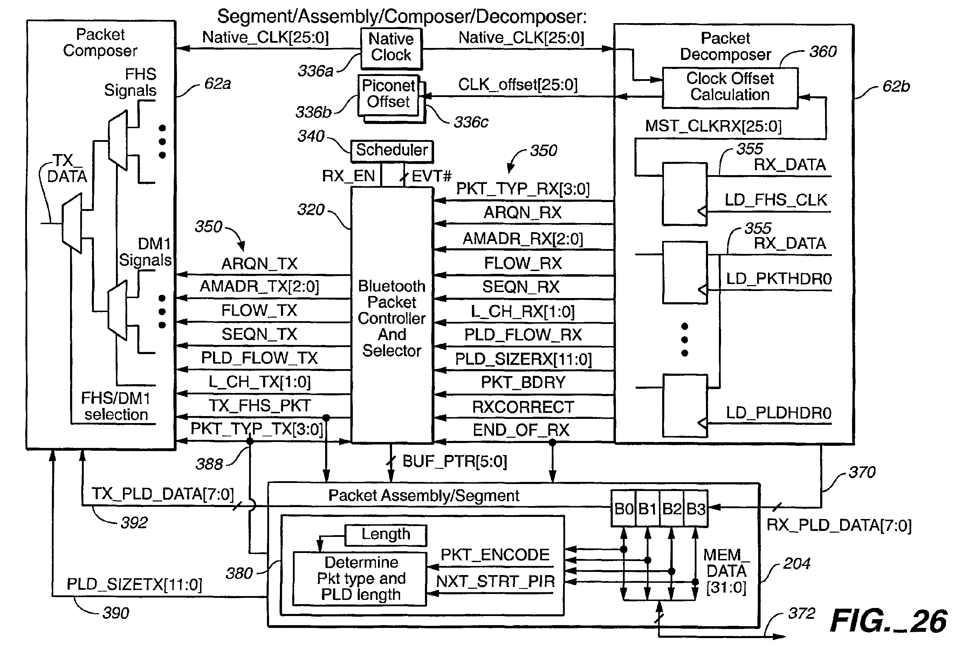

The state machine then proceeds to state S2, selecting the input 2 of the multiplexer 350, which is repeated until it reaches the byte FHS 10. The state machine then proceeds to state S3, thereby causing the multiplexer 350 to select input 3, which passes the 0 bit of the byte FHS 9 and bits 0-6 comprising clock information in byte FHS 10. The state machine proceeds to state S4, thereby selecting input 4, passing bits 7-14 of the clock information in byte FHS 11 as shown in Fig. 22. In state S5, the state machine causes input 5 to be passed by the multiplexer 350, selecting bits 15-22 of the clock information as shown in Fig. 22. Lastly, the state machine causes the multiplexer to select bits 23-25 of the clock information in 5 bits of memory data as shown in Fig. 22. When the 14 bytes of data are received by the slave in the same order that they are transmitted, the slave would demultiplex the 14 bytes by latching each byte appropriately in order to extract the 26 bits of clock information and calculate an offset value in the manner described in more detail below. The multiplexer 350 and state machine of Figs. 24A, 24B form a part of the composer 62a of Fig. 26. The demultiplexing and latching occur in the decomposer of Fig. 26. This clock offset information is then written in the last quadword in the incoming FHS packet storage format of Fig. 21.

In the example above, the aspect of the invention involving FHS packets is illustrated by reference to master-slave switch mode; it will be understood that the above-described aspect is equally applicable to other modes of operation of the Bluetooth baseband controller, including the page master response and inquiry response. Such and other variations are within the scope of the invention.

### Packet Composer/Decomposer/Assembly/Segment

The operation of the packet composer 62a, decomposer 62b and the segment and assembly 204 will now be described in more detail. As noted above, in conventional Bluetooth technology, the handling of the different types of information conveyed in the Bluetooth SCO or ACL data packets is handled by the microprocessor. Since the handling of such information must be completed within the transmit and receive time slots for such packets (Fig. 6), this affects microprocessor performance. One aspect of the invention is based on the recognition that, by using hardware circuits to handle such information, the microprocessor is relieved of such duties so that a lower performance microprocessor may suffice. While the invention is illustrated below by reference to ACL data packets, it will be understood that this aspect of the invention is equally applicable to SCO data packet handling and is within the scope of the invention.

### Packet Decomposer and segmentation

Fig. 25 is a schematic view of a sending and receiving sequence for a DM1 packet defined in the Bluetooth Specification useful for illustrating the invention. Fig. 26 is a block diagram of the packet composer 62a, decomposer 62b, packet segment and assembly 204, Bluetooth packet controller and selector 320, scheduler 340, native clock 336a and two clock offset registers 336b, 336c. As further shown in Figs. 18 and 19, the bitstream processor 332 receives Bluetooth data packets from another Bluetooth device through the RF physical interface 40 of Fig. 18. The bitstream processor 332 processes the Bluetooth data packets to check for error correction, encryption information and checks the header of the packets to determine whether the packets are intended for the baseband controller 230, which includes the processor 332. Assuming that the Bluetooth data packets are correctly received and are destined for the baseband controller 230 that receives the packet, the bitstream processor sends a signal to the packet decomposer 62b indicating that the packet has been correctly received. Such signal is routed by the packet decomposer through the packet controller and selector 320 along the signal path labeled RXCORRECT as one of the control signals along control bus 350, also shown in Fig. 19.

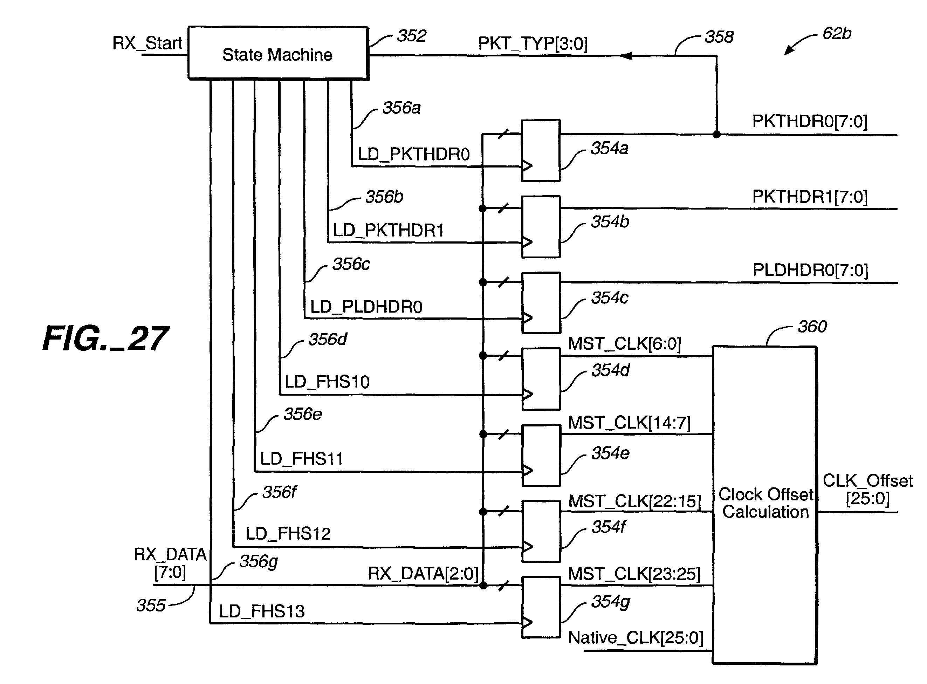

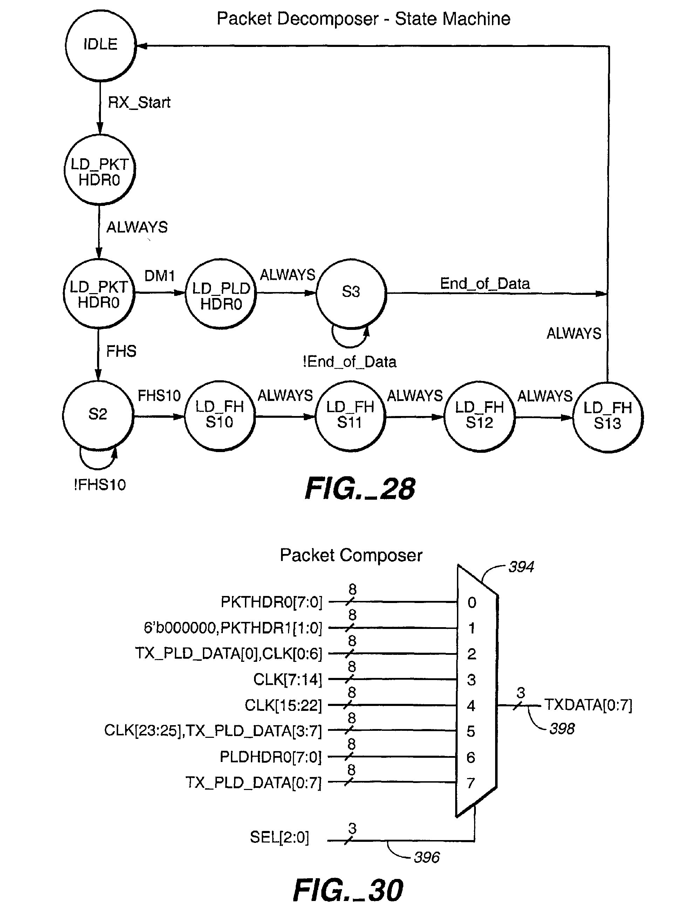

As shown in Fig. 25, the DM1 packet includes a header 0 byte, a header 1 byte, a payload header 0 byte and a number of data bytes. Packet decomposer 62b includes a state machine 352 and a number of latches 354 shown in Fig. 27. The different bytes in the DM1 packet are sent through the data path 355, which is directed as an 8 bit signal to each one of the eight latches 354a-354g. The state machine 352 generates loading signals for loading each one of the bytes in the DM1 packet into the latches 354 where the state machine is shown in Fig. 28. Thus, when receiving starts, the state machine 352 is triggered by a RX signal from the scheduler 340 when the scheduler determines from the event table 306a that the reception of the data packet is to be served in the next receive time slot, the state machine proceeds from idle to load the packet header 0 as shown in Fig. 28. Therefore, as shown in Fig. 27, the load packet header 0 signal is asserted on line 356a, thereby causing the packet header 0 byte of the DM1 packet shown in Fig. 25 to be latched into the corresponding register 354a. The output PKTHDR0 of register or latch 354a is provided to the packet controller and selector 320 in Fig. 26.

Bits 3-6 of the packet header 0 byte shown in Fig. 25 are provided to the state machine 352 to indicate to the state machine whether the packet received is the DM1 packet type or another packet type. Then the state machine 352 proceeds to the state LD-PKTHDR1 to generate a loading signal on line 356b, thereby causing the packet header 1 of Fig. 25 to be latched to register or latch 354b. The output of latch 354b provides the signals arqn and seqn to controller and selector 320 in bus 350. At this point, state machine 352 determines from bits 3-6 of the packet header 0 byte whether the packet received is the DM1 type packet. If it is, it proceeds to the state LD-PLDHDR0 and generates a load payload header 0 signal on line 356c in Fig. 27, thereby causing the payload header 0 byte of Fig. 25 to be latched to latch 354c. Based on the output of latch 354c, the decomposer provides an output PLD-SIZERX to controller and selector 320 in bus 350.

The state machine 352 then proceeds to state S3 in Fig. 28 and transfers all of the data bytes sequentially along data bus 370 (Fig. 26) to the packet segment and assembly 204. Block 204 includes four shift registers or FIFOs B0-B3 and shifts the data received along bus 370 until four bytes of data can be transferred at the same time along bus 372 to the SRAM interface 338 (Fig. 19). The payload size data received by controller and selector 320 from the decomposer 62b is then written into an ACL buffer 306b beginning at bit 16 in the first quadword of format 220 in Fig. 9B. The memory controller then is able to store the data from the DM1 packet at the right location in one of the buffers 306b at the right location using information concerning the total length of the data stored in such buffer. In other words, the packet assembly/segment module 204 collects the data from bus 370, cascades these data bytes into a four-byte FIFO B0-B3, and writes the four-byte data into a specified buffer among the buffers 306b with proper byte enable control signals. After the DM1 packet has been correctly received as determined by the bit stream processor, the packet decomposer sends the signal RXCORRECT to the controller and selector 320. Decomposer 62b stops sending data bytes to module 204 and turns off the bitstream processor 332 if the number of incoming data bytes exceeds the payload length indicated in the packet.

If the packet header information is received correctly so that this packet is destined for the baseband controller receiving the packet, controller and selector 320 may update the next starting pointer in a current transmitting HCI ACL buffer among buffers 306b, depending on the value of arqn in the packet received and sent to the controller and selector 320 by the decomposer 62b along bus 350. If the previous transmitted packet was received correctly so that arqn is of a particular value such as 1, the controller leaves the next starting pointer 212 of Fig. 9A unchanged. Otherwise, the value of the previous starting pointer 214 is copied into the next starting pointer 212.

If the packet received is not a DM1 packet but is a longer one such as a DM3, the above description would need to be modified only slightly by including an additional latch for latching an extra byte of data for indicating data length.

However, if the 4 bit packet type feedback along lines 358 indicates that the packet received is not a DM1 packet but another type of packet, such as the FHS-type packet described above, the state machine 352 will proceed for example to state S2 in Fig. 28 and in Fig. 24A. This means that the state machine will continue to generate loading signals to load the different bytes in the FHS packets shown in Fig. 22 until the byte FHS 10 is reached, at which point it will then proceed to generate sequential loading signals LD_FHS10, LD_FHS11, LD_FHS12 and LD_FHS13, in order to load the four bytes containing clock information of the Bluetooth device from which the FHS packet is received. These four bytes are latched sequentially to latches 354d-354g as controlled by the loading signals applied sequentially to lines 356d-356g. The four latches 354d-354g then provide the 26 bits of clock information to a clock offset calculation circuit 360. After completing the loading of the FHS packet, the state machine 352 returns to idle.

In the preferred embodiment, circuit 360 in the decomposer of Figs. 26, 27 is used to calculate the clock offset that pertains to a particular receive time slot, and the offset information is stored in one of the registers 336b or 336c for use by the baseband controller 230. Since the clock offset information may not be required in the next time slot or the next several time slots following such particular receive time slot, as an alternative embodiment, it is possible to delay the calculation of the time offset. In this alternative embodiment, the decomposer simply records the native clock of the receiving device and the clock information of the FHS packet sending device in a LMP buffer 306c relative to a particular receive time slot. This recordal is performed during the duration of the particular receive timer slot during which the FHS packet is received. If this is done, the calculation of the clock offset may be delayed to a later time. In this manner, the CPU may calculate the clock offset using the information stored in the LMP buffer and store the offset in register 336b or 336c at a later time of its choosing. Hence, the CPU also does not need to perform tasks at time critical points in relation to any particular receive time slot. Such and other variations are within the scope of the invention.

### Packet Composer and Assembly

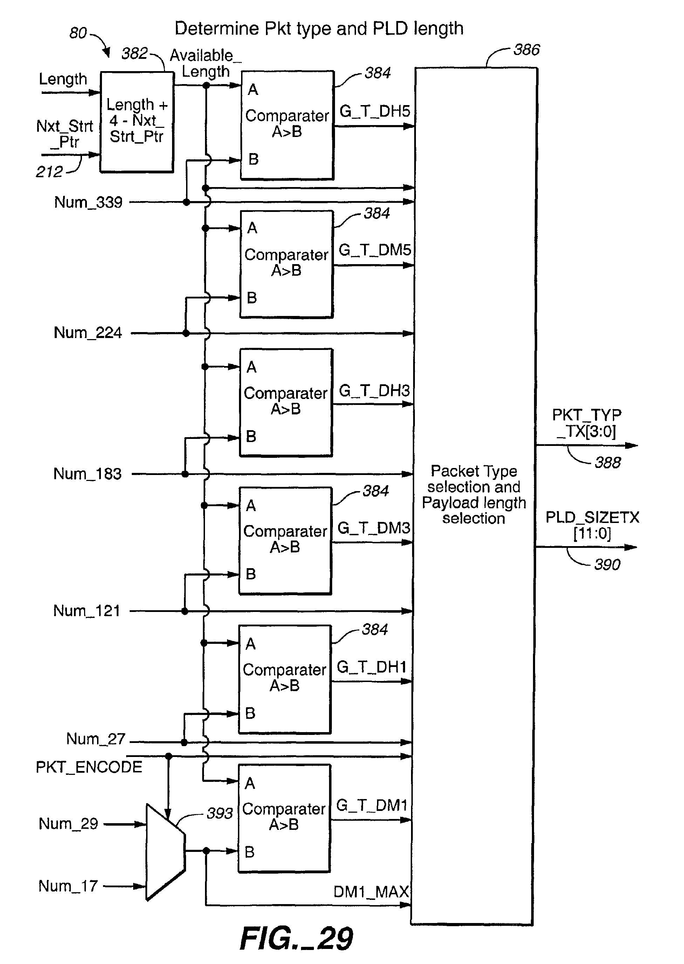

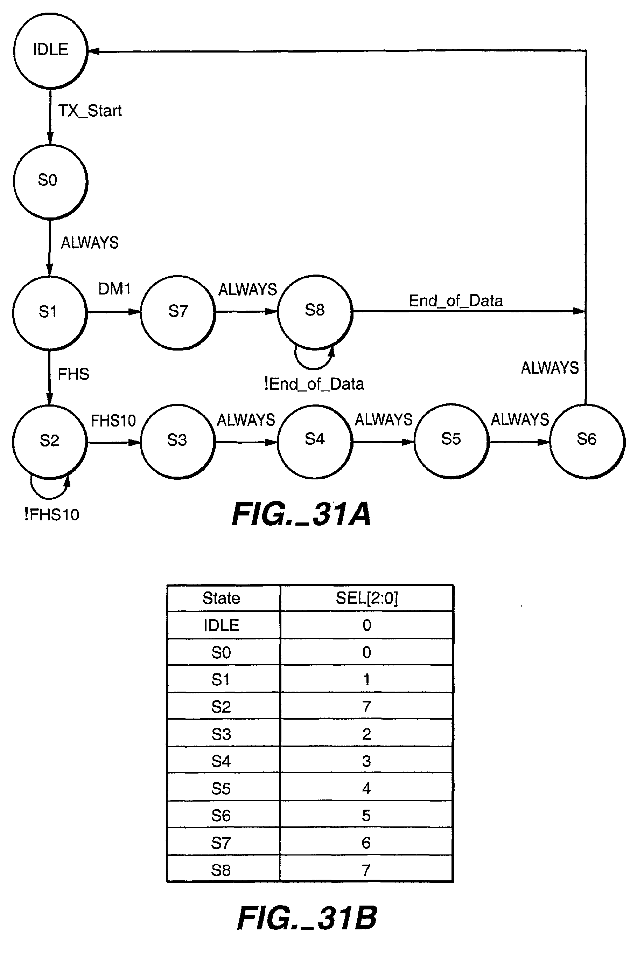

The process performed by the packet composer 62a will now be described in reference to Figs. 29, 30A and 30B. First, a transmit buffer among the buffers 306b is first identified as the data source, where the data therein originates from a HCI Interface Module. The format 210 of the buffer is illustrated in Fig. 9A. Under the controller of memory controller 304, such data is read and transferred by SRAM interface 338 four bytes at a time through bus 372 to packet assembly/segment module 204. The first and last quadwords of buffer 210 of Fig. 9A are first loaded into FIFO B0-B3 and read in module 204 to obtain data length, packet encode and next starting pointer information. Module 204 includes logic circuit 380 illustrated in more detail in Fig. 29. Based on the information concerning data length, next starting pointer and Pkt_encode, the proper packet type and payload length may be determined as illustrated in Fig. 29.

In the preferred embodiment, the next starting pointer in the transmit ACL buffer format 210 of Fig. 9A is set assuming that bytes 0-4 are occupied by header information and that data does not start until the fifth byte. Therefore, adder 382 adds 4 to the next starting pointer value 212 of Fig. 9A to obtain the total available length of the number of bytes to be transferred by the composer. The DH5-type packet contains a maximum of 339 bytes, DM5 packets a maximum of 224 bytes, DH3-type packet a maximum of 183 bytes, and DM3-type packets a maximum of 121 bytes. Similarly, 27, 29 and 17 represent the maximum number of DH1, AUX1 and DM1 types of packets respectively. Since the AUX1 and DM1 types of packets are mutually exclusive, one can reduce the number of comparators required by means of a multiplexer 393 controlled by the Pkt_encode signal. Thus, the available length is compared by comparators 384 simultaneously to determine the optimum packet type for transmitting the data in the HCI ACL buffer among buffers 306b. The Pkt_encode signal indicates the types of packets available and whether the packet is to be a single slot, three-slot or five-slot type packet. The meaning of the bits in Pkt_encode signal is as follows. Bits 1 and 0 of the signal indicate the permitted number of slots: where 00 means a single slot packet, 01 a three-slot packet and 10 a five-slot packet. Bits 2 and 3 of the signal indicate the type of packet: 00 means AUX1 only, 01 means DM only and 10 means DH only and 11 means automatic best fit. Some of these definitions can be found in the Bluetooth Specification.

Therefore, based on the results of the comparison by comparator 384 and based on the signal Pkt_encode, circuit 386 selects a proper packet type for transmission as a four-bit output lines 388 and provided to the packet composer 62a and the controller and selector 320 as shown in Fig. 26. Block 386 also determines the size of the payload as a 12-bit signal provided along lines 390 to the composer 62a. Block 386 may be implemented in any kind of suitable hardware logic. Appendix A attached hereto and made a part of this application sets forth the pseudo code for designing the appropriate logic circuit that may be used within block 386.

Since the packet type information from the controller 320 (TX_FHS_PKT) or module 204 (PKT_TYP_TX) becomes available to the composer 62a at or prior to state S0, the composer is able to determine whether to proceed from S1 to S7 or to S2. After the first and last quadwords of buffer 210 have been loaded from bus 372 into FIFO B0-B3 and read as described above, module 204 then reads the remaining data from one of the ACL transmit buffers in 306b through bus 372 and transfers the data bytes along data bus 392 to the composer 62a. Composer 62a is illustrated in more detail in Figs. 30, 31A and 31B. Composer 62a includes the multiplexer 394 controlled by three bits of select signal along lines 396 and provides an 8-bit output along data bus 398 to the bitstream processor 332. Fig. 31A is a schematic view of the state machine in composer 62a illustrating how the multiplexer 394 may be controlled. Thus, when transmission starts, the state machine proceeds to state S0. The select signals along lines 396 corresponding to the different states are illustrated in the table of Fig. 31B. Thus, when transmission starts, the state machine proceeds to state S0, so that the packet header byte (packet header 0) of the form shown in Figs. 22 and 25 is sent to output lines 398. Then, the next byte (packet header 1) of the form shown in Figs. 22, 25 is then selected at state S1 and sent to output lines 398.

At this point, the state machine selects whether the packet to be transmitted is the DM1 type or the FHS type. If the DM1-type packet is transmitted, the state machine proceeds to state S7 to supply the payload header 0 bytes at input 6 to output lines 398. The state machine then proceeds to state S8 to transfer all the data bytes (which includes the native clock 336a information bits 0 through 25) into packets until all of the data has been transmitted to output lines 398. Where the CPU knows ahead of time that an FHS packet is to be transmitted one or more TX time slots later, it is possible for the CPU to calculate the expected native clock value during the time slot when the FHS packet is to be transmitted, and causes hardware to handle the actual transmission in a manner substantially as described above. Such and other variations are within the scope of the invention.

If it is determined that an FHS-type packet is to be transmitted, the state machine proceeds to state S2-S6 in a manner similar to that described above in Fig. 24A to transmit all of the bytes including clock bits 0-25 to output lines 398.

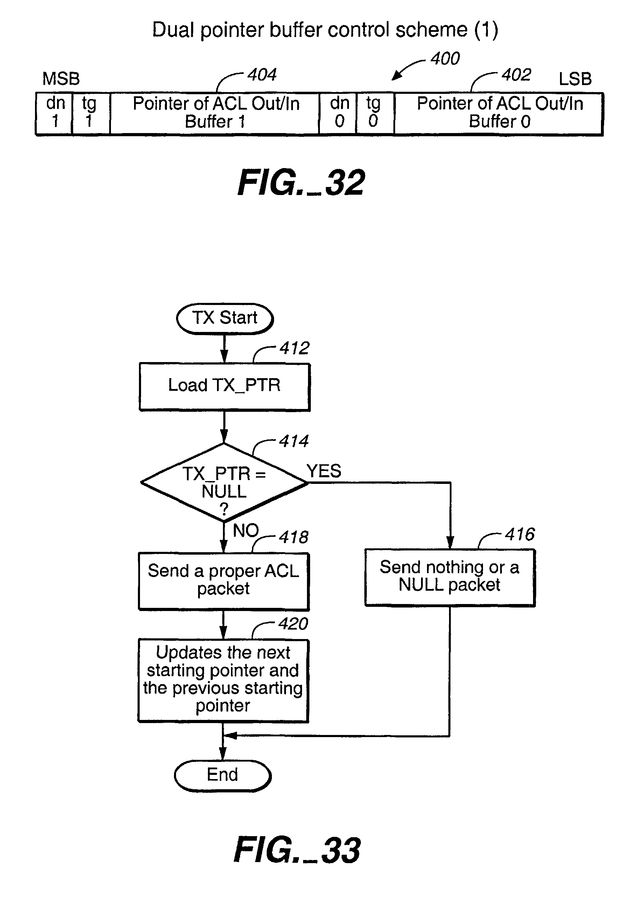

In reference to Figs. 11, 12 and 19, the packet controller and selector 320 performs the steps described above in reference to Figs. 11 and 12. Preferably, the packet controller and selector 320 comprises a hardware circuit that performs such functions, so that the processor need not be involved in such functions at time critical points in relation to the transmit and receive time slots. Fig. 32 illustrates one entry in the event table 306a pertaining to the transfer of ACL data packets, and Fig. 33 is a flowchart illustrating the actions by the controller and selector 320 in relation to the transmission of ACL data packets. The scheduler 340 keeps track of the different events in the event table and determines which event should be served at a particular time slot. As shown in Fig. 32, the event table 400 contains two entries: one entry for storing two pointers for two ACL buffers supporting the transmission (OUT) of ACL data packets, and another for storing the two pointers of two ACL data buffers for supporting the receiving (IN) of ACL data packets. When a buffer has been assigned to support the transmission or reception of ACL data packets by the microprocessor 302, the address of the buffer would then be written into one of the two addresses 402 or 404 in the event table entry 400. Therefore, if no buffer has yet been assigned, then the addressing registers 402 and 404 would both be null (indicated by a particular fixed value of the pointer). If only one buffer has been assigned, then one of the two addresses 402, 404 would be null, and the other one containing a pointer to the assigned buffer.

In reference to Fig. 33, when transmission starts, packet controller and selector 320 would attempt to load a transmission pointer from either one of the two locations 402, 404 of the event table (block 412). If no buffer has been assigned to support the transmission so that both locations 402 and 404 are null, the controller and selector 320 would cause a null packet to be sent (diamond 414, block 416). The null packet may be composed by means of module 204 and composer 62a in the manner described above except that no data will be contained in the packet. If one of the two registers 402, 404 contains a pointer to an assigned buffer, the pointer will be loaded into an internal register of the controller and selector 320 and an ACL packet containing data from the ACL buffer pointed to by the pointer will be composed in the manner described above and transmitted (block 418). The controller and selector then updates the next starting pointer and the previous starting pointer by writing the value of the next starting pointer into the location 214 for the previous starting pointer and a new value into the location 212 for the next starting pointer and exits (block 420). The process of obtaining an ACL buffer to support reception of an ACL data packet will be described below.

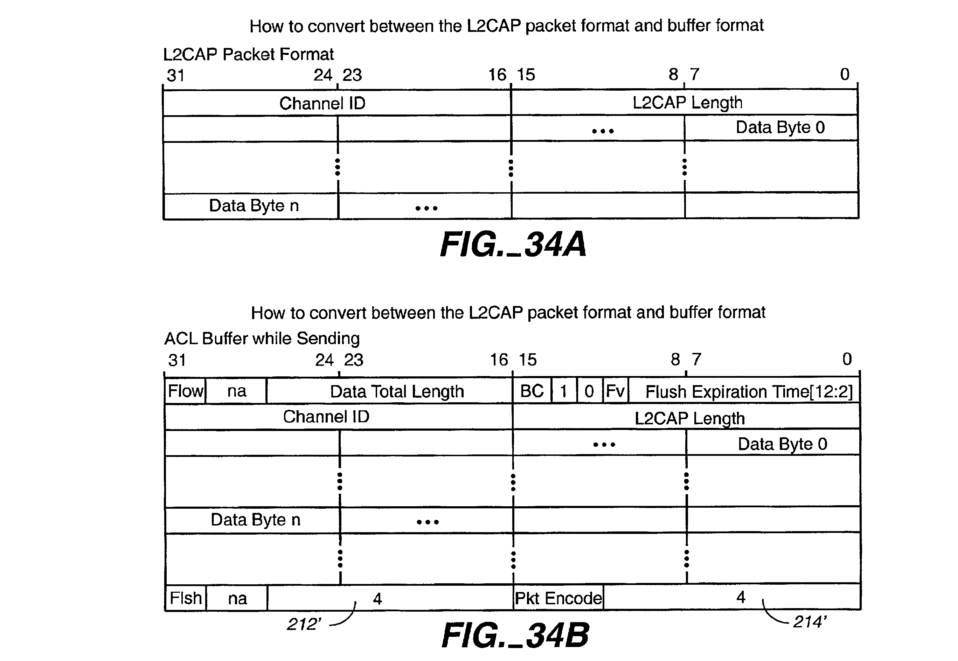

In the embodiment described above, the packet generator directly accesses the HCI ACL buffers without utilizing any other storage or memory. Even when the generator does utilize other storage or memory in the process, many of the same advantages described above of the invention can still be obtained, such as relieving the microprocessor to perform tasks at time critical points in relation to the receive and transmit time slots. This aspect of the invention is also applicable to the transfer of data packets other than the ACL data packets, such as SCO data packets and L2CAP packets, as illustrated in Figs. 34A, 34B. Fig. 34A illustrates the L2CAP packet format defined according to the Bluetooth Specification . In one embodiment, to arrive at a modified format suitable for packet transmission, the first quadword of the ACL buffer data format is added as the first quadword and in front of the L2CAP packet as illustrated in Fig. 34B. In this added quadword, the length of the L2CAP data packet is copied into the data total length field at the proper location according to the ACL buffer format illustrated in Fig. 34B. Then further modification is made by setting the value of the field BC, by setting the field PB to the value "2b'10", and by adding flush information. The next starting pointer and the previous starting pointer are initialized at locations 212' and 214', and packet type information (pkt_encode) is provided in the entry Pkt_encode; such information is attached to the L2CAP as the last quadword of the buffer.

After an L2CAP packet is received, the starting point of the location where data from the L2CAP packet is to be stored is determined using the data total length field in the same manner as in the reception of ACL data packets. With the above modification, L2CAP data packets may be handled in the same manner as that described above for ACL data packets. Still other types of packets may be handled with a similar modification as that described above for L2CAP-type packets.

As described above, since the performance requirement of the microprocessor is much reduced by using the invention herein, it is possible to combine the host and host controller in many different ways in reference to Figs. 14A through 17B. Thus, CPU 302 may therefore be the same CPU of a host device, such as that of a personal computer, cell phone, digital camera, printer, digital assistant, or other intelligent devices.

### Dual Pointer Buffer Control

In order to increase the performance in transmission and receipt of data buffers, it is advantageous to provide two or more buffers to support the transmission or receipt for each connection to a corresponding Bluetooth device. One possible solution is to assign two or more buffers permanently to support each of up to seven master-slave connections for the transfer of ACL data packets or LMP data packets. To conserve buffer resources, it is desirable for the up to seven master-slave connections to share buffers for supporting the transfer of ACL data packets. Another aspect of the invention is directed to a dual pointer buffer control scheme whereby the microprocessor and hardware circuits such as the packet generator share control of the buffers in a manner that avoids confusion and maintains the correct order of transmission and receipt of the data packets. In the preferred embodiment, two buffers are assigned to support the transmission or receipt of ACL data packets for data transfer through a connection.

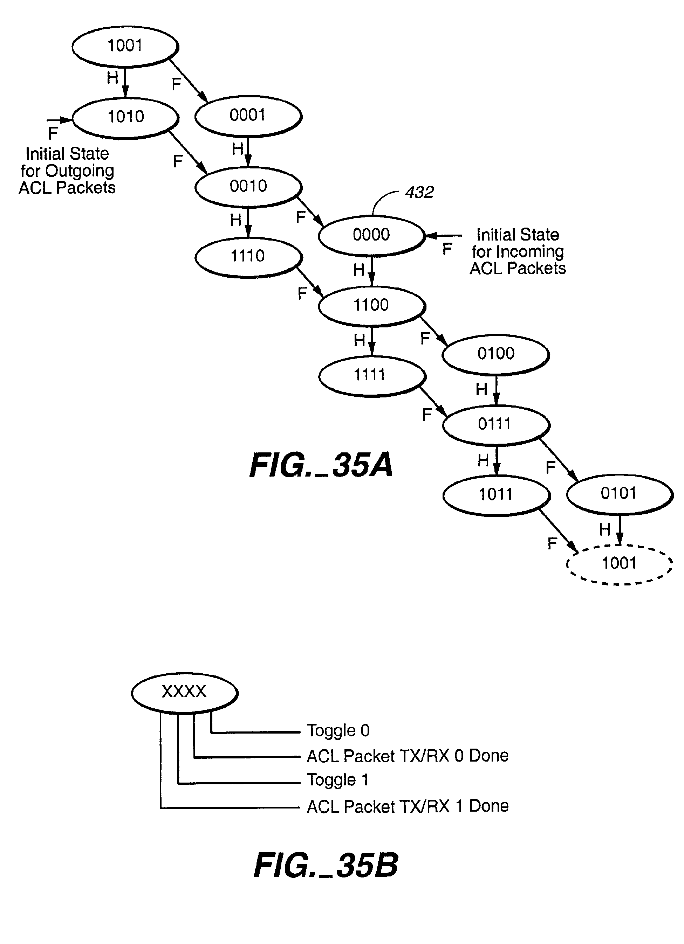

As shown in Fig. 32, each of the two sets of registers 402, 404 (one set indicated by OUT for supporting transmission of packets, and one set indicated by IN for supporting receipt of packets) in the event table contains a done bit ("dn") and a toggle bit ("tg"). Thus, each of the two registers 402, 404 in the two sets may be an eight-bit register with two bits "dn" "tg" and the remaining six bits for use as pointers to the location of the buffer among buffers 306b that has been assigned to support the connection. The two pairs of "dn" "tg" bits of registers 402, 404 form a state in Fig. 35A which is a state diagram illustrating the various states of the two pairs of done and toggle bits in the registers 404, 402 to illustrate the control scheme. The definition of the states in Fig. 35A in relation to "dn" "tg" bits in the registers 404, 402 is illustrated in Fig. 35B. As shown in Fig. 35A, the transition between certain states indicated can only be performed by the microprocessor executing firmware as indicated by the letter "F". Other transitions may only be carried out by hardware as indicated by "H" in the figure.

When the done bit of one of the two registers 402, 404 is of the value 1, this means that only the firmware can update the pointer in the register and hardware can only read the register. When the done bit is 0, this means that only hardware can update the pointer in the register and firmware can only read the byte in the register. The toggle bit is changed by the hardware every time hardware finishes a task and the firmware does not change the toggle bit at all.

For convenience in description, when it is stated herein that firmware does a certain task, it means that the CPU does the task by executing software or firmware stored in ROM 308. Furthermore, firmware as used in this application throughout means software that is stored in ROM 308, which may be programmable or not programmable, or partly programmable and partly not programmable. ROM 308 may reside in a single semiconductor chip as the other circuits in Fig. 18, or may be a separate unit apart from such circuits, or part of ROM 308 may reside in a single semiconductor chip as the other circuits in Fig. 18 and the remainder part outside the chip as a separate unit. For convenience in description, when it is stated herein that hardware does a certain task, it means that the Bluetooth module 310 of Fig. 18, which includes the circuits of Fig. 19, does the task, with the assistance of registers 312 and sometimes in coordination with firmware where necessary.

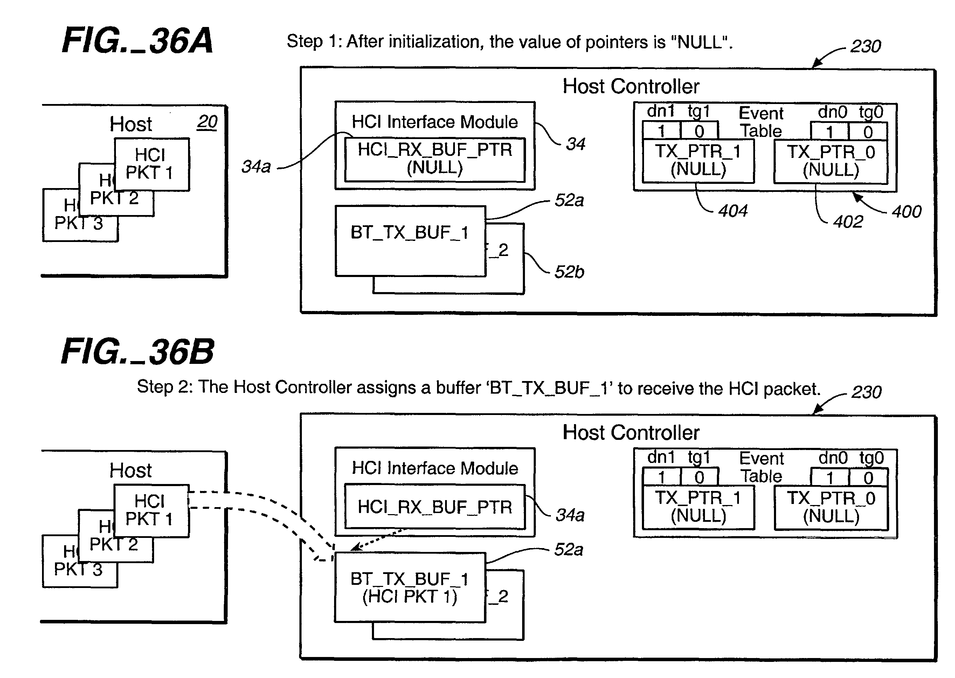

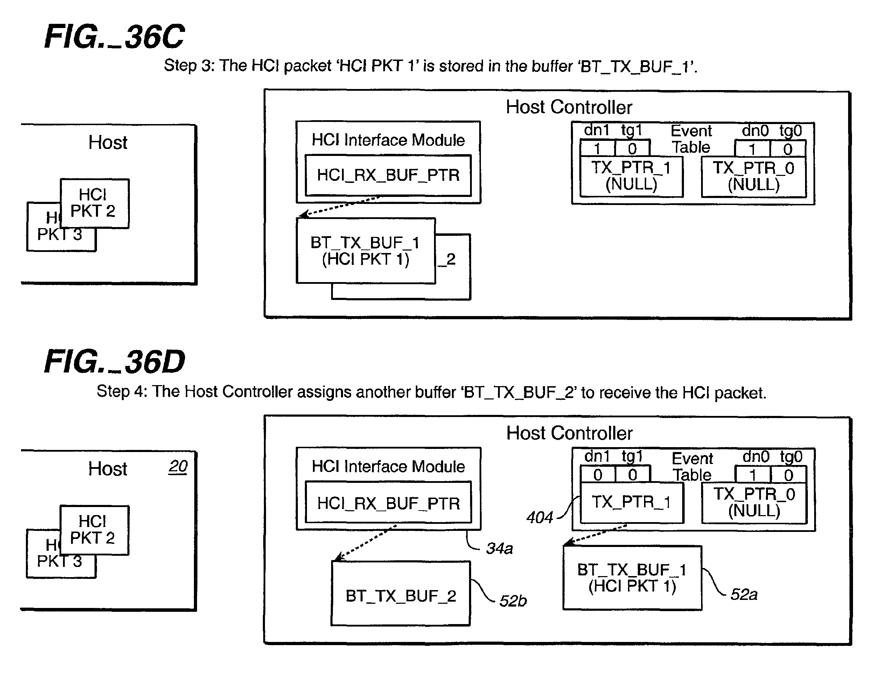

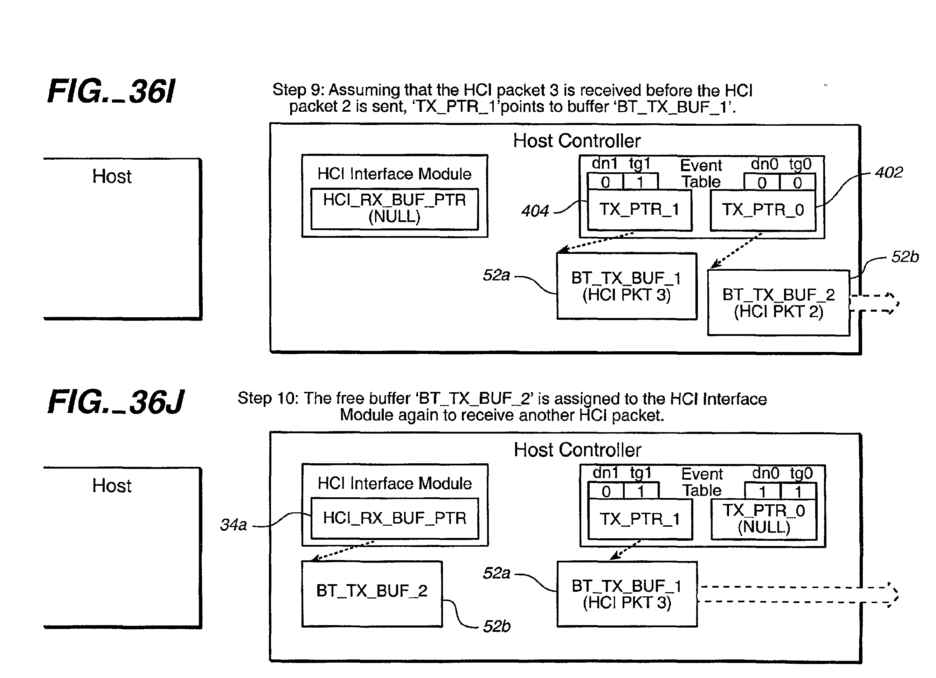

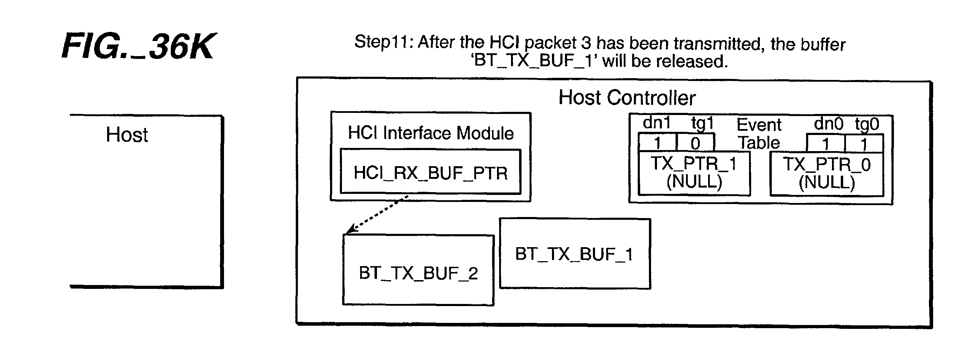

Figs. 36A-36K are schematic views illustrating an example using the dual pointer buffer scheme of Figs. 35A, 35B in supporting the transmission of data packets. As shown in Fig. 35A, the beginning state for the transmission of Bluetooth ACL data packages is "1010." This means that the done bits in both registers 402, 404 are of the value "1" and the toggle bits are both of the value "0." This is indicated in Fig. 36A in the event table entry 400 also shown in Fig. 32. Furthermore, at the initial state, no buffer is assigned so that both registers 402, 404 contain a null pointer (a fixed preassigned value) as indicated in Fig. 36A. At the initial state, the HCI receive buffer pointer in a register 34a in the HCI interface controller 34 also contains a null pointer. Therefore, to initialize, the microprocessor assigns a buffer 52a among the buffers 306b and writes the address of such buffer in the register 34a as shown in Fig. 36B. As shown in such figure, the address or pointer in register 34a points to buffer 52a that has been assigned by the microprocessor. The host 20 then transfers an HCI ACL packet 1 (labelled HCI PKT 1 in Figs. 36B, 36C) to the host controller and the controller stores the packet in buffer 52a that has been assigned as shown in Fig. 36C. The microprocessor then executes the firmware stored in ROM 308. and transfers the address of buffer 52a to register 404. The firmware 35 converts the buffer format from the conventional HCI ACL format shown in Fig. 3A to that shown in Fig. 9A. The microprocessor then changes the value of the done bit in register 404 from 1 to 0 as shown in Fig. 36D.

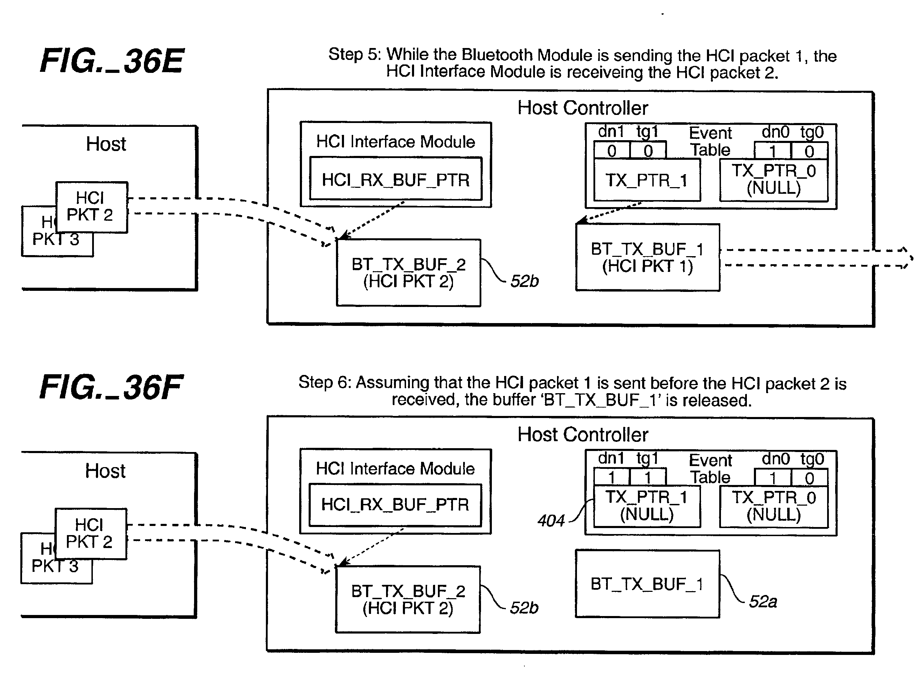

The firmware also writes the address or pointer for buffer 52b into register 34a as shown in Fig. 36D. A second HCI ACL packet 2 (labelled HCI PKT 2 in Figs. 36E, 36F) is then transferred from the host to buffer 52b. At the same time, the packet generator forms Bluetooth ACL data packets in the manner described above by retrieving data from buffer 52a and the bitstream processor sends the packets to a corresponding Bluetooth device as shown in Fig. 36E.

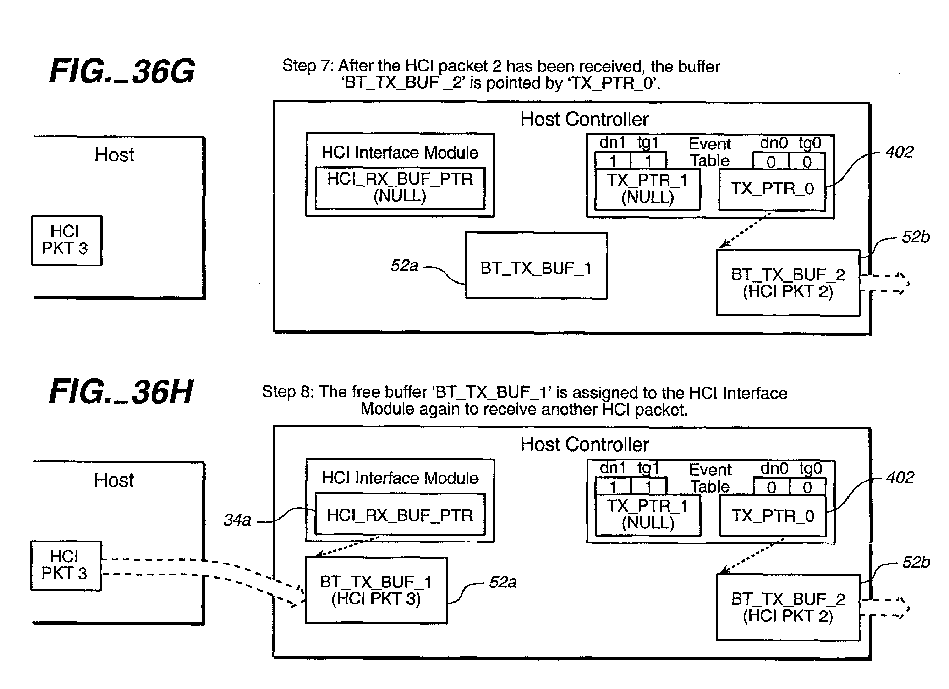

Thus, after all of the data in buffer 52a has been transmitted, the packet controller and selector 320 generates a "buf_tx_rx_done" signal and releases buffer 52 in a manner described below. Controller and selector 320 also changes the done and toggle bits of register 404 from 0 to 1 as shown in Fig. 36F and changes the pointer value in the register to null. Buffer 52a is therefore now available to support another data transfer. Meanwhile, firmware releases buffer 52b and writes a null pointer into register 34a and writes the address of pointer of buffer 52b to register 402 and changes the done bit in such register from 1 to 0 as shown in Fig. 36G. The hardware in the controller 230 then causes the data in buffer 52b to be transmitted in Bluetooth ACL data packets. As shown in Fig. 36H, the firmware assigns buffer 52a to receive a third HCI ACL packet 3 from the host and writes the address of such buffer into register 34a. Then the firmware writes the address of buffer 52a into register 404 and changes the done bit in the register from 1 to 0 as shown in Fig. 36I. When all of the data in buffer 52b has been transmitted, it is released and appropriate signals are generated to change both the done and toggle bits in register 402 from 0 to 1 as shown in Fig. 36J. This buffer is then again assigned by firmware and its address written into register 34a. Meanwhile, data is being transmitted out of buffer 52a. After all of the data in buffer 52a has been transferred, the appropriate signals are again generated as described above to release it, and the done and toggle bits of register 404 are again toggled as shown in Fig. 36K. This process is repeated to transmit more data packets.

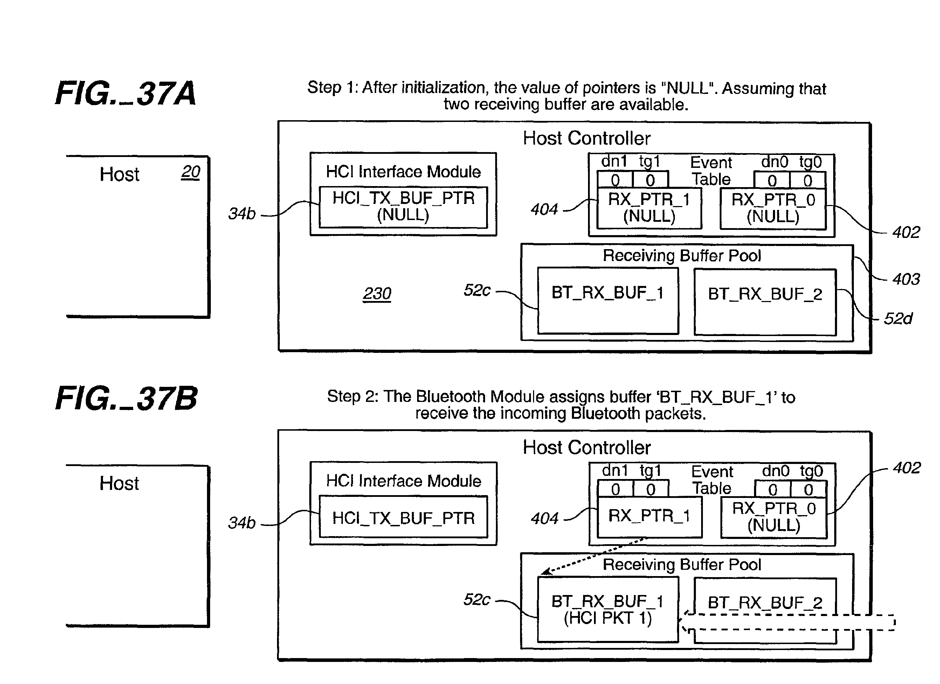

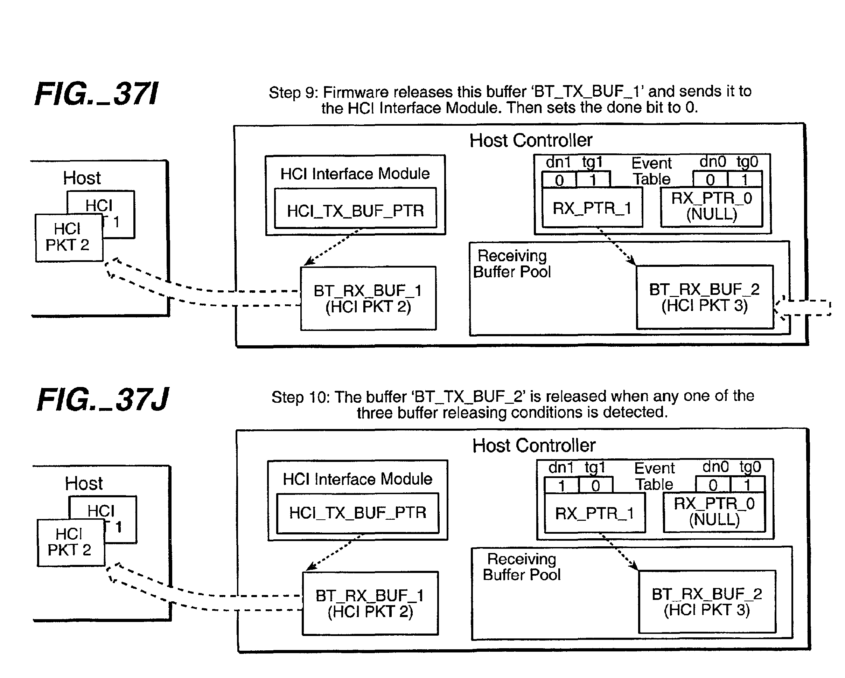

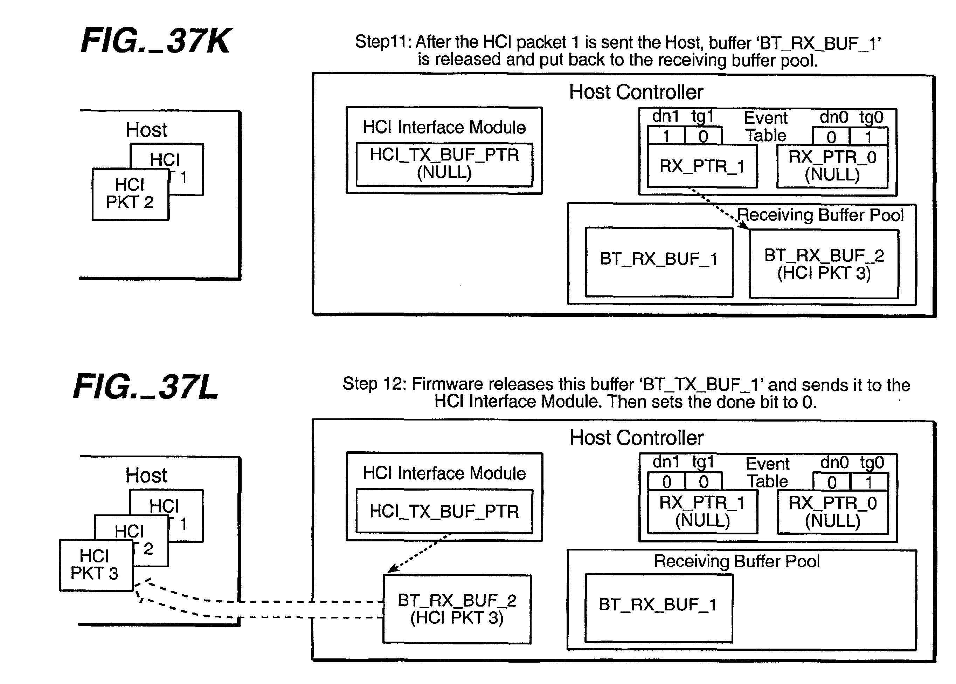

As described above in reference to Figs. 36A-36K, during the transmission process, the state of the done and toggle bits of Fig. 35B in ellipses such as 432 changes from 1010 to 0010 by the firmware and then to 1110 by hardware to 1100 by means of firmware, to 0100 by firmware, to 0111 by hardware and then to 1011 by hardware. A similar path may be traced for Figs. 37A-37L.

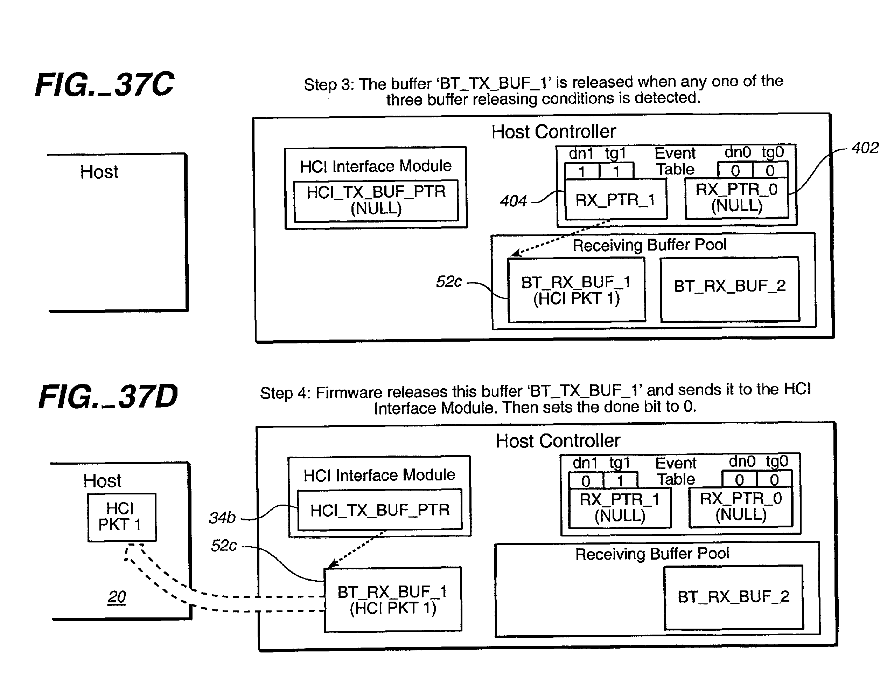

In reference to Figs. 37A-37L, when a Bluetooth ACL data packet is received by the host controller 230, and assuming two receive buffers 52c, 52d are available in a receiving buffer pool 403 to support the reception, the buffer allocation logic 318 in Fig. 19 assigns one of the two buffers, such as buffer 52c, to support the connection. Logic 318 passes the address of buffer 52c to controller and selector 320 which then writes the address into register 404 as shown in Fig. 37B. The pointer in register 402 remains the null pointer. Buffer 52c is then used to store the data that is extracted from a received ACL packet by the packet decomposer 62b as described above. After buffer 52c has been filled, or when an expiration time of the buffer has passed (described in detail later), or when a new L2CAP packet is received by controller 230, buffer 52c is then released and the packet controller and selector 320 will toggle the done and toggle bits of register 404, thereby changing them from 0 to 1 as illustrated in Fig. 37C. Firmware then takes over buffer 52c and writes its pointer into register 34b. The HCI ACL packet is then transferred from buffer 52c to the host 20 as illustrated in Fig. 37D. Firmware also writes the null pointer into register 404 and toggles the done bit in the register from 1 to 0, indicating that register 404 is now available to hardware to store the pointer to another buffer.

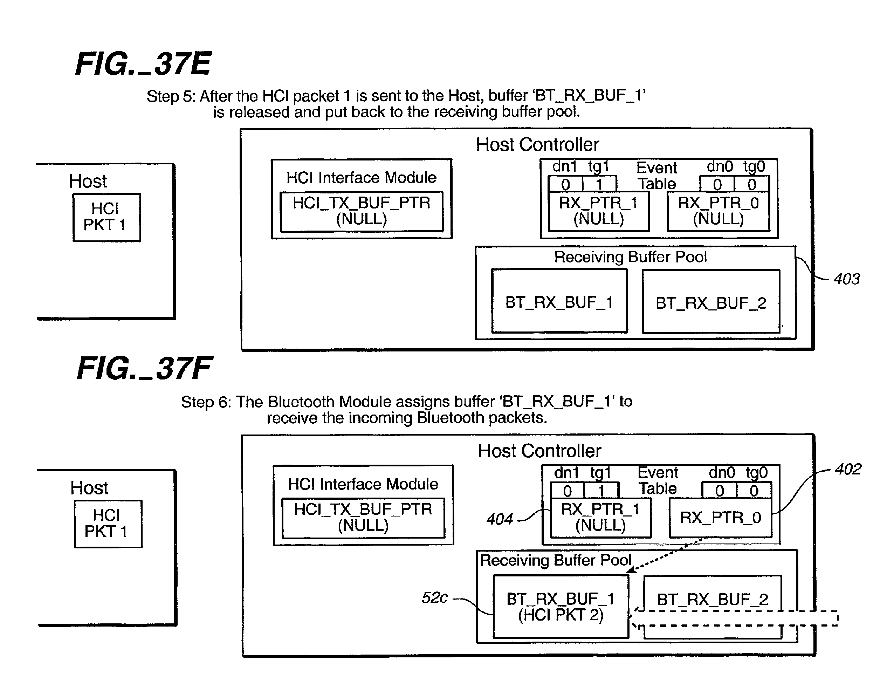

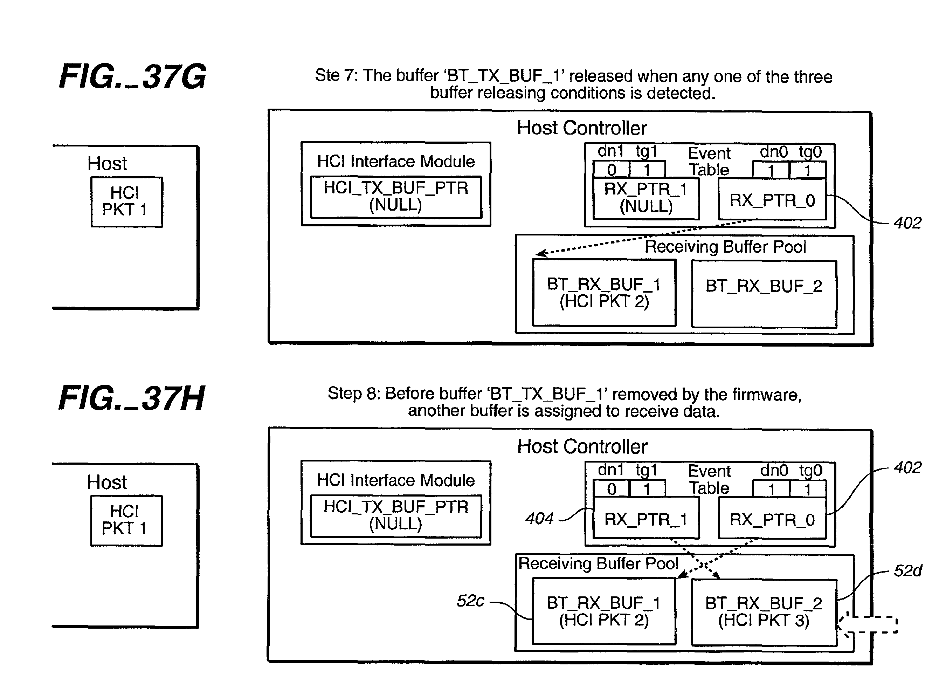

After the packet is sent to the host, buffer 52c is released by the firmware and put back into the receiving buffer pool 403, again available to support receipt from the corresponding Bluetooth device as shown in Fig. 37E. As shown in Fig. 37F,another Bluetooth ACL data packet is received, and buffer 52c is again selected by the allocation logic 318 to service the reception. This time, however, the address of buffer 52c is written into register 402 instead of register 404. When any one of the above-listed three buffer-releasing conditions is detected, buffer 52c is released, and the controller and selector 320 toggles the done and toggle bits of register 402, changing them from 0 to 1 as illustrated in Fig. 37G. To support the receipt of another Bluetooth ACL data packet, buffer 52d is selected by logic 318 and its pointers written into register 404 as illustrated in Fig. 37H. Thus, when any one of the three buffer-releasing conditions is detected, a signal "buf_tx_rx_done" is generated to change the toggle and done bits, and firmware takes over the buffer 52c and causes the packet stored therein to be transmitted to the host 20 as shown in Fig. 37I. Meanwhile, to support the receiver of another Bluetooth ACL data packet, the address of buffer 52d is written into register 404. This process continues as shown in Figs. 37J-37L and beyond for receiving data packets and sending them to the host.

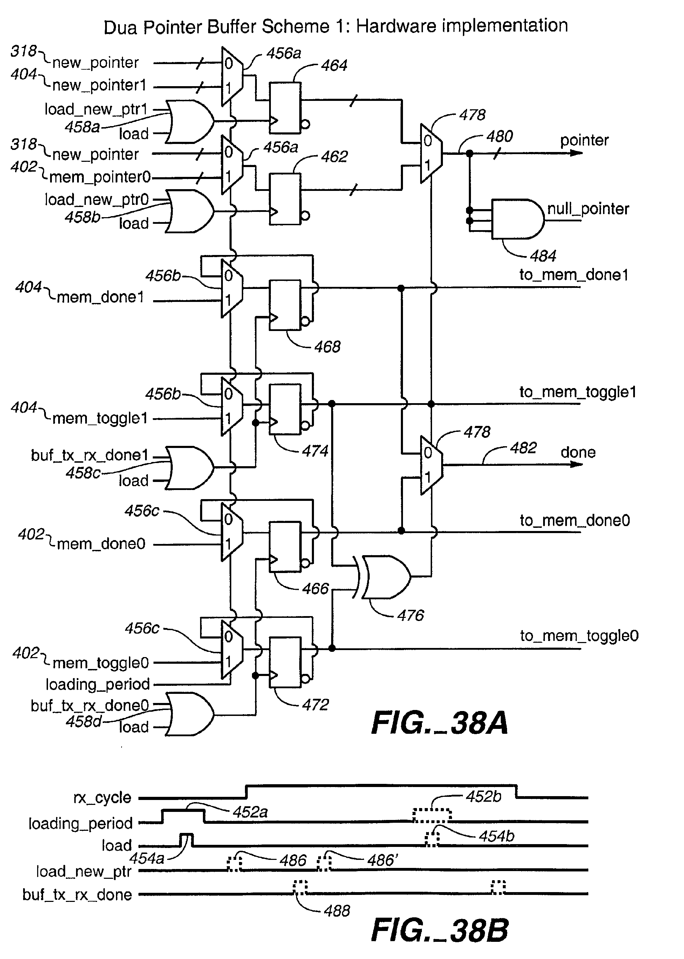

As noted above, whenever hardware completes the task for the particular buffer during transmission or receiving Bluetooth ACL data packets, the controller and selector 320 toggles the done and toggle bits of the particular register in the event table involved in keeping track of the different states in Fig. 35A. The hardware circuits in the controller and selector 320 for controlling the done and toggle bits is illustrated in the schematic circuit diagram of Fig. 38. The operation of the circuit is described for the situation when a Bluetooth ACL data packet is received. As part of the initialization process in receiving data packets, the controller and selector 320 generates a loading_period signal 452a and a load signal 454a. The loading_period signal 452a is applied to the six multiplexers 456a, 456b, 456c so that when signal 452a is high or of value 1, the 1 input is selected at the output of the multiplexers, and when it is low or 0, the 0 input is selected. When a load signal 454a is also asserted high, the outputs of OR-gates 458a, 458b, 458c, 458d go high, thereby causing the memory pointer 1 and memory pointer 0 to be latched into latches 462 and 464, respectively. The pointer value in register 402 in Fig. 32 is routed to the memory pointer 0 input node (mem _pointer0), and the pointer value in register 404 of Fig. 32 is routed to memory pointer 1 input node (mem_pointer1) in Fig. 38. In this manner, the pointer values of registers 402 and 404 are loaded into latches 462, 464, respectively. In a similar manner, the toggle and done bits in registers 402 and 404 are also latched into the remaining four latches, where latches 466 and 468 store the done bits of registers 402 and 404, respectively, and latches 472 and 474 store the toggle bits of registers 402 and 404, respectively. As shown in Fig. 35A, upon initialization for incoming ACL packets, the two toggle bits are both zeroes, so that the outputs of the two latches 472 and 474 are both zeroes. The output of the XOR-gate 476 is therefore zero. The output of the gate 476 is applied to multiplexers 478 to select between the outputs of latches 464 and 468. When the output of gate 476 is 0, this causes the pointer value in register 404 and the done value in register 404 to be selected as the pointer 480 and done 482 outputs. These values can then be used by hardware. For example, the allocation logic 318 may provide the pointer or address value to the controller and selector 320, which in turn writes the address to the appropriate one of the two registers 402, 404 selected by the gate 476.

In the preferred embodiment, whether a pointer value is null is indicated when three of the bits in the pointer are 1. Therefore, such three of the bits of the output 480 are supplied to an AND-gate 484 to determine whether the pointer value in register 404 is null. If the pointer value is not null, the buffer pointed to by this pointer may then be used to support the receiving of Bluetooth ACL data packets. If the output 480 indicates a null pointer as determined by the AND-gate 484, then a new pointer will need to be selected. In this instance, controller and selector sends a signal to allocation logic 318 which selects a new pointer, which is provided at input node new_pointer in Fig. 38. A load_new_ptr 1 signal 486 is generated and applied to the OR-gate 458a. At this point, the loading_period signal is low so that the zero input of the multiplexers 456a is selected, thereby passing the new_pointer to latch 464. The load_new_ptr 1 signal is high causing the new_pointer to be latched to latch 464. The inputs of XOR gate 476 are initially equal , so that gate 476 selects the zero input of multiplexer 478 which passes the new_pointer to become the pointer for the receive buffer that is selected by logic 318 to receive the incoming Bluetooth ACL data packet.

When one of the three buffer-releasing conditions exists for one of the two buffers, controller and selector 320 causes a buf_tx_rx_done signal 488 to be generated for such buffer. In the example below, it is assumed that the buffer pointed to by new_pointer or mem_pointer 1 connected to gate 458a (and not new_pointer or mem_pointer 0 connected to gate 458b) is to be released. Therefore, a buf_tx_rx_done 1 signal is generated. When the signal buf_tx_rx_donel is asserted, the output of OR-gate 458c goes high. This happens when the loading_period signal is low or 0, so that the 0 input of multiplexers 456b are passed to latches 468 and 474. Prior to the assertion of buf_tx_rx_donel, the outputs of registers 468 and 474 are inverted from 0 to 1 by the bubbles at the latches and sent back to the zero inputs of multiplexers 456b. These 1 values are latched to latches 468, 474 by the assertion of buf_tx_rx_done1. The outputs of the latches 468, 474 are applied to change the done and toggle bits of register 404 from 0 to 1. The done and toggle bits of register 402, however, remain unchanged since the signal buf_tx_rx_done0 is not asserted. While the operation of the circuit in Fig. 38A is described for the case when the done and toggle bits are 0 starting out, the circuit will cause the done and toggle bits of the buffer that is released by the assertion of the buf_tx_rx_done0 or buf_tx_rx_donel to toggle in the same manner as that described above, where not both of these bits have the value 0. As described above, the done bits in registers 402, 404 indicate whether the firmware or the hardware may change the value of the pointers in these registers.

Since two buffers are used to support a single connection, it is possible to be able to distinguish between the order of receipt or transmission of the data packets in the two buffers so that data is transmitted or received in the same order before such data reaches the two buffers. For example, when data packets are received from another Bluetooth device and stored into the two buffers, the order in which the packets are subsequently retrieved from the buffers for transmission to the host is the same as the order by which they are stored into the buffers. Similarly, when data from the host is stored into the two buffers, the order in which the packets are subsequently retrieved from the buffers for transmission to another Bluetooth device is the same as the order by which they are stored into the buffers. This is accomplished by means of the toggle bits in registers 402 and 404 and the logic circuit of Fig. 38, especially by means of the XOR gate 476. In general, if the toggle bits at the output of registers 472 and 474 are different, the output 480 selects the pointer 0 in register 402, and when the toggle bits have the same value, the output 480 selects the pointer 1 in register 404.

As described below, when it is determined that the buffer pointed to by the output 480 is insufficient to store the payload of an incoming data packet, a new buffer becomes necessary. At such event, another _load new_pointer signal 486 is generated, and the above-described process for signal 486 is repeated in order to obtain a new receive ACL buffer.

From the description above, it is noted that the Bluetooth ACL data packet received frequently is accompanied with an acknowledgment of receipt of a Bluetooth data packet received. In such event, it may be preferable during the receipt cycle to be able to identify which of the two particular buffers supporting packet transmission is being used so that, if necessary, the next starting pointer in the transmit buffer may be set to the value of the previous starting pointer if a negative acknowledgment is received or no acknowledgment is received. This is accomplished by means of loading_period signal 452b and 454b. The same logic circuit shown in Fig. 38A may be used for this purpose, except that the pointer, done and toggle bit values that originate from registers 402, 404 now originate from the transmit version of these registers rather than the receive version. The last buf_tx_rx_done signal in Fig. 38B permits the transmit buffer to be released upon receiving acknowledgement of the successful transmission of the last packet from the transmit buffer.

The logic circuit of Fig. 38A may also be used for identifying pointers to buffers and to control the done and toggle bits of the event table of registers 402 and 404 used for supporting transmission of data packets. Since a buffer has already been assigned during transmission, there is no need to employ the load_new_ptr signals. Furthermore, in the transmit cycle, there is no need to handle acknowledgments. Therefore, in the timing diagram Fig. 38B, when the diagram refers to a transmit cycle, the receive cycle indicated becomes the transmit cycle, which is preceded by the loading_period signal 452a and the load signal 454a. All other signals indicated in dotted lines in Fig. 38B are unnecessary in the transmit cycle.

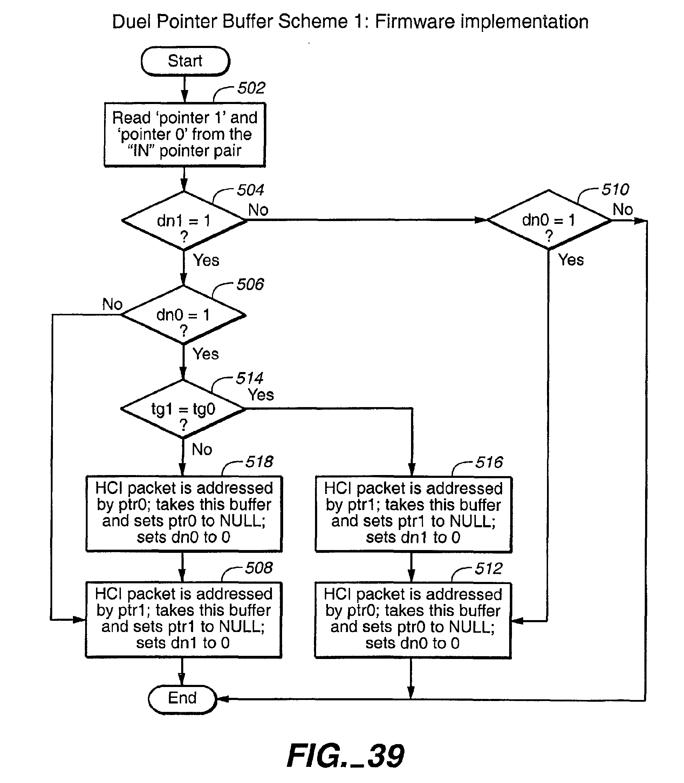

Pointers in registers 402, 404 are used by both hardware and firmware. Use of the done and toggle bits in the two registers permits such dual control without causing conflicts. The firmware implementation of the dual pointer buffer scheme that enable this to happen without conflict with hardware buffer use will now be described in references to Figs. 39-41. In these three figures, the pointer values in pair of registers 402, 404 used to support the receiving of incoming HCI packets are referred to as "IN" pointer pair, and the pointer values in another pair of registers supporting the transmission of HCI packets are referred to as "OUT" pointer pair.

The process by which buffers are requested and assigned are described above. The process by which ACL buffers that are released by hardware is described above by reference to Figs. 38A, 38B. The process by which the ACL buffers are handled by the firmware will now be described by reference to Figs. 39-41.

When the controller and selector 320 releases an ACL buffer, such as the case in Fig. 37C, firmware will perform the following functions. The firmware will write a null pointer into the register 404 and changes the done bit in the register from 1 to 0. This indicates to hardware that the pointer in register 404 is now available for it to use. The firmware then writes the address of buffer 52c released by hardware into register 34b and handles the transfer of data from the buffer to the host 20, as shown in Fig. 37D. Fig. 37C illustrates a situation where only one of the two registers 402, 404 contains a pointer to a buffer that is to be handled by firmware. Where both registers contain pointers pointing to two buffers that are to be handled by firmware, the firmware will need to determine the order for retrieving the data in the two buffers and sending them to the host. The order by which the firmware retrieves and sends the data should be the same order that the data is stored in the two buffers by hardware. This is accomplished by means of the two toggle bits in the two registers 402, 404. The way firmware handles the two toggle bits matches the way it is handled by the hardware logic of Figs. 38A, 38B, such as by XOR gate 476.

Fig. 39 is a flow chart illustrating a process by which firmware handles an ACL buffer that has been released by hardware during a process when packets are received by the baseband controller. As shown in Fig. 39, the firmware reads the two pointers from the two registers 402, 404 (block 502). If the done bit of only one of the two registers is a 1, so that only one buffer needs to be handled, firmware will take the buffer pointed to by the pointer of the register whose done bit is a 1, sets the pointer in such register to null and changes the done bit of such register from 1 to 0. Thus, if the done bit of register 404 is a 1, but the done bit of register 402 is a 0 (diamonds 504, 506), firmware proceeds to block 508 to take the buffer pointed to by the pointer in register 404, sets the pointer in 404 to null and changes the done bit in register 404 from 1 to 0.

Then as noted above, firmware will write the address of the buffer taken into register 34b in the HCI interface module and transfer the data in the buffer taken to the host 20. If the done bit of register 404 is a 0, but the done bit of register 402 is a 1 (diamond 510), firmware proceeds to block 512 to take the buffer 22 pointed to by the pointer in register 402, sets the pointer in the register to null and changes the done bit in register 402 from 1 to 0. The firmware then writes the pointer of the buffer taken into register 34b and transfers the data therein to the host.

If the done bits of both registers are I and the two toggle bits have the same value (diamond 514), firmware proceeds to block 516 and takes the buffer pointed to by the pointer in register 404, sets the pointer therein to null and turns done bit from 1 to 0. Thereafter, firmware proceeds to block 512 and repeats the process for register 402 and the buffer pointed to by the pointer therein.

If the two toggle bits are not equal, however, firmware proceeds to block 518, takes the pointer in register 402, sets the pointer to null and changes the done bit in register 402 from 1 to 0. The firmware then proceeds to block 508 and repeats the process for register 404 and the buffer pointed to by the pointer therein.

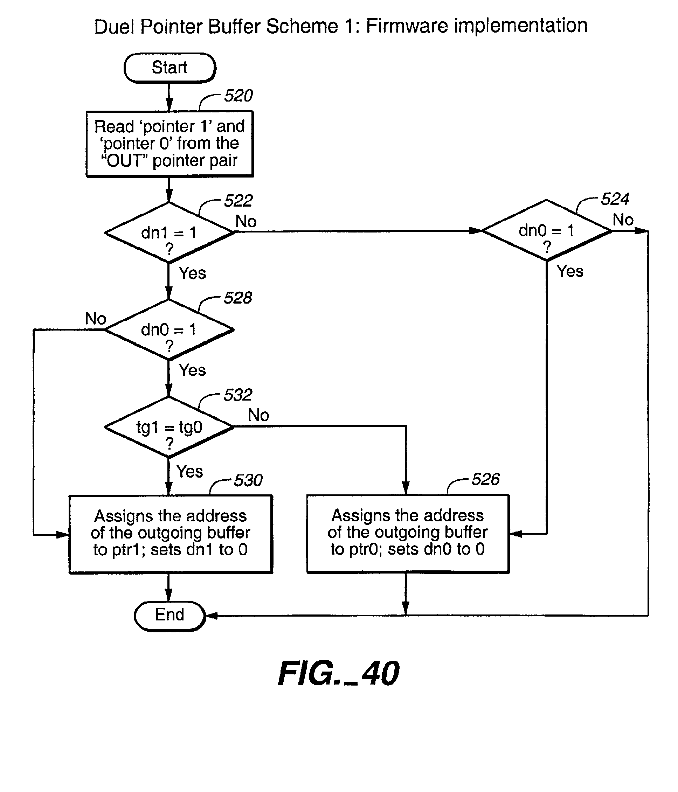

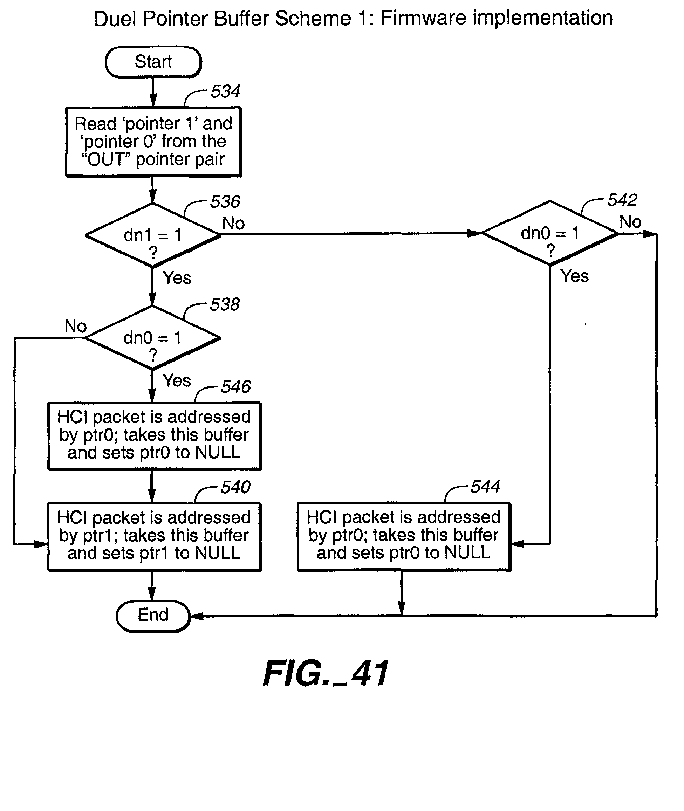

Figs. 40 and 41 refer to the process by which the firmware handles the registers 402, 404 and ACL buffers in the transmission process. Fig. 40 is a flow chart illustrating a process by which firmware handles ACL buffers when each HCI ACL packets are sent from the host to the host controller. Thus, in the transmission process, firmware causes the HCI ACL packet to be stored in the buffer it assigns to as illustrated in Figs. 36A-36K and writes the address of such buffer into register 34a.

Fig. 40 illustrates the process by which firmware decides which pointer to use in registers 402 and 404 used for transmission (OUT). For such purpose, firmware would read registers 402 and 404 (block 520) and checks the done bits in both registers. If the done bit of only one of the two registers is a 1 and the other one is a 0, firmware will simply use the register whose done bit is a 1. Thus, if the done bit of register 404 is a 0, and that of register 402 is a 1, firmware proceeds to use register 402 by writing the address of such buffer into register 402 (diamonds 522, 524 and block 526). If the done bit of register 404 is a 1, firmware checks the done bit of register of register 402. If the done bit of register 402 is a 0, firmware instead writes the address of the buffer into register 404 (diamond 528, block 530). If the done bits of both registers are 1, firmware checks the toggle bits of the two registers (diamond 532). If the toggle bits are equal, firmware proceeds to block 530; otherwise it proceeds to block 526.

Fig. 41 illustrates a process by which firmware handles registers 402, 404 and the buffers pointed to by the pointers in the registers after hardware has completely transmitted the data in the buffers in the data transmission process from the Bluetooth controller to another Bluetooth device. Firmware reads the values of the two registers (block 534) and checks the done bits of the two registers. If the done bit of register 404 is a 1 but that of register 402 is a 0 (diamonds 536, 538), the firmware will take the buffer pointed to by the pointer in register 404, and sets the pointer therein to null (block 540). If the done bit of register 404 is a 0 but that of register 402 is a 1, firmware takes the buffer pointed to by such register and sets the pointer in register 402 to null (diamond 542, block 544). If the done bits of both registers are 1, the firmware takes the buffer pointed to by the pointer in register 402 and sets the pointer therein to null and then proceeds to block 540 (block 546). It is noted that since this operation simply retrieves buffers released by hardware and resets pointers pointing to the released buffers, there is no need to check the toggle bits.

By the dual pointer control scheme of Figs. 38A, 38B and 39-41, the state diagram of the limited number (12) of states in Fig. 35A is achieved. This scheme enables the firmware and hardware to share control of the buffers 306b without conflict, and allows all of the buffers to be used to support data transfer between the controller and any one of the up to seven Bluetooth devices. This reduces the number of buffers required. Furthermore, by using the toggle bits, the scheme allows the system to keep track of and retain the order of the transmission and receipt of the packets.

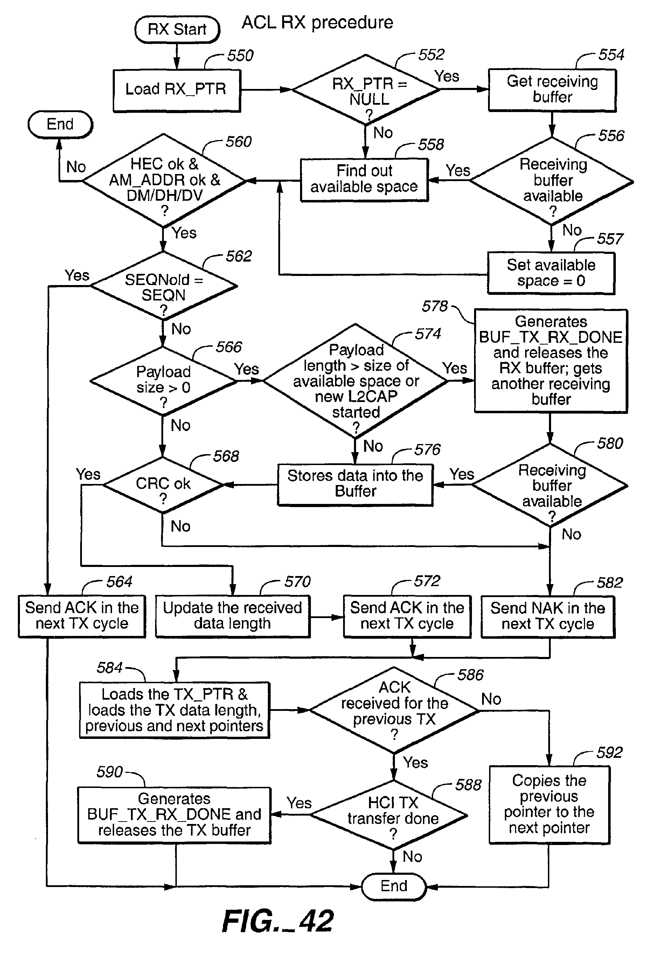

Fig. 42 illustrates the process carried out by the packet controller and selector 320 in receiving Bluetooth ACL data packets. As described above in reference to Fig. 39, pointers to buffers that have been assigned to a receive buffer pool can be monitored by means of registers 402 and 404 supporting the receiving of data packets. Allocation logic 318 selects one of the buffers assigned to the pool by the microprocessor and the controller and selector 320 loads the selected pointer (block 550). If this pointer is null (where no buffer has been assigned), the controller and selector would notify allocation logic 318 to request a buffer (diamond 552 and block 554). If no buffer is available, the available space value in a register in controller and selector 320 is set to 0 (block 557). If a buffer is available, controller and selector 320 checks to see whether the available space in the buffer is adequate for storing the payload from the incoming buffer received (diamond 556, block 558). It also checks the active mode address (AM_ADDR) and header and the type of packet that is received (diamond 560). If any of such information is incorrect, the controller and selector exits. Otherwise, the controller and selector checks to see whether the packet is one that has been transmitted before (diamond 562). If the packet is one that has been transmitted before, the controller and selector 320 sends an acknowledgment in the next transmit cycle (block 564) and exits, since there is no need to store the payload in such packet.

If the packet is not one that has been received before, the controller and selector checks whether the payload size is greater than 0 (diamond 566). If the payload size is 0, it checks to see whether the packet has been correctly received by checking error correction by the bit stream processor 332 (diamond 568). If the packet has been correctly received, the controller and selector updates the received data length in the ACL buffer format 220 in Fig. 9B and sends an acknowledgment in the next transmit cycle (blocks 570, 572).

If the payload size is not 0, the controller and selector checks to see whether the payload length is greater than the size of available space or whether the packet received is a new L2CAP-type packet. If none of the two conditions are true, the controller and selector causes the packet decomposer 62b and module 204 of Fig. 26 to store the payload data into the assigned buffer and proceeds to diamond 568 (diamond 574 and block 576). If the payload length of the packet received is greater than the size of available space in the assigned buffer or if a new L2CAP packet is received, the controller and selector generates a BUF_TX_Rx_DONE signal shown in Fig. 38B, thereby releasing the receive buffer assigned and obtains another receiving buffer from allocation logic 318 and proceeds to check whether the receiving buffer is available (block 578, diamond 580). If a receiving buffer is available, the controller and selector proceeds to block 576; if not, it proceeds to send a negative acknowledgment in the next transmit cycle (block 582).

From blocks 572 and 582, the controller and selector proceeds to load the transmit pointer and loads the transmit data length and the previous and next pointers (block 584). If the received Bluetooth ACL data packet contains an acknowledgment for the previous transmission (diamond 586), the controller and selector checks to see whether the HCI transmission operation by the controller in the data transfer is completed (diamond 588). If the transfer is completed, it again generates the buf_tx_rx_done signal and releases the transmit buffer used for supporting the transmission of data to the other Bluetooth device (block 590). If no acknowledgment is contained in the Bluetooth ACL data packet received, the previous starting pointer is copied to the next starting pointer so that the data packet whose transmission to the other Bluetooth device was unsuccessful will be transmitted in the next transmit cycle (block 592). The controller and selector then exits.

### Expiration Timer

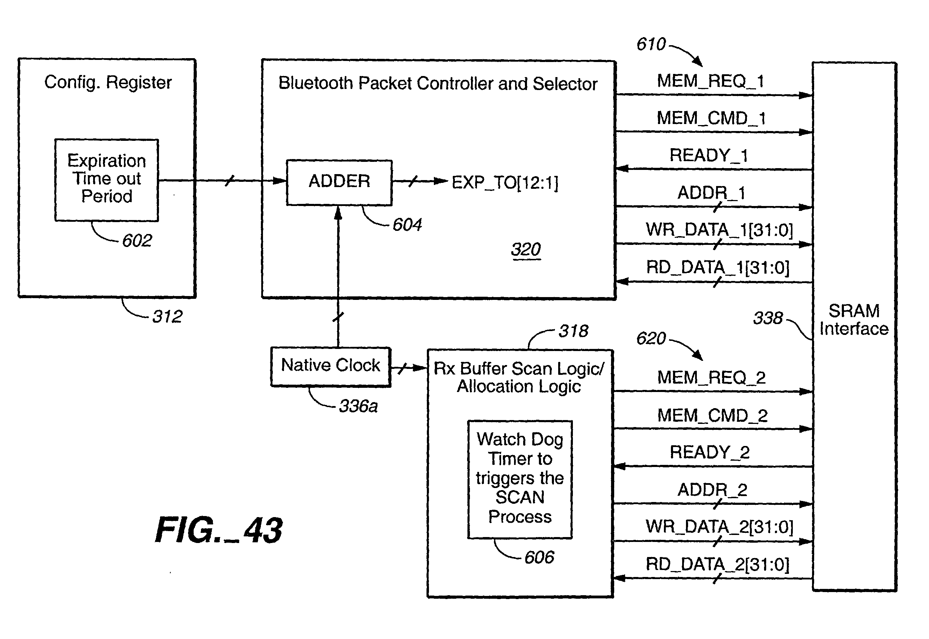

As noted above, an HCI Level ACL receive buffer is released by the hardware back to microprocessor control where one of three conditions occur, one of which is the expiration of an expiration time. This is illustrated, for example, in Fig. 9B. As may happen in noisy environments such as wireless transmission, the poor quality of the channel can cause a number of data packets to be lost or inaccurately transferred. When this happens, it may be desirable to set an expiration time by the end of which the buffer reserved to support such transmission is released back to the microprocessor, so that it can be reassigned for other use. Fig. 43 is a block diagram illustrating an expiration timeout scheme whereby ACL receive buffers may be released upon expiration timeout.

As shown in Fig. 43, configuration register 312 includes an expiration timeout period register 602. The microprocessor programs this register and writes a time period during which the packet decomposer and packet/assembly/segment module 204 may access and use an ACL receive buffer. The value of the expiration timeout period in register 602 is read by controller and selector 320 and is added by an adder 604 in the controller and selector to the value of the native clock 336a to provide the actual expiration time to be written into an HCI ACL receive buffer that has been assigned to support the receipt of data as illustrated in Figs. 37A-37L (by writing pointers into register 402, 404). The writing of the expiration time into the receive buffers is performed through control signals in the control bus 610 as shown in Fig. 19, where the control bus includes the six control signal lines shown in Fig. 43. The six signal lines in the control bus 610 connect the SRAM interface 338 and the controller and selector 320 where the writing and reading of data is controlled by means of memory controller 304 in a conventional manner.

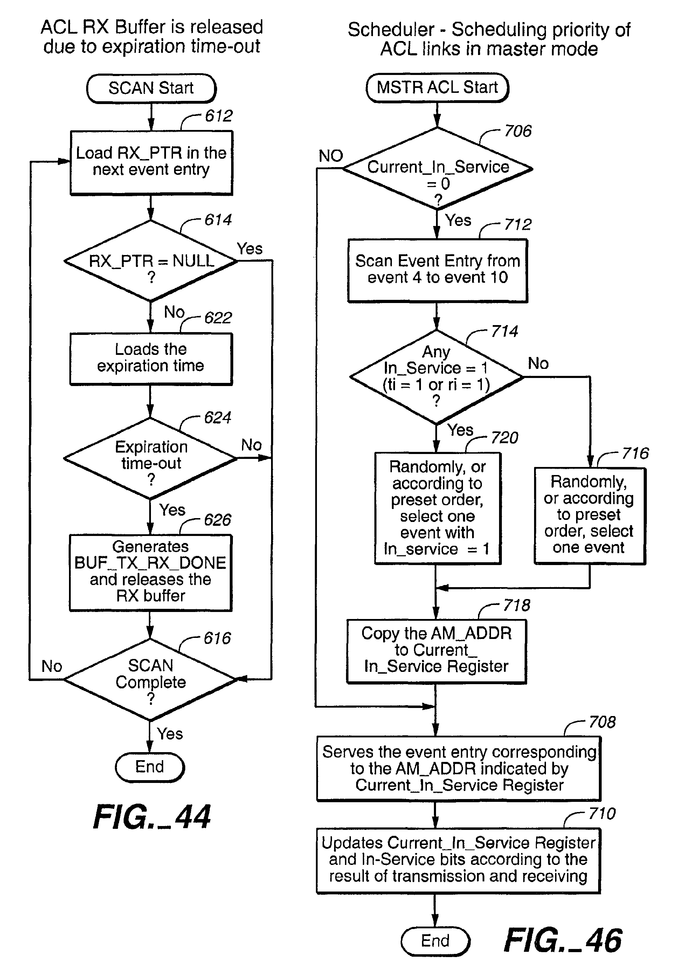

Periodically, RX buffer scan logic/allocation logic 318 would scan the ACL buffers 306b in the receive pool 403, or only those receive buffers for which the pointers in registers 402, 404 are not null, and for which the corresponding done bits are 0, and examine the buffer releasing expiration time in the first quadword in format 220 of the ACL buffer as shown in Fig. 9B. If the scan logic 318 determines that the expiration time has expired, it will inform the controller and selector 320 which will then cause the particular ACL buffer to be released. Scan logic 318 contains a watchdog timer 606 to trigger the above-described process at a preset time interval. Thus, when the watchdog timer generates a pulse periodically to start the scan, the scanning process carried out by scan logic 318 is illustrated in reference to the flowchart of Fig. 44.

When the scan logic is triggered by the watchdog timer to start the scanning process, the scan logic accesses each of the seven event tables supporting master-slave HCI data transfer. The scan logic scans through the pairs of registers 402, 404 in each of the event entries and loads a receive pointer in the event table entry for one of the connections (block 612). If the receive pointer is null, this means that no buffer has been assigned to support this connection, and the scan logic checks to see whether all of the event entries supporting the master-slave connections have been scanned (diamond 614). If all of the event entries have been scanned, the scan logic exits; otherwise, it proceeds to the next event entry and loads the receive pointer in the next event entry for a different master-slave connection and repeats the process. If the receive pointer is not null and the corresponding done bit is 0, scan logic 318 loads into an internal register the expiration time in the ACL buffer shown in Fig. 9B through control lines 620 in Figs. 19 and 43 (block 622) and checks whether the expiration time has expired (diamond 624). If the expiration has timed out, the scan logic causes a buf_tx_rx_done signal to be generated in the manner described above and releases the receive ACL buffer (block 626). If the expiration time has not timed out, scan logic proceeds to diamond 616 to check whether all of the event entries for the seven master-slave connections have been scanned. In the above process, if it turns out that a buffer whose expiration time has expired is being used to support a master-slave connection, scan logic 318 will not generate the buf_tx_rx_done signal to release the buffer even though its expiration time has expired.

### Scheduler

When data is transferred between a Bluetooth device and two or more other devices, not all of the connections may be active at any one time. However, since the Bluetooth device can only handle communication with one particular device at one time, the way the various connections are handled in time may impact the efficiency of data transfer. For example, one way to service all the connections is to service all of the connections in a fixed order. However, if little or no data is transferred in some of the connections while other connections are heavily used in data transfer, the above-described fixed order protocol may not be the most efficient, since the time taken for servicing connections with little or no data transfer will be wasted, whereas the connections with heavy data loads will have to wait in turn, thereby slowing down the data transfer. Another aspect of the invention is based on the recognition that bandwidth can be more efficiently utilized if the bandwidth utilization can be monitored, and connections that are utilized more efficiently will be given higher priority when determining which connection is to be served in the next time slot.

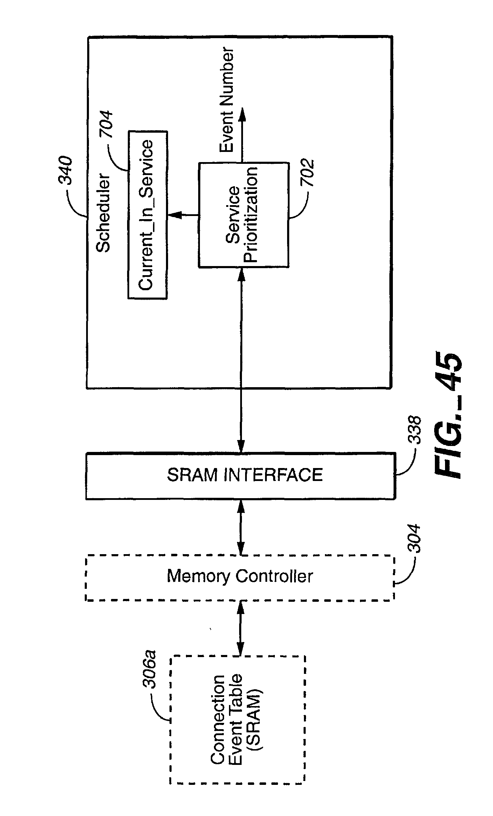

In the preferred embodiment, this task is performed by the scheduler 340 of Figs. 19 and 45. Fig. 45 is a block diagram of some of the components in Fig. 19 to illustrate this aspect of the invention. Fig. 46 is a flowchart illustrating the operation of the scheduler 340 of Fig. 45. As shown in Fig. 45, scheduler 340 includes a service prioritization block 702 and CURRENT_IN_SERVICE register 704. Although not illustrated in Fig. 32, each event entry supporting one of the up to seven master-slave connections includes an in-service bit to indicate whether the connection is in use in actually transferring data. The scheduler 340 scans the event table 306a and determines which event is to be serviced at the beginning of each time slot. Register 704 can be a three-bit register for storing the address of the Bluetooth device currently in communication with the Bluetooth controller and which is currently being used to send data where the payload length is not 0. Upon initialization, register 704 is set to 0. When the value of register 704 is 0 and the current transmission contains sufficient payload data, the address of the Bluetooth device currently in communication with the Bluetooth controller 230 will be written into the register 704. When the value of register 704 is not 0 and the current transmission does not transfer data, the value of the register is set to 0. The in-service bit in each of the event entries of the event table 306a will be updated each time a transmission or receiving cycle is completed. The in service bit is set to high when the transfer has sufficient data and is set to low otherwise. The operation of the service prioritization block 702 is now illustrated in reference to Fig. 46. This routine is particularly useful for ACL transfer in the master mode.

Thus, block 702 first checks register 704 to determine whether it has been set to 0 (diamond 706). If it is not, this indicates that the connection that is being serviced in the current time slot has sufficient data so that bandwidth utilization is improved by continuing to service this particular connection. Therefore, block 702 proceeds to block 708 so that the scheduler 340 would allocate the next time slot to serve the connection in service in the current time slot. This is done by servicing the event entry corresponding to the address indicated in register 704 (block 708). The scheduler 340 obtains the result of transmission and receiving from controller and selector 320 and updates register 704 according to the result of transmission and receiving in the next time slot (block 710). Thus, if for some reason the connection being serviced in the next time slot encounters problems so that a data packet is not correctly transmitted or received either in the next time slot or in the preceding time slot, block 702 may reset register 704 to 0.

If, however, register 704 has been set to 0, block 702 will scan event entries for event 4 to event 10 that are used to service the up to seven master-slave connections (block 712). Block 702 checks the in-service bits ti or ri in the event entries from event 4 to event 10 to determine whether the service bits are 1 or 0. If none of the service bits is a 1, block 702 may randomly select one of the seven events, or select one event according to a preset order (block 716). The scheduler then informs the controller and selector 320 of the selection in order to initiate data transfer for that connection and copies the address of the Bluetooth device serviced by the event to register 704 (block 718). If, however, more than one of the in-service bits in diamond 714 are 1, block 702 either randomly selects one of the events whose in-service bit is a 1 or selects an event according to a preset order (block 720). If the in-service bit of only one of the events is a 1, block 702 would select such event for servicing in the next time slot.

While the invention has been described above by reference to various embodiments, it will be understood that changes and modifications may be made without departing from the scope of the invention, which is to be defined only by the appended claims and their equivalents. For example, the above-described dual pointer control scheme and packet generator may be applicable to communication devices that do not use the Bluetooth protocol, such as in the IEEE standard 802.11 wireless LAN medium access control (MAC) and physical layer (PAY) specifications.

While the invention is described above using the packet composer 62a, decomposer 62b and assembly/segment block 204 as shown and illustrated in reference to Fig. 26 above, it will be understood that other implementations are possible and are within the scope of the invention. For example, the relevant circuits in block 204 used in forming packets, such as registers B0-B3, bus 372, 390, 392 and block 380, may be incorporated in the composer 62a. Similarly, another set of registers B0-B3 and bus 372 and 370 may be incorporated in the composer 62b. These additional circuits would then replaced block 204 of Fig. 26. The modified circuit would then operate in substantially the same manner as described above. All references referred to herein are incorporated by reference in their entireties.

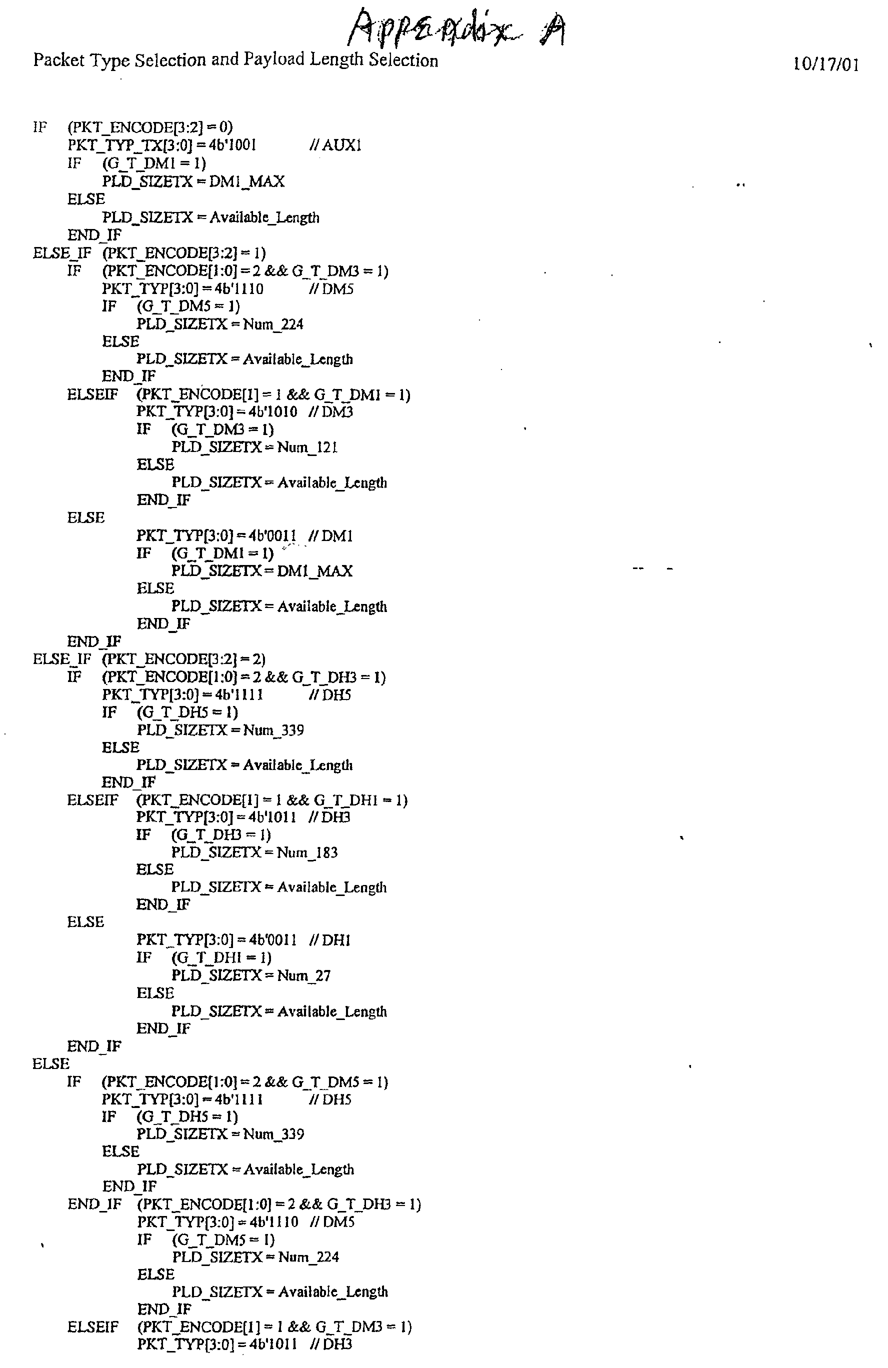

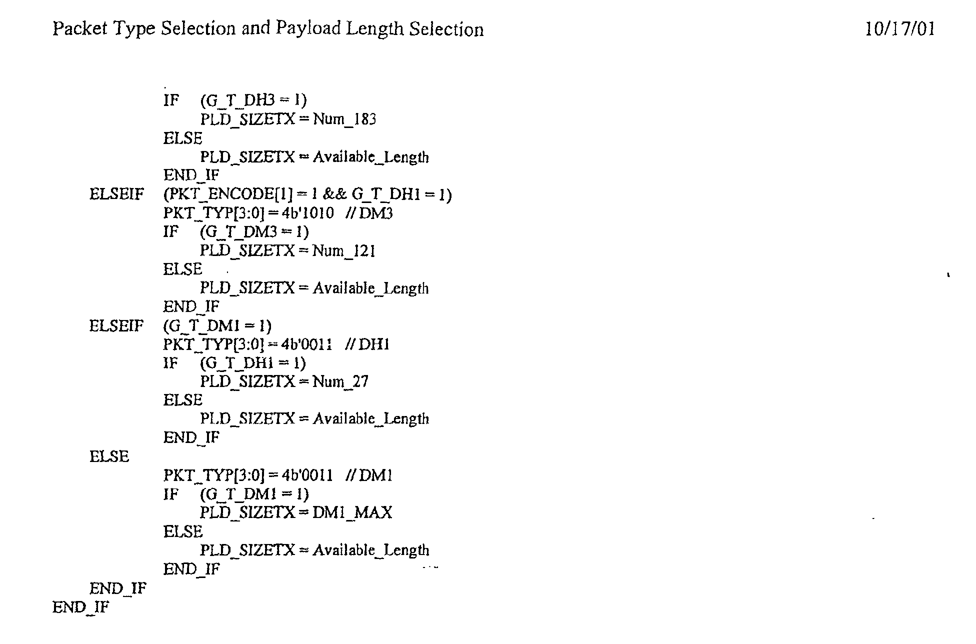

## Claims

1. A Bluetooth controller receiving Bluetooth data packets according to predetermined receive time slots of a Bluetooth protocol, comprising:
a first data storage;
a hardware circuit that stores data from a plurality of Bluetooth data packets received into the storage according to the predetermined receive time slots; and
a processor performing tasks related to the receipt of Bluetooth data packets;
said circuit handling the storing of data in a timely manner according to the predetermined receive time slots without requiring the processor to perform operations at time critical points in relation to the predetermined receive time slots.

2. The controller of claim 1, wherein the circuit stores data in the data storage using an indicator that indicates a location in the storage where the data from the Bluetooth data packets is to be stored.

3. The controller of claim 2, wherein said controller also transmits Bluetooth data packets according to predetermined transmission time slots of a Bluetooth protocol, wherein the circuit also retrieves data from a second data storage using at least one pointer of a format in the second data storage for a next Bluetooth data packet to be transmitted.

4. The controller of claim 3, said format comprising a next start pointer to indicate a location in the second storage from which data for the next Bluetooth data packet to be transmitted is to be retrieved, and a previous pointer indicating a location in the second storage from which data for a previous Bluetooth data packet transmitted has been retrieved.

5. The controller of claim 4, wherein after retrieval of data located between the previous and start pointers for a Bluetooth data packet to be transmitted, the circuit causes the previous start pointer to be set to a value equal to that of the next start pointer and the next start pointer set to a new value for a next Bluetooth data packet to be transmitted.

6. The controller of claim 5, wherein the circuit detects a condition where a prior Bluetooth data packet transmission by the controller is unsuccessful, and the circuit causes the data to be retrieved from a location in the second storage indicated by a previous start pointer so that data that has not been successfully transmitted is re-transmitted.

7. The controller of claim 6, wherein when the condition is detected, the circuit causes the next starting pointer to be re-set to the value of the previous starting pointer.

8. The controller of claim 3, wherein the circuit comprises a composer that constructs a Bluetooth data packet to be transmitted by combining data retrieved from the second storage with information related to packet type, packet data length, acknowledgement of receipt of successful past transmissions or lack thereof and whether the packet has been transmitted before.

9. The controller of claim 3, wherein the circuit extracts and stores data from the Bluetooth data packets received into the first storage and retrieves data from the second storage and forms Bluetooth data packets to be transmitted without using any additional storage.

10. The controller of claim 2, wherein said indicator comprises a length field value.

11. The controller of claim 1, wherein the first and/or second storage forms a portion of a host memory.

12. The controller of claim 1, wherein the circuit comprises a hardware decomposer that extracts information from the Bluetooth data packets received related to packet type, packet data length, acknowledgement of receipt of successful past transmissions or lack thereof and whether the packet has been transmitted before.

13. The controller of claim 1, wherein the processor is an 8-bit processor operating at a frequency not more than about 8 MHz.

14. The controller of claim 1, said first storage being a HCI buffer or L2CAP buffer.

15. The controller of claim 1, said first storage having capacity to store data for more than one Bluetooth data packet.

16. A Bluetooth controller transmitting Bluetooth data packets according to predetermined transmission time slots of a Bluetooth protocol, comprising:
a data storage;
a hardware circuit that sequentially retrieves data from the data storage for a plurality of Bluetooth data packets to be transmitted sequentially according to the predetermined transmission time slots; and
a processor performing tasks related to the transmission of Bluetooth data packets;
said circuit handling the sequential retrieval of data in a timely manner according to the predetermined transmission time slots without requiring the processor to perform operations at time critical points in relation to the predetermined transmission time slots.

17. The controller of claim 16, wherein the data is retrieved in the data storage using a format that includes at least one pointer that points to a location in the storage where the data for a Bluetooth data packet to be transmitted is to be retrieved.

18. The controller of claim 17, said format comprising a next start pointer to indicate a location in the storage from which data for a next Bluetooth data packet to be transmitted is to be retrieved, and a previous pointer indicating a location in the storage from which data for a previous Bluetooth data packet has been retrieved.

19. The controller of claim 18, wherein after retrieval of data between the previous and start pointers for a Bluetooth data packet, the circuit causes the previous start pointer to be set to a value equal to that of the next start pointer and the next start pointer to be set to a new value for a next Bluetooth data packet to be transmitted.

20. The controller of claim 16, wherein the circuit comprises a composer that constructs an Bluetooth data packet by combining data retrieved from the storage with information related to packet type, packet data length, acknowledgement of receipt of successful past transmissions or lack thereof and whether the packet has been transmitted before.

21. The controller of claim 16, wherein the circuit retrieves data from the storage and forms Bluetooth data packets to be transmitted without using any additional storage.

22. The controller of claim 16, wherein the processor is an 8-bit processor operating at a frequency not more than about 8 MHz.

23. The controller of claim 16, said storage being a HCI ACL buffer or L2CAP buffer.

24. The controller of claim 16, said storage having capacity to store data for more than one Bluetooth data packet.

25. The controller of claim 16, wherein the storage forms a portion of a host memory.

26. A bluetooth controller transmitting FHS packet(s) according to predetermined transmission time slots of a Bluetooth protocol, comprising:
a native clock;
a packet composer that forms a FHS packet with clock information from the native clock, said composer being a hardware circuit; and
a processor;
said composer forming said formed FHS packet with said clock information in a timely manner according to the predetermined transmission time slots without requiring the processor to perform operations at time critical points in relation to the predetermined transmission time slots.

27. The controller of claim 26, wherein said composer comprises a multiplexer receiving information concerning address information of a Bluetooth device to which the FHS packet is to be sent, said composer forming the FHS packet so that it includes such information.

28. The controller of claim 27, wherein said composer further comprises a state machine controlling said multiplexer to form said FHS packet.

29. The controller of claim 26 wherein said composer comprises a multiplexer receiving information concerning information concerning whether such FHS packet has been sent before, said composer forming the FHS packet so that it includes such information.

30. The controller of claim 26, wherein said composer comprises a multiplexer receiving information concerning information concerning whether a FHS packet has been correctly received or not by the controller, said composer forming the FHS packet so that it includes such information.

31. The controller of claim 26, wherein said composer inserts into said FHS packet a time value from the native clock when forming said FHS packet substantially within a transmission time slot that contains such time value without requiring the processor to perform operation(s) at time critical point(s) in relation to such transmission time slot.

32. A bluetooth controller receiving FHS packet(s) according to predetermined receive time slots of a Bluetooth protocol, comprising:
a native clock;
a packet decomposer that extracts from a FHS packet received from another Bluetooth device clock information from such device, and that derives a clock offset between a clock of such device and the native clock, said decomposer being a hardware circuit; and
a processor;
said decomposer extracting clock information from said received FHS packet and deriving said clock offset in a timely manner according to the predetermined receive time slots without requiring the processor to perform operations at time critical points in relation to the receive time slots.

33. The controller of claim 32, wherein said decomposer comprises a plurality of latches receiving information concerning packet type information, information concerning whether such received FHS packet has been sent before and/or whether a FHS packet has been correctly received or not by the controller, address information of a Bluetooth device from which the FHS packet is received, said decomposer comprising a loading signal generator circuit generating loading signals causing the packet type, address and clock information to be stored into predetermined latches.

34. The controller of claim 33, wherein said generator circuit comprises a state machine.

35. The controller of claim 32, wherein said decomposer extracts a time value from the received FHS packet and calculates a clock offset between such value and a value of the native clock substantially within a receive time slot that contains such value of the native clock without requiring the processor to perform operation(s) at time critical point(s) in relation to the receive time slot.

36. A Bluetooth controller receiving Bluetooth ACL data packets according to predetermined receive time slots of a Bluetooth protocol, comprising:
a plurality of buffers for storing data from the received Bluetooth ACL data packets; and
a hardware circuit that stores data from the Bluetooth ACL data packets received into one of the buffers according to the predetermined receive time slots; and
wherein at least one of said buffers is assigned to a pool for use exclusively by the circuit for time period(s), each of said buffers in the pool containing information concerning an expiration time marking an end point of a time period during which the circuit is granted permission to use such buffer exclusively.

37. The controller of claim 36, wherein the circuit causes one of said plurality of buffers that it is granted exclusive use to be released from the pool when such buffer is full.

38. The controller of claim 36, wherein the circuit causes one of said plurality of buffers that it is granted exclusive use to be released from the pool when the controller receives a L2CAP packet.

39. The controller of claim 36, further comprising a native clock, and a device that computes said expiration time from clock information from the native clock and a predetermined expiration time out period.

40. The controller of claim 39, wherein said circuit obtains exclusive use of a buffer in the pool, and said device causes said expiration time to be stored in such buffer.

41. The controller of claim 36, further comprising a device that scans the expiration time of each buffer in the pool and causes each of the buffers in the pool whose expiration time has been reached to be released from the pool.

42. The controller of claim 41, further comprising a watch dog timer that causes said device to scan the buffer(s) in the pool periodically.

43. A Bluetooth controller controlling transfer of Bluetooth ACL data packets according to predetermined time slots of a Bluetooth protocol between it and one or more Bluetooth devices, comprising:
a plurality of buffers for storing data related to the transfer of Bluetooth ACL data packets;
a hardware circuit that accesses the buffers for the transfer of Bluetooth ACL data packets according to the predetermined time slots;
a processor performing tasks related to the transfer of Bluetooth ACL data packets; and
an arbitration device that enables the processor or the circuit, but not both simultaneously, to have sole control of at least one of said plurality of buffers.

44. The controller of claim 43, wherein the controller transfers Bluetooth ACL data packets between it and a plurality of Bluetooth devices, wherein said plurality of buffers are controlled by the processor, the circuit and the device so that any one of said plurality of buffers is usable for supporting transfer of Bluetooth ACL data packets between said controller and said plurality of Bluetooth devices.

45. The controller of claim 44, wherein up to two buffers are controlled by the circuit to support transfer of Bluetooth ACL data packets between said controller and one of said plurality of Bluetooth devices.

46. The controller of claim 45, wherein the device comprises two digital bits of a register for arbitrating between the processor and the circuit for control of each of the up to two buffers in supporting transfer of Bluetooth ACL data packets between said controller and one of said plurality of Bluetooth devices.

47. The controller of claim 46, wherein when a first of the two bits defining a done bit is of a first value, the processor has sole control of a corresponding buffer and is permitted to assign the corresponding buffer to be under sole control of the circuit, and when said done bit is of a second value, the circuit has sole control of a corresponding buffer.

48. The controller of claim 47, wherein when a first of the two bits defining a done bit is of a first value, the processor is permitted to assign the corresponding buffer to be under sole control of the circuit for supporting transfer of Bluetooth ACL data packets between said controller and one of said plurality of Bluetooth devices.

49. The controller of claim 47, wherein the processor checks value of a done bit corresponding to each of a first and a second buffer used in supporting transfer of Bluetooth ACL data packets between said controller and one of said plurality of Bluetooth devices before assigning said two buffers for use by the circuit.

50. The controller of claim 49, wherein when the done bits of two corresponding buffers are both of the first value, the processor checks the second bits of the device corresponding to the two buffers to determine which of the corresponding buffers is to be assigned for use by the circuit.

51. The controller of claim 50, wherein when the second bits are of the same value, the processor assigns the first of the two buffers for use by the circuit, and when the second bits are of different values, the processor assigns the second of the two buffers for use by the circuit.

52. The controller of claim 49, wherein when only one of the done bits of two corresponding buffers is of the second value, the processor assigns the buffer corresponding to the done bit of the second value for use by the circuit.

53. The controller of claim 47, wherein the circuit changes the value of said done bit corresponding to a buffer assigned to it by the processor from the second to the first value when the circuit releases such buffer back to processor control.

54. The controller of claim 53, wherein the circuit changes the value of said second bit corresponding to a buffer assigned to it by the processor from the second to the first value when the circuit releases such buffer back to processor control.

55. The controller of claim 47, wherein the processor causes the done bits of two corresponding buffers to be set to the first value, and the second bits of two corresponding buffers to be set to equal values upon start of transmission of Bluetooth ACL data packets to at least one Bluetooth device.

56. The controller of claim 47, wherein the processor causes the done bits of two corresponding buffers to be set to the second value, and the second bits of two corresponding buffers to be set to equal values upon start of receipt of Bluetooth ACL data packets from at least one Bluetooth device.

57. A Bluetooth controller transferring Bluetooth data packets according to predetermined time slots of a Bluetooth protocol between the controller and up to seven Bluetooth devices, comprising:
one or more first indicators for each of the up to seven Bluetooth devices, indicating whether there is data that is to be transferred between the controller and such Bluetooth device; and
a hardware circuit that checks, during each of the predetermined time slots defining a current time slot, the first indicator(s) to determine whether there is data that is to be transferred between the controller and any of the up to seven Bluetooth devices, wherein during a time slot subsequent to the current time slot, the circuit causes data to be transferred between the controller and one of the up to seven Bluetooth devices that is determined by the circuit that there is data transfer during the current time slot between the controller and such Bluetooth device.

58. The controller of claim 57, further comprising a processor performing tasks related to the transfer of Bluetooth data packets, wherein said circuit causes data to be transferred between the controller and one of the up to seven Bluetooth devices that is determined by the circuit for which there is data to be transferred during the current time slot between the controller and such Bluetooth device, without requiring the processor to perform operations at time critical points in relation to the current time slot or the time slot subsequent thereto.

59. The controller of claim 57, further comprising a memory storing an address of one of the up to seven Bluetooth devices that is determined by the circuit that there is data transfer during the current time slot between the controller and such Bluetooth device, wherein the circuit causes to be stored in the memory the address of such one Bluetooth device.

60. The controller of claim 59, wherein when an address of a Bluetooth device is stored in the memory, the circuit causes data to be transferred between the controller and the Bluetooth device during a subsequent time slot.

61. The controller of claim 60, wherein when the memory has no valid address of any Bluetooth device therein and the first indicator(s) indicate(s) that there is data to be transferred between the controller and a plurality of Bluetooth devices, the circuit selects one of the plurality of Bluetooth devices and causes data to be transferred between the controller and the selected Bluetooth device.

62. The controller of claim 61, wherein the circuit selects one of the plurality of Bluetooth devices according to a preset order.

63. The controller of claim 61, wherein the circuit causes an address of the selected Bluetooth device to be written into the memory.

64. The controller of claim 57, wherein when the first indicator(s) indicate(s) that there is data to be transferred between the controller and a plurality of Bluetooth devices, the circuit selects one of the plurality of Bluetooth devices and causes data to be transferred between the controller and the selected Bluetooth device.

65. The controller of claim 64, wherein the circuit selects one of the plurality of Bluetooth devices according to a preset order.

66. The controller of claim 57, wherein the circuit scans the first indicator(s) indicate(s) to determine whether there is data to be transferred between the controller and a plurality of corresponding Bluetooth devices.

67. The controller of claim 57, wherein when the circuit determines that data transfer between the controller and one of the up to seven Bluetooth devices has been completed, it causes a corresponding one of the first indicator(s) to be altered to so indicate.

68. The controller of claim 57, wherein when the first indicator(s) indicate that there is data to be transferred between the controller and more than one of the up to seven Bluetooth devices, the circuit selects at random one of such more than one Bluetooth devices for transfer of data between such device and the controller.

69. A method for controlling the storage of data in Bluetooth data packets received according to predetermined receive time slots of a Bluetooth protocol, comprising:
providing a first data storage;
providing a hardware circuit that stores data from a plurality of Bluetooth data packets received into the storage according to the predetermined receive time slots; and
using a processor to perform tasks related to the receipt of Bluetooth data packets;
causing said circuit to handle the storing of data in a timely manner according to the predetermined receive time slots without requiring the processor to perform operations at time critical points in relation to the predetermined receive time slots.

70. A method for controlling the retrieval of data for Bluetooth data packets to be transmitted according to predetermined transmission time slots of a Bluetooth protocol, comprising:
providing a data storage;
providing a hardware circuit that sequentially retrieves data from the data storage for a plurality of Bluetooth data packets to be transmitted sequentially according to the predetermined transmission time slots; and
causing a processor to perform tasks related to the transmission of Bluetooth data packets;
causing said circuit to sequentially retrieve data in a timely manner according to the predetermined transmission time slots without requiring the processor to perform operations at time critical points in relation to the predetermined transmission time slots.

71. A method for controlling the formation of FHS packet(s) according to predetermined transmission time slots of a Bluetooth protocol, comprising:
providing a native clock; and
forming a FHS packet with clock information from the native clock using a hardware circuit; and
wherein said FHS packet with said clock information is formed in a timely manner according to the predetermined transmission time slots without requiring any processor to perform operations at time critical points in relation to the predetermined transmission time slots.

72. A method for obtaining clock offset information from FHS packet(s) received from another Bluetooth device according to predetermined receive time slots of a Bluetooth protocol, comprising:
providing a native clock; and
extracting clock information from a received FHS packet and deriving said clock offset in a timely manner according to the predetermined receive time slots without requiring any processor to perform operations at time critical points in relation to the receive time slots.

73. A method for controlling the expiration of a time period during which a buffer is exclusively controlled to support receipt of Bluetooth ACL data packets from a Bluetooth device according to predetermined receive time slots of a Bluetooth protocol, comprising:
providing a plurality of buffers for storing data from the received Bluetooth ACL data packets;
using a hardware circuit to store data from the Bluetooth ACL data packets received into one of the buffers according to the predetermined receive time slots; and
assigning at least one of said buffers to a pool for use exclusively by the circuit for time period(s), and identifying each of said buffers in the pool with an expiration time marking an end point of a time period during which the circuit is granted permission to use such buffer exclusively.

74. A method for controlling transfer of Bluetooth ACL data packets according to predetermined time slots of a Bluetooth protocol between it and one or more Bluetooth devices, comprising:
providing a plurality of buffers for storing data related to the transfer of Bluetooth ACL data packets;
using a hardware circuit to access the buffers for the transfer of Bluetooth ACL data packets according to the predetermined time slots;
providing a processor performing tasks related to the transfer of Bluetooth ACL data packets; and
arbitrating between the processor and the circuit so that the processor or the circuit, but not both simultaneously, has sole control of at least one of said plurality of buffers.

75. A method for transferring Bluetooth data packets according to predetermined time slots of a Bluetooth protocol between the controller and up to seven Bluetooth devices, comprising:
providing one or more first indicators for each of the up to seven Bluetooth devices, indicating whether there is data that is to be transferred between the controller and such Bluetooth device; and
checking, during each of the predetermined time slots defining a current time slot, the first indicator(s) to determine whether there is data that is to be transferred between the controller and any of the up to seven Bluetooth devices, wherein during a time slot subsequent to the current time slot; and
causing data to be transferred between the controller and one of the up to seven Bluetooth devices that is determined to have data transfer during the current time slot between the controller and such Bluetooth device.

76. An Bluetooth device transferring Bluetooth data packets according to predetermined time slots of a Bluetooth protocol, comprising:
at least one buffer storing HCI level ACL/SCO or L2CAP data packets; and
a hardware circuit that stores data from a plurality of Bluetooth data packets received into, or retrieves data for a plurality of Bluetooth data packets to be transmitted from, the at least one buffer according to the predetermined time slots; and
a processor performing tasks related to the transfer of Bluetooth data packets;
said circuit handling the storing or retrieval of data in a timely manner according to the predetermined time slots without requiring the processor to perform operations at time critical points in relation to the predetermined time slots.

77. The device of claim 76, wherein the circuit segments and retrieves data from the at least one buffer and converts segments of data retrieved from the at least one buffer from HCI level ACL/SCO or L2CAP data packet format to Bluetooth data packet format.

78. The device of claim 77, wherein the circuit retrieves data from the at least one buffer and assembles data from a plurality of Bluetooth data packets into a HCI level ACL/SCO or L2CAP data packet, or segments a HCI level ACL/SCO or L2CAP data packet and stores the segmented data into the at least one buffer .

79. The device of claim 78, wherein the circuit stores or retrieves data without employing any other storage.

80. An Bluetooth device, transferring Bluetooth data packets according to predetermined time slots of a Bluetooth protocol, comprising:
a HCI;
at least one buffer storing HCI level ACL/SCO or L2CAP data packets; and
a hardware circuit that stores data from a plurality of Bluetooth data packets received into, or retrieves data for a plurality of Bluetooth data packets to be transmitted from, the at least one buffer according to the predetermined time slots;
a processor performing tasks related to the transfer of Bluetooth data packets;
said circuit handling the storing or retrieval of data in a timely manner according to the predetermined time slots without requiring the processor to perform operations at time critical points in relation to the predetermined time slots; and
a memory controller controlling access to the buffer by the generator and the HCI.

81. The device of claim 80, said device further comprising a host driver, said controller controlling access to the buffer by the circuit and the host driver.

82. An Bluetooth device, transferring Bluetooth data packets according to predetermined time slots of a Bluetooth protocol, comprising:
a host driver;
at least one buffer storing HCI level ACL/SCO or L2CAP data packets;
a hardware circuit that stores data from a plurality of Bluetooth data packets received into, or retrieves data for a plurality of Bluetooth data packets to be transmitted from, the at least one buffer according to the predetermined time slots;
a processor performing tasks related to the transfer of Bluetooth data packets;
said circuit handling the storing or retrieval of data in a timely manner according to the predetermined time slots without requiring the processor to perform operations at time critical points in relation to the predetermined time slots; and
a memory controller controlling access to the buffer by the generator and the HCI.
